# EUROPEAN PATENT APPLICATION

(11) **EP 4 848 631 A1**
(43) Date of publication of application: **02.12.2026**
(21) Application number: 25751607.0
(22) Date of filing: 06.02.2025
(51) Int. Cl.: H04L 1/00

(54) **ENCODING METHOD, DECODING METHOD, AND COMMUNICATION APPARATUS**

(30) Priority: 08.02.2024 CN 202410178166
(71) Applicant: Huawei Technologies Co., Ltd., Shenzhen, Guangdong 518129 (CN)
(72) Inventor: DONG, Pengpeng, Shenzhen, Guangdong 518129 (CN)
(74) Representative: Huawei European IPR
(86) International application number: PCT/CN2025/076056
(87) International publication number: WO 2025/168008

(57) **Abstract**

An encoding method, a decoding method, and a related apparatus are provided. In the method, an encoding side may process a plurality of bits to obtain a first to-be-encoded input having a first pattern, where the first to-be-encoded input is arranged across one or more dimensions at a granularity of an encoding unit, each encoding unit includes one or more of the plurality of bits, and a quantity of encoding units is less than a quantity of the plurality of bits; and performs encoding like component encoding on one or more encoding units in the first to-be-encoded input to obtain a second bit sequence. A quantity of bits included in the encoding unit may be flexibly adjusted, so that a limited quantity of patterns can adapt to a plurality of different data transmission amounts. In addition, the plurality of encoding units in the first to-be-encoded input may be distributed across the one or more dimensions, providing a basis for component encoding, so that a product parallelism is easily implemented, and a peak throughput and area efficiency are improved.

## Description

This application claims priority to Chinese Patent Application No. 202410178166.6, filed with the China National Intellectual Property Administration on February 8, 2024 and entitled "ENCODING METHOD, DECODING METHOD, AND COMMUNICATION APPARATUS", which is incorporated herein by reference in its entirety.

### TECHNICAL FIELD

This application relates to the field of wireless communication, and in particular, to an encoding method, a decoding method, and a communication apparatus.

### BACKGROUND

Channel coding is an important technology in the field of wireless communication. Currently, encoding types commonly used for channel coding in wireless communication systems include low-density parity-check code (low-density parity-check code, LDPC) and polar code (polar code, Polar).

With the development of emerging services, higher requirements are placed on channel coding. For example, real-time high-rate services, such as mixed reality (mixed reality, MR), extended reality (extended reality, XR), and immersive services, raise higher requirements on a peak throughput of the channel coding, and the LDPC and the Polar can no longer satisfy the requirements.

Compared with the LDPC and the Polar, two-dimensional product code may be used for component encoding and offers a higher processing parallelism degree. This helps increase the throughput. Because component encoding needs to be performed, to-be-encoded information bits need to be first arranged into a two-dimensional matrix, and different rows and/or columns in the two-dimensional matrix are encoded. Therefore, a quantity of rows and a quantity of columns of the two-dimensional matrix need to be predefined, so that an encoding side and a decoding side perform processing based on the same quantity of rows and the same quantity of columns.

However, in wireless communication, a data transmission amount is not fixed. If channel coding is performed by using two-dimensional product code, a predefined two-dimensional matrix may not adapt to a plurality of different transmission amounts, and therefore flexibility is poor.

### SUMMARY

This application provides an encoding method, a decoding method, and a communication apparatus, to flexibly adapt to a plurality of different data transmission amounts.

According to a first aspect, an encoding method is provided. The method may be applied to a first communication apparatus. The first communication apparatus may be a communication device (for example, a terminal device or a network device), or may be a part (for example, a baseband chip, a chip system, or a processor) used in the communication device, or may be a logical module, software, or the like that can implement all or some functions of the communication device. This is not limited in this application.

For example, the method includes: obtaining a first bit sequence, where the first bit sequence includes a plurality of bits; processing the plurality of bits to obtain a first to-be-encoded input having a first pattern, where the first to-be-encoded input includes a plurality of encoding units distributed across one or more dimensions, each of the plurality of encoding units includes one or more of the plurality of bits, and the first pattern indicates distribution of the plurality of encoding units across the one or more dimensions; and encoding one or more encoding units in the first to-be-encoded input to obtain a second bit sequence.

The first to-be-encoded input may be understood as to-be-encoded data, to-be-encoded bits, to-be-encoded information bits, to-be-encoded input data, to-be-encoded input bits, or the like. In this application, the first to-be-encoded input has the first pattern. In other words, the plurality of encoding units in the first to-be-encoded input are arranged in the first pattern. The encoding unit may be understood as a minimum granularity of the first to-be-encoded input arranged in the first pattern, and may also be referred to as a unit, an element (element), an encoding element, a lifting size, or the like. This is not limited in this application.

Each encoding unit may include one or more bits in the first bit sequence. In other words, a quantity of bits included in each encoding unit is not fixed, and may be flexibly adjusted to adapt to different data transmission amounts.

The first pattern indicates the distribution of the plurality of encoding units across the one or more dimensions, that is, the first to-be-encoded input is distributed across the one or more dimensions. The pattern may also be referred to as a basic graph (basic graph), a basic pattern, a basic model, or the like. This is not limited in this application.

According to the foregoing technical solution, the first communication apparatus may arrange the plurality of bits at the granularity of the encoding unit, to obtain the first to-be-encoded input having the first pattern. The quantity of bits included in the encoding unit is not fixed, and may be flexibly adjusted. Therefore, a limited quantity of patterns may adapt to a plurality of different data transmission amounts, and the quantity of bits in the encoding unit may be flexibly adjusted based on the data transmission amounts. Moreover, the first pattern may be used to restrict the distribution of the plurality of encoding units in the first to-be-encoded input across the one or more dimensions, that is, encoding may be performed by using or not using component encoding based on a requirement. In addition, when component encoding is used, the first communication apparatus may encode a plurality of groups of input bits in a same encoding direction in parallel, that is, a product parallelism is easily implemented, so that processing efficiency can be improved. This helps improve a peak throughput and area efficiency. Moreover, in a component encoding process, encoding may be performed in a plurality of different encoding directions, so that a same encoding unit may participate in more times of encoding. Therefore, decoding performance can be improved. In addition, because the bits are arranged into the encoding units, and are arranged at the granularity of the encoding unit, and component encoding is performed on the to-be-encoded input obtained through arrangement, so that larger coding gains may be further brought.

With reference to the first aspect, in some possible implementations of the first aspect, the processing the plurality of bits to obtain the first to-be-encoded input having the first pattern includes: arranging the plurality of bits according to an arrangement rule, to obtain the plurality of encoding units; and processing the plurality of encoding units to obtain the first to-be-encoded input having the first pattern.

That is, the first communication apparatus may arrange the plurality of bits of the first bit sequence to obtain the plurality of encoding units, and process the plurality of encoding units to obtain the first to-be-encoded input.

A specific implementation in which the first communication apparatus obtains the first to-be-encoded input is not limited thereto. In another implementation, the first communication apparatus may alternatively arrange the plurality of bits of the first bit sequence, and each time obtaining one encoding unit, map the encoding unit to a corresponding position in the first pattern. That is, while the encoding units are constructed, each encoding unit is mapped to the first pattern.

With reference to the first aspect, in some possible implementations of the first aspect, each encoding unit is a one-dimensional vector or a two-dimensional matrix, and the plurality of encoding units include at least one one-dimensional vector and/or at least one two-dimensional matrix.

In other words, the bits in each encoding unit may be arranged in a form of a one-dimensional vector or a two-dimensional matrix, and different encoding units may have different forms. Therefore, the plurality of encoding units may include the at least one one-dimensional vector and/or the at least one two-dimensional matrix.

It may be understood that, if the plurality of encoding units are defined as encoding units in a same pattern (or structure), the plurality of encoding units are a plurality of one-dimensional vectors or a plurality of two-dimensional matrices. The encoding units in the same pattern mean that different encoding units have a same dimension, the different encoding units include a same quantity of bits in each dimension, and the different encoding units also have a same bit arrangement order.

With reference to the first aspect, in some possible implementations of the first aspect, the arrangement rule indicates a dimension of each encoding unit, a quantity of bits included in the encoding unit in each dimension, and an arrangement manner of one or more bits included in the encoding unit.

In other words, the arrangement rule may indicate a pattern of each encoding unit. According to the arrangement rule, the first communication apparatus may determine how to arrange the plurality of bits of the first bit sequence.

One or more items in the arrangement rule may be predefined in a protocol, or may be determined by the first communication apparatus, or may be indicated by a second communication apparatus through signaling. In other words, the arrangement rule may be predefined in the protocol, or may be determined by the first communication apparatus, or may be indicated by the second communication apparatus; or a part of the items in the arrangement rule may be predefined in the protocol and the other part may be determined by the first communication apparatus and/or the second communication apparatus; or the like. This is not limited.

With reference to the first aspect, in some possible implementations of the first aspect, the method further includes: sending or receiving first information, where the first information indicates one or more of the following: the dimension of each encoding unit, the quantity of bits included in the encoding unit in each dimension, or the arrangement manner of the one or more bits included in the encoding unit.

That is, the first communication apparatus or the second communication apparatus indicates one or more items in the arrangement rule through the first information.

With reference to the first aspect, in some possible implementations of the first aspect, different encoding units in the plurality of encoding units include a same quantity of bits.

A quantity of bits included in an encoding unit may also be referred to as a size of the encoding unit. Different encoding units including a same quantity of bits may also be referred to as different encoding units having a same size.

That is, sizes of the plurality of encoding units in the first to-be-encoded input are the same. The first communication apparatus does not need to define different operation instructions for encoding units of different sizes, and product implementation is more friendly. In addition, encoding units of different sizes do not need to be defined in the protocol either. Therefore, the protocol definition is simpler.

With reference to the first aspect, in some possible implementations of the first aspect, at least two of the plurality of encoding units include different quantities of bits.

That is, different encoding units may include different quantities of bits, or sizes of different encoding units may be different. The first communication apparatus may flexibly configure quantities of bits in different encoding units based on different data transmission amounts and different service requirements, so that a code rate can be controlled more accurately, and decoding performance can be improved.

With reference to the first aspect, in some possible implementations of the first aspect, the encoding the one or more encoding units in the first to-be-encoded input to obtain the second bit sequence includes: performing component encoding on the one or more encoding units in the first to-be-encoded input to obtain the second bit sequence.

Component encoding means that a plurality of to-be-encoded bits are decomposed into to-be-encoded bits across one or more dimensions at a granularity of an encoding unit, and are respectively encoded in one or more directions. Performing encoding separately in the one or more directions means that an encoding unit in each direction is used as a bit that participates in encoding, and is input into an encoder for encoding. In other words, each time of encoding is performed on a bit in an encoding unit in a same direction.

Through component encoding, one encoding unit can participate in more times of encoding, thereby improving decoding performance. In addition, because the first to-be-encoded input has one or more dimensions, the encoder may encode a plurality of groups of bit inputs in a same encoding direction in parallel. Therefore, the product parallelism is easily implemented, and the processing efficiency can be improved. This helps improve the peak throughput and the area efficiency.

With reference to the first aspect, in some possible implementations of the first aspect, the first pattern indicates the distribution of the plurality of encoding units across the plurality of dimensions, and the performing component encoding on the one or more encoding units in the first to-be-encoded input includes: obtaining a plurality of groups of input bits from the one or more encoding units in the first to-be-encoded input based on one or more encoding directions, where the one or more encoding directions include one or more of the following plurality of directions: a horizontal direction in a two-dimensional plane determined based on any two of the plurality of dimensions, a vertical direction in the two-dimensional plane determined based on the any two of the plurality of dimensions, or a diagonal direction in the two-dimensional plane determined based on the any two of the plurality of dimensions; and encoding each of the plurality of groups of input bits.

A direction in which one or more encoding units participating in same encoding are located may be referred to as an encoding direction. The encoding direction may be a direction that is the same as a dimension in which the plurality of encoding units are distributed, or may be another direction. This is not limited in this application.

With reference to the first aspect, in some possible implementations of the first aspect, in the plurality of groups of input bits, encoding types used for encoding different groups of input bits in a same encoding direction are the same.

Encoding the plurality of groups of input bits by using a same encoding type is suitable for parallel processing. Because a plurality of encoding types for parallel processing are the same during product implementation, parallel instructions having a higher parallelism degree may be used for implementation, so that the processing efficiency is higher.

Further, encoding parameters used for different groups of input bits in a same encoding direction are the same; or encoding parameters used for different groups of input bits in a same encoding direction are different.

The first communication apparatus may select, based on a service requirement, a same encoding parameter or different encoding parameters for encoding.

On a basis of a same encoding type, using a same encoding parameter can reduce implementation complexity and further improve the processing efficiency, and using different encoding parameters can achieve better decoding performance.

With reference to the first aspect, in some possible implementations of the first aspect, in the plurality of groups of input bits, encoding types used for encoding at least two groups of input bits in a same encoding direction are different.

Different groups of input bits are encoded by using different encoding types, so that a total code rate can be controlled more flexibly and accurately, thereby improving the decoding performance.

With reference to the first aspect, in some possible implementations of the first aspect, encoding types used for encoding the plurality of groups of input bits are the same.

In other words, all input bits may be encoded by using a same encoding type without distinguishing between encoding directions. Encoding the plurality of groups of input bits by using a same encoding type is suitable for parallel processing. Because a plurality of encoding types for parallel processing are the same during product implementation, parallel instructions having a higher parallelism degree may be used for implementation, so that encoding and decoding efficiency is higher.

With reference to the first aspect, in some possible implementations of the first aspect, encoding types used for encoding at least two of the plurality of groups of input bits are different.

In other words, a plurality of groups of input bits in one or more encoding directions may be encoded by using different encoding types. For example, different groups of input bits in a same encoding direction may be encoded by using different encoding types, or one or more groups of input bits in each encoding direction may be encoded by using one encoding type and input bits in different encoding directions are encoded by using different encoding types. This is not limited in this application.

Different groups of input bits are encoded by using different encoding types, so that the total code rate can be controlled more flexibly and accurately, thereby improving the decoding performance.

With reference to the first aspect, in some possible implementations of the first aspect, the method further includes: sending or receiving second information, where the second information indicates one or more of the following: the one or more encoding directions, an encoding order, an encoding type used for encoding each group of input bits, or a code rate of the group of input bits, and the encoding order indicates an order in which each group of input bits are input into the encoder.

The first communication apparatus and the second communication apparatus communicating with the first communication apparatus may determine one or more of the foregoing items based on the second information. The first communication apparatus or the second communication apparatus may indicate the foregoing parameters through the second information, so that the first communication apparatus and the second communication apparatus perform encoding and decoding according to a same rule. In this way, the second communication apparatus correctly performs decoding, and decoding performance is improved.

The encoding order may indicate an order in which bits in one group of input bits are encoded. Because one group of input bits may be carried in one or more encoding units, it may also be said that the encoding order may be used to control an order in which one or more encoding units used to carry one group of input bits are input into the encoder.

It may be understood that one or more of the foregoing plurality of items may alternatively be predefined in the protocol. For example, the plurality of items may be predefined in the protocol. In this case, the first communication apparatus and the second communication apparatus may not need to indicate the plurality of items through the second information; or a part of the plurality of items may be predefined in the protocol, and the other part may be determined by the first communication apparatus and/or the second communication apparatus. This is not limited in this application.

With reference to the first aspect, in some possible implementations of the first aspect, the first pattern further indicates an encoding position, an encoding unit located at the encoding position in the first to-be-encoded input is a unit to be encoded, and the one or more groups of input bits are determined from the unit to be encoded in the first to-be-encoded input.

In other words, not all encoding units in the first to-be-encoded input may participate in encoding. By indicating the encoding position, a quantity of redundant bits can be more flexibly controlled, that is, the code rate can be more flexibly controlled, thereby improving the decoding performance.

With reference to the first aspect, in some possible implementations of the first aspect, that the first pattern indicates the distribution of the plurality of encoding units across the one or more dimensions includes: the first basic graph indicates a quantity of encoding units distributed in each of the one or more dimensions among the plurality of encoding units.

The first pattern may be, for example, a regular pattern, and the distribution of the plurality of encoding units in each dimension may be determined by indicating the quantity of encoding units, in the plurality of encoding units, that are distributed in each dimension.

Further, that the first pattern indicates the distribution of the plurality of encoding units across the one or more dimensions further includes: the first pattern indicates an empty position in the first pattern.

Alternatively, the first pattern may be an irregular pattern, or the first pattern may include an empty position and no encoding unit may be mapped to the empty position. In this case, the first pattern may further indicate the empty position, and the distribution of the plurality of encoding units in each dimension may be determined with reference to the quantity of encoding units, in the plurality of encoding units, that are distributed in each dimension.

By indicating the empty position, the first pattern may have more possible designs, for example, may be regular or irregular, to adapt to a wider range of code types and satisfy requirements of more different services.

With reference to the first aspect, in some possible implementations of the first aspect, the plurality of encoding units include a first encoding unit and at least one copy of the first encoding unit, and the first encoding unit and the at least one copy are at different positions in the first to-be-encoded input.

A plurality of copies are encoded, so that bits in a same encoding unit can participate in more times of encoding, thereby improving the decoding performance.

With reference to the first aspect, in some possible implementations of the first aspect, the method further includes: arranging the plurality of bits to obtain a second to-be-encoded input having a second pattern, where the second to-be-encoded input includes a plurality of encoding units distributed across one or more dimensions, each of the plurality of encoding units includes one or more of the plurality of bits, and the second pattern indicates distribution of the plurality of encoding units across the one or more dimensions; encoding one or more encoding units in the second to-be-encoded input to obtain a third bit sequence; and obtaining a fourth bit sequence based on the second bit sequence and the third bit sequence.

That is, the first bit sequence is processed to obtain the second to-be-encoded input having the second pattern. The second to-be-encoded input and the first to-be-encoded input may be considered as two signals into which the first bit sequence is divided. The two signals may be processed in the same way or different ways to obtain the second bit sequence and the third bit sequence, and then the two signals are combined. In this way, the decoding performance can be improved by using diversity effects.

Actually, this application is not limited thereto. The first bit sequence may alternatively be divided into more signals, and the signals are combined after multi-processing.

With reference to the first aspect, in some possible implementations of the first aspect, the method further includes: sending or receiving third information, where the third information indicates a used pattern, and the pattern includes the first pattern.

The first communication apparatus and the second communication apparatus may pre-store one pattern, or may pre-store a plurality of patterns. When storing the plurality of patterns, the first communication apparatus and the second communication apparatus may determine a pattern used for current encoding and decoding, so that the second communication apparatus correctly performs decoding. In addition, the plurality of patterns are pre-stored, so that a wider range of code types can be adapted, and more different types of service requirements can be satisfied.

It may be understood that, if the first communication apparatus and the second communication apparatus each pre-store one pattern, the first communication apparatus and the second communication apparatus may not need to indicate, through the third information, a pattern used for current encoding and decoding, thereby reducing signaling overheads.

According to a second aspect, a decoding method is provided. The method may be applied to a second communication apparatus. The second communication apparatus may be a communication device (for example, a terminal device or a network device), or may be a part (for example, a baseband chip, a chip system, or a processor) used in the communication device, or may be a logical module, software, or the like that can implement all or some functions of the communication device. This is not limited in this application.

For example, the method includes: obtaining a second bit sequence, where the second bit sequence includes a plurality of bits; processing the plurality of bits to obtain a first to-be-decoded input having a third pattern, where the first to-be-decoded input includes a plurality of decoding units distributed across one or more dimensions, each of the plurality of decoding units includes one or more of the plurality of bits, and the third pattern indicates distribution of the plurality of decoding units across the one or more dimensions; and decoding one or more decoding units in the first to-be-decoded input to obtain a fifth bit sequence.

The first to-be-decoded input may be understood as to-be-decoded data, to-be-decoded bits, to-be-decoded encoded bits, to-be-decoded input data, to-be-decoded input bits, or the like. In this application, the first to-be-decoded input has the third pattern. In other words, the plurality of decoding units included the first to-be-decoded input are arranged in the third pattern. The decoding unit may be understood as a minimum granularity of the first to-be-decoded input arranged in the third pattern, and may also be referred to as a unit, an element, a decoding element, a lifting size, or the like. This is not limited in this application.

The third pattern in the second aspect corresponds to the first pattern in the first aspect, and the third pattern may indicate the distribution of the plurality of decoding units in the first to-be-decoded input across the one or more dimensions. The second bit sequence that is output by encoding the first to-be-encoded input in the first aspect includes information bits and check bits. Therefore, compared with the first bit sequence, the check bits are added to the second bit sequence. Therefore, the second bit sequence needs to be arranged in the first to-be-decoded input having the third pattern, and the third pattern needs to have a larger dimension than the first pattern, to carry the check bits.

The decoding unit in the second aspect corresponds to the encoding unit in the first aspect. The decoding unit in the first to-be-decoded input and the encoding unit at the same position in the first to-be-encoded input may have a same dimension and include a same quantity of bits, and bits in each decoding unit and bits in the corresponding encoding unit have a same arrangement manner.

The fifth bit sequence in the second aspect corresponds to the first bit sequence in the first aspect. A sequence obtained by decoding the second bit sequence is the fifth bit sequence. Theoretically, if the second communication apparatus can correctly decode the second bit sequence, the fifth bit sequence obtained through decoding is consistent with the first bit sequence. Therefore, the fifth bit sequence is the first bit sequence obtained through decoding, or is a received first bit sequence.

According to the foregoing technical solution, the second communication apparatus may arrange the plurality of bits at a granularity of a decoding unit, to obtain the first to-be-decoded input having the third pattern. A quantity of bits included in the decoding unit is not fixed, and may be flexibly adjusted. Therefore, a limited quantity of patterns may adapt to a plurality of different data transmission amounts, and the quantity of bits in the decoding unit may be flexibly adjusted based on the data transmission amounts. Moreover, the third pattern may be used to restrict the distribution of the plurality of decoding units in the first to-be-decoded input across the one or more dimensions, that is, decoding may be performed by using or not using component decoding based on a requirement. For example, when a first communication apparatus uses component encoding, the second communication apparatus may use component decoding. In addition, when component decoding is used, the second communication apparatus may decode a plurality of groups of input bits in a same decoding direction in parallel, that is, a product parallelism is easily implemented, so that processing efficiency can be improved. This helps improve a peak throughput and area efficiency. Moreover, in a component decoding process, decoding may be performed in a plurality of different decoding directions, that is, a same decoding unit may participate in more times of decoding. This helps correct errors, and decoding performance is better.

In addition, the second aspect further provides a decoding method, including: obtaining a second bit sequence, where the second bit sequence is obtained by encoding one or more encoding units in a first to-be-encoded input having a first pattern, the first to-be-encoded input includes a plurality of encoding units distributed across one or more dimensions, each of the plurality of encoding units includes one or more bits, and the first pattern indicates distribution of the plurality of encoding units across the one or more dimensions; and decoding the second bit sequence to obtain a fifth bit sequence.

With reference to the second aspect, in some possible implementations of the second aspect, the processing the plurality of bits to obtain the first to-be-decoded input having the third pattern includes: arranging the plurality of bits according to an arrangement rule, to obtain the plurality of decoding units; and processing the plurality of decoding units to obtain the first to-be-decoded input having the third pattern.

That is, the second communication apparatus may arrange the plurality of bits of the second bit sequence to obtain the plurality of decoding units, and process the plurality of decoding units to obtain the first to-be-decoded input.

A specific implementation in which the second communication apparatus obtains the first to-be-decoded input is not limited thereto. In another implementation, the second communication apparatus may alternatively arrange the plurality of bits of the second bit sequence, and each time obtaining one decoding unit, map the decoding unit to a corresponding position in the third pattern. That is, while the decoding unit is constructed, each decoding unit is mapped to the third pattern.

With reference to the second aspect, in some possible implementations of the second aspect, each decoding unit is a one-dimensional vector or a two-dimensional matrix, and the plurality of decoding units include at least one one-dimensional vector and/or at least one two-dimensional matrix.

In other words, the bits in each decoding unit may be arranged in a form of a one-dimensional vector or a two-dimensional matrix, and different decoding units may have different forms. Therefore, the plurality of decoding units may include the at least one one-dimensional vector and/or the at least one two-dimensional matrix.

With reference to the second aspect, in some possible implementations of the second aspect, the arrangement rule indicates a dimension of each decoding unit, a quantity of bits included in the decoding unit in each dimension, and an arrangement manner of one or more bits included in the decoding unit.

In other words, the arrangement rule may indicate a pattern of each decoding unit. According to the arrangement rule, the second communication apparatus may determine how to arrange the plurality of bits of the second bit sequence.

Because the decoding unit in the second aspect may correspond to the encoding unit in the first aspect, the arrangement rule in the second aspect may be the same as the arrangement rule in the first aspect.

One or more items in the arrangement rule may be predefined in a protocol, or may be indicated by the first communication apparatus through signaling, or may be determined by the second communication apparatus. In other words, the arrangement rule may be predefined in the protocol, or may be indicated by the first communication apparatus, or may be determined by the second communication apparatus; or a part of the items in the arrangement rule may be predefined in the protocol and the other part may be determined by the first communication apparatus and/or the second communication apparatus; or the like. This is not limited.

With reference to the second aspect, in some possible implementations of the second aspect, the method further includes: receiving or sending first information, where the first information indicates one or more of the following: the dimension of each decoding unit, the quantity of bits included in the decoding unit in each dimension, or the arrangement manner of the one or more bits included in the decoding unit.

That is, the first communication apparatus or the second communication apparatus indicates one or more items in the arrangement rule through the first information.

With reference to the second aspect, in some possible implementations of the second aspect, different decoding units in the plurality of decoding units include a same quantity of bits.

A quantity of bits included in a decoding unit may also be referred to as a size of the decoding unit. Different decoding units including a same quantity of bits may also be referred to as different decoding units having a same size.

That is, sizes of the plurality of decoding units in the first to-be-decoded input are the same. The second communication apparatus does not need to define different operation instructions for decoding units of different sizes, and product implementation is more friendly. In addition, decoding units of different sizes do not need to be defined in the protocol either. Therefore, the protocol definition is simpler.

With reference to the second aspect, in some possible implementations of the second aspect, at least two of the plurality of decoding units include different quantities of bits.

That is, different decoding units may include different quantities of bits, or sizes of different decoding units may be different. A size of each decoding unit in the first to-be-decoded input is the same as a size of an encoding unit at a corresponding position in the first to-be-encoded input, that is, sizes of different encoding units may be different. This helps control a code rate more accurately and improve the decoding performance.

With reference to the second aspect, in some possible implementations of the second aspect, the decoding the first to-be-decoded input to obtain the fifth bit sequence includes: performing component decoding on in the first to-be-decoded input to obtain the fifth bit sequence.

Component decoding means that a plurality of to-be-decoded bits are decomposed into one or more dimensions at the granularity of the decoding unit, and are respectively decoded in one or more directions. Performing decoding separately in the one or more directions means that a decoding unit in each direction is used as a bit that participates in decoding, and is input into a decoder for decoding. In other words, each time of decoding is performed on a bit in a decoding unit in a same direction.

Through component decoding, one decoding unit can participate in more times of decoding, thereby improving the decoding performance. In addition, because the first to-be-decoded input has one or more dimensions, the decoder may decode a plurality of groups of bit inputs in a same decoding direction in parallel. Therefore, the product parallelism is easily implemented, and the processing efficiency can be improved. This helps improve the peak throughput and the area efficiency.

With reference to the second aspect, in some possible implementations of the second aspect, the performing component decoding on the first to-be-decoded input to obtain the fifth bit sequence includes: performing component decoding on the first to-be-decoded input to obtain a first decoded output having a first pattern, where the first decoded output includes a plurality of units distributed across the one or more dimensions, and the first pattern indicates distribution of the plurality of units across the one or more dimensions; and obtaining the fifth bit sequence from the first decoded output based on the first pattern.

A process of performing component decoding on the first to-be-decoded input is similar to a process of performing component encoding on the first to-be-encoded input in the first aspect. After decoding, the bits output through decoding may be arranged based on the first pattern, so that the first decoded output has the first pattern. In this way, the second communication apparatus may extract bits from the first decoded output based on the first pattern, to obtain the fifth bit sequence that has a same order as the first bit sequence.

With reference to the second aspect, in some possible implementations of the second aspect, the plurality of units include a first unit and at least one copy of the first unit, and the first unit and the at least one copy are at different positions in the first decoded output.

It should be understood that the first unit in the second aspect corresponds to the first encoding unit in the first aspect. Theoretically, if the first encoding unit is correctly decoded, the obtained first unit is consistent with the first encoding unit. It should be further understood that the first unit may be one unit, or may be a plurality of units, or may be a type of unit, and this type of unit is replicated into one or more copies at an encoding side (for example, the first communication apparatus).

In the plurality of units obtained by decoding the first to-be-decoded input, one or more units have copies. This means that the encoding side encodes one or more encoding units and copies of the encoding units, that is, encodes a plurality of pieces of same data, so that the decoding performance can be improved by using diversity effects.

With reference to the second aspect, in some possible implementations of the second aspect, the third pattern indicates the distribution of the plurality of decoding units across the plurality of dimensions, and the performing component decoding on the first to-be-decoded input includes: obtaining a plurality of groups of input bits from the one or more decoding units in the first to-be-decoded input based on one or more decoding directions, where the one or more decoding directions include one or more of the following plurality of directions: a horizontal direction in a two-dimensional plane determined based on any two of the plurality of dimensions, a vertical direction in the two-dimensional plane determined based on the any two of the plurality of dimensions, or a diagonal direction in the two-dimensional plane determined based on the any two of the plurality of dimensions; and decoding each of the plurality of groups of input bits.

A direction in which one or more decoding units participating in same decoding are located may be referred to as a decoding direction. The decoding direction may be a direction that is the same as a dimension in which the plurality of decoding units are distributed, or may be another direction. This is not limited in this application.

With reference to the second aspect, in some possible implementations of the second aspect, in the plurality of groups of input bits, decoding types used for decoding different groups of input bits corresponding to a same decoding direction are the same.

Decoding the plurality of groups of input bits by using a same decoding type is suitable for parallel processing. Because a plurality of decoding types for parallel processing are the same during product implementation, parallel instructions having a higher parallelism degree may be used for implementation, so that the processing efficiency is higher.

Further, decoding parameters used for different groups of input bits in a same decoding direction are the same; or decoding parameters used for different groups of input bits in a same decoding direction are different.

On a basis of a same decoding type, using a same decoding parameter can reduce implementation complexity and further improve the processing efficiency, and using different decoding parameters can achieve better decoding performance.

With reference to the second aspect, in some possible implementations of the second aspect, in the plurality of groups of input bits, decoding types used for decoding at least two groups of input bits corresponding to a same decoding direction are different.

Different groups of input bits are encoded by using different encoding types, so that a total code rate can be controlled more flexibly and accurately, thereby improving the decoding performance.

With reference to the second aspect, in some possible implementations of the second aspect, decoding types used for decoding the plurality of groups of input bits are the same.

In other words, all input bits may be decoded by using a same decoding type without distinguishing between decoding directions. Decoding the plurality of groups of input bits by using a same decoding type is suitable for parallel processing. Because a plurality of decoding types for parallel processing are the same during product implementation, parallel instructions having a higher parallelism degree may be used for implementation, so that the processing efficiency is higher.

With reference to the second aspect, in some possible implementations of the second aspect, decoding types used for decoding at least two of the plurality of groups of input bits are different.

In other words, a plurality of groups of input bits in one or more decoding directions may be decoded by using different decoding types. For example, different groups of input bits in a same decoding direction may be decoded by using different decoding types, or one or more groups of input bits in each decoding direction may be decoded by using one decoding type and input bits in different decoding directions are decoded by using different decoding types. This is not limited in this application.

The decoding type in the second aspect corresponds to the encoding type in the first aspect. A specific encoding type is used to encode one group of input bits in the first to-be-encoded input having the first pattern, and a corresponding decoding type may be used to decode one group of input bits at the same position in the first to-be-decoded input having the third pattern. Different groups of input bits are encoded by using different encoding types, so that the total code rate can be controlled more flexibly and accurately, thereby improving the decoding performance.

With reference to the second aspect, in some possible implementations of the second aspect, the method further includes: receiving or sending second information, where the second information indicates one or more of the following: one or more encoding directions, an encoding order, an encoding type used for encoding each group of input bits, or a code rate of the group of input bits, where the one or more encoding directions are used to determine the one or more decoding directions; the encoding order indicates an order in which each group of input bits are input into an encoder, the encoding order is used to determine a decoding order, and the decoding order indicates an order in which each group of input bits are input into a decoder; and the encoding type used for encoding each group of input bits is used to determine a decoding type used for decoding the group of input bits.

The second communication apparatus and the first communication apparatus communicating with the second communication apparatus may determine one or more of the foregoing items based on the second information. The second communication apparatus or the first communication apparatus may indicate the foregoing parameters through the second information, so that the first communication apparatus and the second communication apparatus perform encoding and decoding according to a same rule. In this way, the second communication apparatus correctly performs decoding, and the decoding performance is improved.

The decoding order may indicate an order in which bits in one group of input bits are decoded. Because one group of input bits may be carried in one or more decoding units, it may also be said that the decoding order may be used to control an order in which one or more decoding units used to carry one group of input bits are input into the decoder.

It may be understood that one or more of the foregoing plurality of items may alternatively be predefined in the protocol. For example, the plurality of items may be predefined in the protocol. In this case, the first communication apparatus and the second communication apparatus may not need to indicate the plurality of items through the second information; or a part of the plurality of items may be predefined in the protocol, and the other part may be determined by the first communication apparatus and/or the second communication apparatus. This is not limited in this application.

With reference to the second aspect, in some possible implementations of the second aspect, the third pattern further indicates a decoding position, a decoding unit located at the decoding position is a to-be-decoded decoding unit, and the one or more groups of input bits are determined from the to-be-decoded decoding unit in the first to-be-decoded input.

When encoding the first to-be-encoded input, the encoding side (for example, the first communication apparatus) does not necessarily encode all encoding units in the first to-be-encoded input, but encodes the encoding units at encoding positions. Correspondingly, the second communication apparatus may decode decoding units, at positions (namely, decoding positions) that are the same as the encoding positions, that are in the first to-be-decoded input. By indicating a decoding position, the second communication apparatus may decode a decoding unit at the decoding position, so that the second communication apparatus correctly performs decoding, thereby improving the decoding performance.

With reference to the second aspect, in some possible implementations of the second aspect, that the third pattern indicates the distribution of the plurality of decoding units across the one or more dimensions includes: the third pattern indicates a quantity of decoding units distributed in each of the one or more dimensions among the plurality of decoding units.

The third pattern may be, for example, a regular pattern, and the distribution of the plurality of decoding units in each dimension may be determined by indicating the quantity of decoding units, in the plurality of decoding units, that are distributed in each dimension.

Further, that the third pattern indicates the distribution of the plurality of decoding units across the one or more dimensions further includes: The third pattern indicates an empty position in the third pattern.

Alternatively, the third pattern may be an irregular pattern, or the third pattern may include an empty position and no decoding unit may be mapped to the empty position. In this case, the third pattern may further indicate the empty position, and the distribution of the plurality of decoding units in each dimension may be determined with reference to the quantity of decoding units, in the plurality of decoding units, that are distributed in each dimension.

The empty position is indicated, so that the second communication apparatus can obtain the first to-be-decoded input that has a pattern corresponding to the first pattern of the first to-be-encoded input, and decode the first to-be-decoded input. In this way, the second communication apparatus can correctly perform decoding, thereby improving the decoding performance.

With reference to the second aspect, in some possible implementations of the second aspect, the second bit sequence is included in a fourth bit sequence, the fourth bit sequence includes the second bit sequence and a third bit sequence, and the second bit sequence is obtained from the fourth symbol sequence; and the method further includes: obtaining the fourth bit sequence.

Both the second bit sequence and the third bit sequence that are carried in the fourth bit sequence are obtained by encoding the first bit sequence. Therefore, that the fourth bit sequence carries the second bit sequence and the third bit sequence may also be understood as that the fourth bit sequence carries two first bit sequences. In this way, the decoding performance can be improved by using diversity gains.

With reference to the second aspect, in some possible implementations of the second aspect, the method further includes: obtaining the third bit sequence, where the third bit sequence includes a plurality of bits; arranging the plurality of bits of the third bit sequence to obtain a second to-be-decoded input having a fourth pattern, where the second to-be-decoded input includes a plurality of decoding units distributed across one or more dimensions, each of the plurality of decoding units includes one or more of the plurality of bits, and the fourth pattern indicates distribution of the plurality of decoding units across the one or more dimensions; decoding one or more decoding units in the second to-be-decoded input to obtain a sixth bit sequence; and obtaining a seventh bit sequence based on the fifth bit sequence and the sixth bit sequence.

The second to-be-decoded input is a to-be-decoded input that is obtained by processing the third bit sequence and has the fourth pattern. The fourth pattern in the second aspect corresponds to the second pattern in the first aspect. For a correspondence between the fourth pattern and the second pattern, refer to the foregoing correspondence between the third pattern and the first pattern for understanding.

The second to-be-decoded input and the first to-be-decoded input may be considered as two signals into which the fourth bit sequence is divided, and are respectively the second bit sequence and the third bit sequence. The two signals may be processed in the same way or different ways to obtain the fifth bit sequence and the sixth bit sequence, and then the two signals are combined to obtain the seventh bit sequence. In this way, the decoding performance can be improved by using diversity effects.

With reference to the second aspect, in some possible implementations of the second aspect, the method further includes: receiving or sending third information, where the third information indicates a used pattern, and the pattern includes the third pattern.

Because the third pattern corresponds to the first pattern, it may also be referred to that the pattern includes the first pattern.

The second communication apparatus and the first communication apparatus may pre-store one pattern, or may pre-store a plurality of patterns. When storing the plurality of patterns, the first communication apparatus and the second communication apparatus determine a pattern used for current encoding and decoding, so that the second communication apparatus correctly performs decoding. In addition, the plurality of patterns are pre-stored, so that a wider range of code types can be adapted, and more different types of service requirements can be satisfied.

It may be understood that, if the second communication apparatus and the first communication apparatus each pre-store one pattern, the first communication apparatus and the second communication apparatus may not need to indicate, through the third information, a pattern used for current encoding and decoding, thereby reducing signaling overheads.

According to a third aspect, an apparatus is provided. The apparatus may include modules that are in one-to-one correspondence with the method/operations/steps/actions described in the first aspect, or include modules that are in one-to-one correspondence with the method/operations/steps/actions described in the second aspect. The module may be implemented by a hardware circuit, software, or a combination of the hardware circuit and the software.

In a design, the apparatus may include a processing module and a communication module. The communication module is configured to perform sending actions and receiving actions that are performed by the first communication apparatus in the method described in the first aspect, and the processing module is configured to perform processing-related actions that are performed by the first communication apparatus in the method described in the first aspect.

In a design, the apparatus may include a processing module and a communication module. The communication module is configured to perform sending actions and receiving actions that are performed by the second communication apparatus in the method described in the second aspect, and the processing module is configured to perform processing-related actions that are performed by the second communication apparatus in the method described in the second aspect.

In a design, the apparatus may be a terminal, or may be an apparatus, a module, a circuit, a chip, or the like that is configured and disposed in the terminal, or may be an apparatus that can be used together with the terminal.

In a design, the apparatus may be a network device, or may be an apparatus, a module, a circuit, a chip, or the like that is configured and disposed in the network device, or may be an apparatus that can be used together with the network device.

According to a fourth aspect, an apparatus is provided, including a processor and a storage medium. The storage medium stores instructions. When the instructions are run by the processor, the method according to the first aspect or any possible implementation of the first aspect is implemented, or the method according to the second aspect or any possible implementation of the second aspect is implemented.

According to a fifth aspect, an apparatus is provided, including a processing circuit. The processing circuit is configured to process data and/or information, so that the method according to the first aspect or any possible implementation of the first aspect is implemented, or the method according to the second aspect or any possible implementation of the second aspect is implemented.

The processing circuit may include one or more processors, or all or a part of circuits that are in the one or more processors and configured to perform a processing function.

Optionally, the apparatus may further include a memory. The memory is configured to store a program or instructions. The processor is configured to run the program or the instructions, so that the method according to the first aspect or any possible implementation of the first aspect is implemented, or the method according to the second aspect or any possible implementation of the second aspect is implemented.

Optionally, the apparatus may further include a transceiver circuit or an input/output interface.

According to a sixth aspect, a chip is provided, including a processing circuit. The processing circuit is configured to run a program or instructions, so that the method according to the first aspect or any possible implementation of the first aspect or the method according to the second aspect or any possible implementation of the second aspect is implemented.

Optionally, the chip may further include a memory, and the memory is configured to store the program or the instructions.

Optionally, the chip may further include a transceiver circuit or an input/output interface.

According to a seventh aspect, a computer-readable storage medium is provided. The computer-readable storage medium includes instructions. When the instructions are run by a processor, the method according to the first aspect or any possible implementation of the first aspect is implemented, or the method according to the second aspect or any possible implementation of the second aspect is implemented.

According to an eighth aspect, a computer program product is provided. The computer program product includes computer program code or instructions. When the computer program code or the instructions are run, the method according to the first aspect or any possible implementation of the first aspect is implemented, or the method according to the second aspect or any possible implementation of the second aspect is implemented.

According to a ninth aspect, a communication system is provided. The communication system includes the apparatus for performing the method according to the first aspect or the second aspect and any possible implementation of the first aspect or the second aspect.

It should be understood that the third aspect to the ninth aspect of this application correspond to the technical solutions of the first aspect and the second aspect of this application, and beneficial effects achieved in the aspects and corresponding feasible implementations are similar. Details are not described again.

### BRIEF DESCRIPTION OF DRAWINGS

FIG. 1 is a diagram of a communication system applicable to a communication method according to an embodiment of this application;
FIG. 2a to FIG. 2d are diagrams of several different communication scenarios applicable to a communication method according to an embodiment of this application;
FIG. 3 is a diagram of a signal processing process at a physical layer according to an embodiment of this application;
FIG. 4 is a diagram of an encoding process of two-dimensional product code;
FIG. 5 is a schematic flowchart of an encoding method according to an embodiment of this application;
FIG. 6a to FIG. 6c are diagrams of encoding units according to embodiments of this application;
FIG. 7a to FIG. 20 are diagrams of patterns according to embodiments of this application;
FIG. 21a to FIG. 22 are diagrams of encoding directions according to embodiments of this application;
FIG. 23 is a diagram of a plurality of groups of encoded bits according to an embodiment of this application;
FIG. 24 is a diagram of encoding at different encoding directions according to an embodiment of this application;
FIG. 25 is a schematic flowchart of encoding a first bit sequence according to an embodiment of this application;
FIG. 26 is a diagram of obtaining a fourth bit sequence from a first bit sequence according to an embodiment of this application;
FIG. 27 is a schematic flowchart of a decoding method according to an embodiment of this application;
FIG. 28a to FIG. 31 are diagrams of decoding units according to embodiments of this application;
FIG. 32 is a schematic flowchart of decoding a second bit sequence according to an embodiment of this application;
FIG. 33 is a diagram of obtaining a seventh bit sequence from a fourth bit sequence according to an embodiment of this application; and
FIG. 34 and FIG. 35 are schematic block diagrams of apparatuses according to embodiments of this application.

### DESCRIPTION OF EMBODIMENTS

The following describes technical solutions of this application with reference to accompanying drawings.

For ease of understanding of embodiments of this application, the following descriptions are first provided.

First, in this application, for ease of understanding and description, an encoder and a decoder (also referred to as a decipherer) are used in this specification. These names are provided only for distinguishing between different functions, and do not limit structures of communication apparatuses. For example, a first communication apparatus having an encoding function may be referred to as the first communication apparatus including an encoder, where the encoder may be understood as a functional module in the first communication apparatus; and a second communication apparatus having a decoding function may be referred to as the second communication apparatus including a decoder, where the decoder may be understood as a functional module in the second communication apparatus. During specific implementation, the encoder and the decoder may be separately implemented by hardware, or may be implemented by software, or may be implemented by a combination of the software and the hardware. This is not limited in this application.

Certainly, the first communication apparatus may also have a decoding function, and the second communication apparatus may also have an encoding function. That is, the first communication apparatus may further include a decoder, and the second communication apparatus may further include an encoder. This is not limited in this application.

It may be understood that the communication apparatus in this application may be replaced with an apparatus or an encoding/decoding apparatus. For example, the first communication apparatus is replaced with a first apparatus or an encoding/decoding apparatus, and the second communication apparatus is replaced with a second apparatus or an encoding/decoding apparatus.

Second, in this application, an indication includes a direct indication (also referred to as an explicit indication) and an indirect indication (also referred to as an implicit indication). Directly indicating information A means including the information A; and indirectly indicating information A means indicating the information A by directly indicating information B and based on a correspondence between the information A and information B, or indicating the information A by directly indicating information B and according to a preset rule used to determine A based on B. The correspondence between the information A and the information B and the preset rule may be predefined, pre-stored, pre-burnt, or preconfigured.

Third, for ease of understanding, in this application, an encoding method and a decoding method provided in this application are described by using a plurality of accompanying drawings. These accompanying drawings are merely examples, and shall not constitute any limitation on this application. For example, a sequence of steps shown in the accompanying drawings may be simply changed based on functions and internal logic of the steps. For another example, all the steps in the accompanying drawings may be performed, or a part of the steps may be performed, provided that functions the same as those in embodiments of this application can be implemented.

Fourth, in this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" usually indicates an "or" relationship between the associated objects, but does not exclude an "and" relationship between the associated objects. A specific meaning indicated by the character "/" may be understood with reference to the context. "At least one of the following items (pieces)" or a similar expression thereof indicates any combination of these items, including a single item (piece) or any combination of a plurality of items (pieces). For example, at least one (piece) of a, b, or c may represent a, b, c, a and b, a and c, b and c, or a, b, and c, where a, b, and c each may be singular or plural.

Fifth, in this application, prefixes such as "first" and "second" are merely intended to distinguish and describe different things belonging to a same name category, and are not intended to constrain a sequence, sizes, or a quantity of things. For example, the "first communication apparatus" and the "second communication apparatus" are merely different devices, and a quantity of devices or a priority relationship is not limited. For another example, "first information" and "second information" are merely different information, and there is no time sequence relationship, size relationship, or priority relationship between the two pieces of information.

Sixth, "sending" and "receiving" in this application indicate signal transmission directions. For example, "sending information to the second communication apparatus" may be understood as that a destination end of the information is the second communication apparatus, and may include direct sending through an air interface, or indirect sending through an air interface by another unit or module. "Receiving information from the second communication apparatus" may be understood as that a source end of the information is the second communication apparatus, and may include directly receiving the information from the second communication apparatus through an air interface, or may include indirectly receiving the information from the second communication apparatus through an air interface by another unit or module. The "sending" may also be understood as "outputting" of a chip interface, and the "receiving" may also be understood as "inputting" of the chip interface.

In other words, sending and receiving may be performed between devices, for example, between the second communication apparatus and the first communication apparatus, or may be performed inside a device. For example, sending or receiving is performed between parts, modules, chips, software modules, or hardware modules inside the device through a bus, a cable, or an interface.

Seventh, in embodiments of this application, "when", "assuming", and "if" all mean that an apparatus performs corresponding processing in an objective situation, are not intended to limit time, do not require the apparatus to necessarily have a determining action during implementation, and do not mean another limitation either.

Eighth, in this application, the term "example", "for example", "such as", or "like" or represents giving an example, an illustration, or a description. Any embodiment or design scheme described as "example", "for example", "such as", or "like" in this application should not be explained as being more preferred or having more advantages than other embodiments or design schemes. Specifically, use of the term such as "example", "for example", "such as", or "like" is intended to present a related concept in a specific manner.

For easy understanding of embodiments of this application, the following briefly describes several terms used in this specification.

Channel coding: Information transmitted through unreliable channels in digital communication is encoded to improve reliability of information transmission. In the channel coding, a transmitting end may convert original information (for example, information bits) into encoded data in a specific format by using a specific encoding type, and transmit the encoded data through a channel; and a receiving end needs to decode the received data and restore the original information. The most important part in the channel coding is error correction coding (forward error correcting coding, FEC). The purpose of the error correction coding is to ensure that the receiving end can automatically correct errors that occur during data transmission with minimum redundancy overheads. At a same bit error rate, requiring lower overheads indicates higher encoding efficiency. Encoding types of traditional channel coding include linear block code (linear block code, LBC) (for example, Hamming code, Gray code, BCH code (Bose-Chaudhuri-Hocquenghem code), and RS code (Reed-Solomon code)), convolutional code (convolutional code), and concatenated code (concatenated code). These types of code have different features and performance, and are applicable to different scenarios.

Code rate: a ratio of information bits to coded bits after channel coding, where the coded bits after channel coding include information bits and check bits (or referred to as redundant bits). For example, when a quantity of coded bits after channel coding is N, and a quantity of information bits is K, the code rate is K/N. A quantity of the coded bits after channel coding may also be referred to as a code length. It may be understood that, a higher redundancy corresponds to a lower code rate and stronger interference resistance but lower transmission efficiency, whereas a lower redundancy corresponds to a higher code rate and weaker interference resistance but higher transmission efficiency.

Coding gain: Assuming that a quantity of information bits to be transmitted per unit time is constant, added redundant bits can enhance interference resistance. Under a same bit error rate requirement, the reduction in signal-to-noise ratio for coded transmission compared with uncoded transmission is referred to as coding gain.

Throughput (throughput): a rate at which data is transmitted through a channel in a communication network. Improving coding efficiency helps increase throughput.

Area efficiency: a ratio of peak throughput to chip area. When chip areas are the same, a higher peak throughput indicates higher area efficiency.

Interleaving: In wireless communication, deep fading of a channel may cause a burst of data bit errors, which may prevent a receiving end from correctly recovering original information after receiving the data bits. To avoid continuous interference, data may be scattered at a transmitting end such that the data is dispersed during transmission, so that burst interference, regular interference, and the like that may be encountered are randomly dispersed, that is, the continuous interference is dispersed, thereby facilitating data recovery at the receiving end by using error correction techniques.

Technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system such as a 6th generation (6th generation, 6G) mobile communication system, or a converged system of a plurality of systems. The technical solutions provided in this application may also be applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A device in the communication system may send a signal to another device or receive a signal from another device. The signal may include information, signaling, data, or the like. The device may alternatively be replaced with an entity, a network entity, a communication device, a communication module, a node, a communication node, or the like. In this disclosure, the device is used as an example for description. For example, the communication system may include at least one terminal device and at least one network device. The network device may send a downlink signal to the terminal device, and/or the terminal device may send an uplink signal to the network device. It may be understood that, in this disclosure, the terminal device may be replaced with a first communication apparatus, the network device may be replaced with a second communication apparatus, and the first communication apparatus and the second communication apparatus perform corresponding communication methods in this disclosure.

A radio access network (radio access network, RAN) device in this application is a device having a wireless transceiver function. The radio access network device may provide wireless communication function services, and may connect a terminal device to a wireless network. The radio access network device may also be referred to as an access network device or a network device. The network device in embodiments of this application may be a radio access network (radio access network, RAN) node (or device) that is used in a cellular network (or a mobile network) to connect the terminal device to the wireless network, or may be a ZigBee base station, a Bluetooth master (BT master), a Bluetooth low energy (Bluetooth low energy, BLE) master (BLE master), a Lora base station, or a Wi-Fi access point.

For example, the network device may be a base station. The base station may cover the following names in a broad sense, or may be replaced with the following names: for example, a NodeB (NodeB), an evolved NodeB (evolved NodeB, eNB), a next generation NodeB (next generation NodeB, gNB), a relay station, an access point, a transmitting and receiving (transmitting and receiving point, TRP), a transmitting point (transmitting point, TP), a primary station, a secondary station, a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used by the network device are not limited in embodiments of this application. In some deployments, the network device mentioned in embodiments of this application may be a device including a CU or a DU or including a CU and a DU, or a device including a CU control plane (central unit-control plane (central unit-control plane, CU-CP)) node, a CU user plane (central unit-user plane (central unit-user plane, CU-UP)) node, and a DU node. For example, the network device may include a gNB-CU-CP, a gNB-CU-UP, and a gNB-DU.

In some deployments, a plurality of RAN nodes coordinate to assist the terminal in implementing radio access, and different RAN nodes each implement a part of functions of the base station. For example, the RAN node may be a CU, a DU, a CU-CP, a CU-UP, an RU, or the like. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs that have different functions. If a fronthaul interface between the DU and the RU is a common public radio interface (common public radio interface, CPRI), the DU is configured to implement one or more baseband functions, and the RU is configured to implement one or more radio frequency functions. If the fronthaul interface between the DU and the RU is another type of interface, compared with the CPRI, some downlink and/or uplink baseband functions are transferred for the interface. For example, for downlink, one or more of precoding (precoding), digital beamforming (beamforming, BF), or inverse fast Fourier transform (inverse fast Fourier transform, IFFT)/cyclic prefix (cyclic prefix, CP) addition are transferred from the DU to the RU for implementation; and for uplink, one or more of digital beamforming (beamforming, BF) or fast Fourier transform (fast Fourier transform, FFT)/CP removal are transferred from the DU to the RU for implementation. In a possible implementation, the interface may be an enhanced common public radio interface (enhanced common public radio interface, eCPRI). In an eCPRI architecture, different manners of splitting between the DU and the RU correspond to different categories (categories, Cats) of eCPRIs, for example, eCPRI Cat A, Cat B, Cat C, Cat D, Cat E, and Cat F.

The eCPRI Cat A is used as an example. For downlink transmission, layer mapping is used for splitting. The DU is configured to implement the layer mapping and one or more functions (that is, one or more of encoding, rate matching, scrambling, modulation, or layer mapping) before the layer mapping, and another function (for example, one or more of resource element (resource element, RE) mapping, digital BF, or IFFT/CP addition) after the layer mapping is transferred to the RU for implementation. For uplink transmission, RE demapping is used for splitting. The DU is configured to implement demapping and one or more functions before the demapping (that is, one or more of the following functions: decoding, de-rate matching, descrambling, demodulation, inverse discrete Fourier transform (inverse discrete Fourier transform, IDFT), channel equalization, or RE demapping), and other functions (for example, one or more of digital BF or FFT/CP removal) after the demapping is transferred to the RU for implementation. It may be understood that, for function descriptions of DUs and RUs corresponding to various categories of eCPRIs, refer to an eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings of the names. For example, in an open radio access network (open-RAN, O-RAN or ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by a software module, a hardware module, or a combination of the software module and the hardware module. The network device in this application may be a virtualized device, for example, implemented by using general-purpose hardware and an instantiated virtualization function, or by using dedicated hardware and an instantiated virtualization function. The general-purpose hardware may be a server, for example, a cloud server.

In embodiments of this application, an apparatus configured to implement a function of the network device may be a network device, or may be an apparatus that can support the network device in implementing the function, for example, a chip system, a hardware circuit, a software module, or a combination of a hardware circuit and a software module. The apparatus may be mounted in the network device or used together with the network device. In embodiments of this application, an example in which the apparatus configured to implement the function of the network device is the network device is merely used for description, and constitutes no limitation on the solutions in embodiments of this application.

The terminal device in this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data, for example, a handheld device or a vehicle-mounted device having a wireless connection function. Currently, some examples of the terminal are as follows: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, a terminal device in a future evolved public land mobile network (public land mobile network, PLMN), a device (device) in a ZigBee network, a device in a Lora network, a Bluetooth slave (BT slave), a BLE slave, a Wi-Fi station (station, STA), and the like. This is not limited in embodiments of this application.

The terminal device may alternatively be a terminal device in the IoT system, and may also be referred to as an IoT node. IoT is an important part of future information technology development. A main technical feature of the IoT is to connect things to a network by using a communication technology, to implement a smart network for human-machine interconnection and thing-thing interconnection. The connection may be implemented by using a broadband technology or a narrowband technology. In the IoT technology, massive connections, deep coverage, and terminal power saving may be implemented by using, for example, the narrowband (narrowband, NB) technology. The IoT technology includes a reflective communication technology, a spread spectrum technology, an ultra-wideband (ultra-wideband, UWB), and the like. Details are not described.

In addition, the terminal device may further include a sensor such as an intelligent printer, a train detector, or a gas station, and main functions include: collecting data (some terminal devices), receiving control information and downlink data of the network device, sending electromagnetic waves, and transmitting uplink data to the network device.

By way of example, and not limitation, in embodiments of this application, the terminal device may alternatively be a wearable device. The wearable device may also be referred to as a wearable intelligent device, and is a general term of wearable devices that are intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device may be a terminal device, or may be an apparatus that can support the terminal device in implementing the function, for example, a chip system, where the apparatus may be mounted in the terminal device or used together with the terminal device. In embodiments of this application, the chip system may include a chip, or may include a chip and another discrete component. In embodiments of this application, an example in which the apparatus configured to implement the function of the terminal device is the terminal device is merely used for description, and constitutes no limitation on the solutions in embodiments of this application.

The terminal device in this application may be a hardware device, or may be a software function running on dedicated hardware, or may be a software function running on general-purpose hardware, or may be a virtualized device, for example, implemented by using general-purpose hardware and an instantiated virtualization function, or implemented by using dedicated hardware and an instantiated virtualization function. The general-purpose hardware may be a server, for example, a cloud server.

The network device and/or the terminal device may be deployed on land, including an indoor or outdoor device, or a handheld or vehicle-mounted device; may be deployed on water; or may be deployed on an aircraft, a balloon, and a satellite in the air. A scenario in which the network device and the terminal device are located is not limited in embodiments of this application.

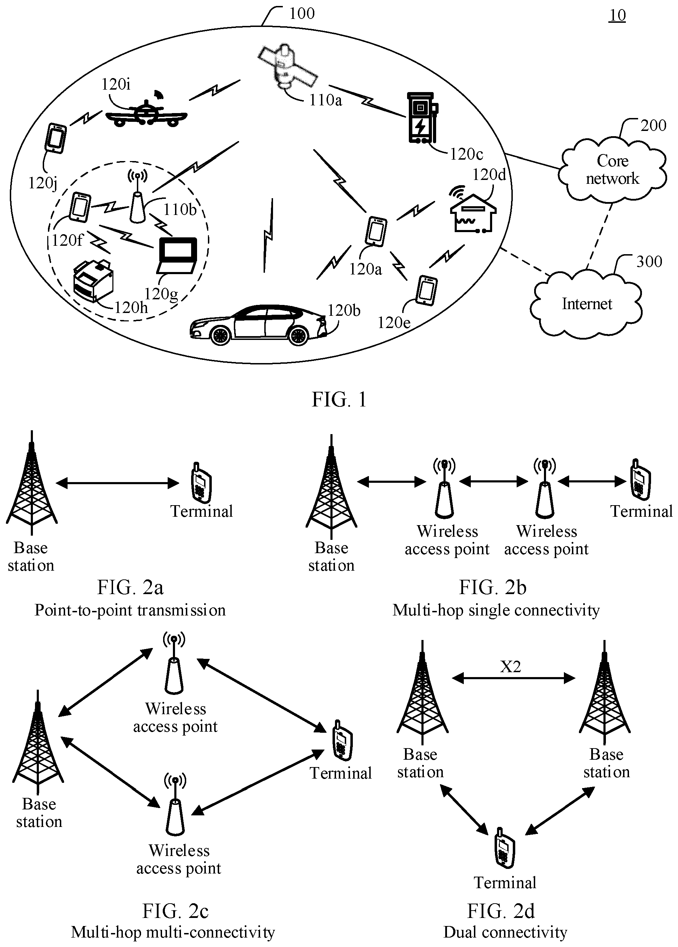

FIG. 1 is a diagram of an architecture of a communication system 10 applicable to an embodiment of this application. FIG. 1 is a diagram of a possible and non-limiting system architecture. As shown in FIG. 1, the communication system 10 includes a radio access network (RAN) 100 and a core network 200. Optionally, the communication system 10 further includes an internet 300. The RAN 100 may include at least one RAN node (for example, 110a and 110b in FIG. 1), and may further include at least one terminal device (for example, 120a to 120j in FIG. 1). The terminal device may be connected to a radio access network device in a wireless manner. Terminal devices may be connected to each other in a wired or wireless manner, and radio access network devices may be connected to each other in a wired or wireless manner. The RAN node 110 is connected to the core network 200 in a wireless or wired manner. A core network device in the core network 200 and a RAN node 110 in the RAN 100 may be different physical devices, or may be a same physical device that integrates a logical function of the core network and a logical function of the radio access network.

FIG. 1 is merely a diagram. The communication system 10 may further include other network devices, for example, may further include a wireless relay device, a wireless backhaul device, and the like, which are not shown in FIG. 1.

The RAN 100 may be a cellular system related to the 3rd generation partnership project (3rd generation partnership project, 3GPP), for example, a 4G or 5G mobile communication system, or a future-oriented evolved system (for example, a 6G mobile communication system). The RAN 100 may alternatively be an ORAN, a cloud radio access network (cloud radio access network, CRAN), a ZigBee network system, or a wireless fidelity (wireless fidelity, Wi-Fi) system. The RAN 100 may alternatively be a communication system that integrates two or more of the foregoing systems.

The RAN node may be a base station deployed in the air, for example, may be a satellite base station 110a; or may be a base station deployed indoors, for example, may be a micro base station or an indoor base station 110b. It should be understood that a specific technology and a specific device form that are specifically used by the radio access network device are not limited in this application. For ease of description, the following provides descriptions by using an example in which the radio access network device is a base station.

The terminal device may be a terminal device deployed in the air, for example, a helicopter or uncrewed aerial vehicle 120i in FIG. 1; or may be a terminal device deployed on the ground, for example, mobile phones 120a, 120e, 120f, and 120j, a vehicle 120b, a computer 110b, and a printer 120h in FIG. 1.

Optionally, the terminal device may alternatively be configured to serve as a RAN node. For example, the UE may serve as a scheduling entity that provides a sidelink signal between terminal devices in vehicle-to-everything (vehicle-to-everything, V2X), device-to-device (device-to-device, D2D), peer-to-peer (peer-to-peer, P2P), or the like.

The RAN node and the terminal device may be fixed or movable. The RAN node and the terminal device may be deployed on land, including indoor or outdoor devices or handheld or vehicle-mounted devices; or may be deployed on water; or may be deployed on an aircraft, a balloon, and an artificial satellite in the air. Application scenarios of the RAN node and the terminal device are not limited in embodiments of this application.

Roles of the RAN node and the terminal device may be relative. For example, the helicopter or the uncrewed aerial vehicle 120i in FIG. 1 may be configured as a RAN node. For the terminal device 120j that accesses the RAN 100 via the 120i, the terminal device 120i is a RAN node. However, for the RAN node 110a, the 120i is a terminal device, that is, the 110a communicates with the 120i according to a wireless air interface protocol. Certainly, 110a may alternatively communicate with 120i according to an interface protocol between RAN nodes. In this case, for 110a, 120i is also a RAN node. Therefore, both the RAN node and the terminal device may be collectively referred to as communication devices, and 110a, 110b, and 120a to 120j in FIG. 1 may be referred to as communication apparatuses that have respective corresponding functions, for example, communication devices having a RAN node function or communication devices having a terminal function.

In embodiments of this application, a function of the RAN node may alternatively be performed by a module (for example, a chip) in the RAN node, or may be performed by a control subsystem including a RAN node function. The control subsystem including the RAN node function herein may be a control center in an application scenario of the foregoing terminal, for example, a smart grid, industrial control, smart transportation, and a smart city. The function of the terminal device may alternatively be performed by a module (for example, a chip) in the terminal device, or may be performed by an apparatus including the function of the terminal device. This is not limited in this application.

FIG. 2a to FIG. 2d are diagrams of several different communication scenarios applicable to a communication method according to an embodiment of this application. For example, the scenarios include point-to-point transmission between a RAN node and a terminal or between terminals (for example, point-to-point transmission between a RAN node and a terminal in FIG. 2a), multi-hop transmission (for example, FIG. 2b and FIG. 2c) between a RAN node and a terminal, dual connectivity (dual connectivity, DC) between a plurality of RAN nodes and a terminal (for example, FIG. 2d), multi-connectivity, or the like. It should be noted that the foregoing specific communication application scenarios are merely examples, and do not constitute a limitation. Particularly, from a service perspective, embodiments of this application are applicable to many service scenarios, for example, a data encoding scenario in an extended reality (extended reality, XR) service and an uplink high-capacity scenario. In addition, FIG. 2a to FIG. 2d constitute no limitation on a network architecture applicable to this application. Transmission such as uplink transmission, downlink transmission, access link transmission, backhaul (backhaul) link transmission, and sidelink (sidelink, SL) transmission is not limited in this application.

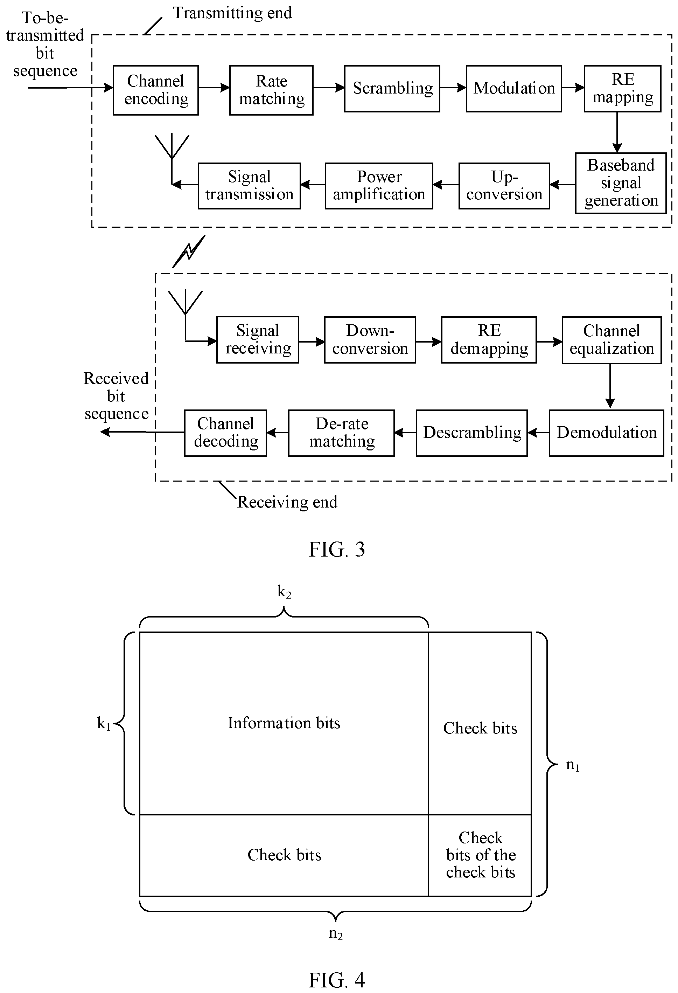

To better understand the method provided in this application, the following first briefly describes a signal processing process at a physical layer with reference to FIG. 3.

When sending information data, a transmitting end may divide, based on a size of a transport block (transport block, TB) supported by a system, data from the MAC layer into a plurality of TBs, and add cyclic redundancy check (cyclic redundancy check, CRC) code to each TB. If a size of a TB to which the CRC code is added exceeds a maximum code block length, the TB may be segmented to obtain a plurality of code blocks CBs. CRC code may be further added to each CB obtained through segmentation, to obtain a to-be-encoded input corresponding to the CB. It may be understood that the to-be-encoded input is a to-be-encoded bit sequence, and may specifically include information bits and check bits (namely, the CRC code) in the CB corresponding to the to-be-encoded input.

The transmitting end may perform channel coding, for example, LDPC encoding or Polar encoding, on the to-be-encoded input, to obtain corresponding encoded code blocks. Rate matching is performed on the encoded code blocks, and the code blocks after the rate matching are concatenated to form a codeword (codeword, CW).

The transmitting end may perform scrambling (scrambling) on the codeword to generate scrambled bits. The scrambled bits are modulated to obtain modulation symbols. After RE mapping is performed on the modulation symbols, the modulation symbols are mapped to a plurality of REs. Therefore, a value carried on each RE may be obtained. The transmitting end may generate a baseband signal based on the values carried on these REs. Up-conversion is performed on the baseband signal to obtain a band-pass signal, and the band-pass signal is transmitted through an antenna after an operation like power amplification is performed on the band-pass signal.

A receiving end may receive the signal through an antenna. After receiving the band-pass signal from the transmitting end, the receiving end may perform down-conversion on the band-pass signal to obtain a baseband signal. Then, a physical layer of the receiving end may sequentially perform processing such as RE demapping, demodulation, descrambling, de-rate matching, and channel decoding (or referred to as decoding) on the signal, to obtain a bit sequence before encoding, which may specifically include information bits and check bits.

Optionally, after completing RE demapping and before performing demodulation, the receiving end may further perform channel equalization. In the channel equalization, based on a channel obtained through channel estimation, impact of the channel is removed by using an equalization algorithm, to ensure correct demodulation of signals. It may be understood that the information bits received by the receiving end correspond to the information bits to be sent by the transmitting end.

Optionally, after completing modulation and before performing RE mapping, the transmitting end may further perform layer mapping (layer mapping) and precoding. For example, the transmitting end may map the modulation symbols to a plurality of layers (layers), and perform precoding (precoding) on the modulation symbols obtained through layer mapping, to obtain a precoded signal. The precoded signal is mapped to a plurality of REs through RE mapping. Correspondingly, before completing RE demapping and performing channel equalization, the receiving end may further perform layer demapping and de-precoding, to perform channel equalization.

Because a specific implementation of each step in FIG. 3 may be implemented by using conventional technologies, refer to a related chapter in the 3rd generation partnership project (3rd generation partnership project, 3GPP) technical specification (technical specification, TS) 38.211. Details are not described herein.

In mobile communication systems in the 3G and 4G eras, Turbo (Turbo) code is an encoding and decoding technology defined in the 3GPP standard. It is convolutional code with excellent performance, and can be very close to a limit of the Shannon theory. In the 5G era, a data transmission rate is improved by an order of magnitude compared with that in 4G. For the Turbo code, a decoder based on serial processing cannot effectively support such high-speed data transmission. In addition, other more diversified service application scenarios and new requirements on channel coding also emerge in the 5G era. For example, a file packet that needs to be transmitted in a massive machine type communication (massive machine type communication, mMTC) scenario is small, and requirements on an encoding/decoding latency and a low bit error rate in an ultra-reliable low-latency communication (ultra-reliable low-latency communication, URLLC) scenario are high. Therefore, based on key requirements on channel coding in three major 5G application scenarios, LDPC and Polar are finally used in the 5G standard. Compared with traditional linear block code and the convolutional code, the LDPC code and the Polar code have better performance and can be close to the limit of the Shannon theory. However, the LDPC code and the Polar code have different characteristics in terms of application scenarios and complexity of encoders and decoders.

With approaching of 6G, some real-time high-data-rate services emerge, for example, XR, MR, and immersive services. These emerging services raise higher requirements on a peak throughput and area efficiency of encoding and decoding. A peak rate needs to reach tera bytes per second (tera bytes per second, Tbps), and power consumption of the decoder needs to be further reduced. The LDPC code and the Polar code in 5G cannot satisfy these extremely high requirements. Therefore, for next-generation chip channel encoding and decoding, technical breakthroughs need to be made in the two main directions: high-throughput and low-power-consumption encoding and decoding and high-reliability encoding and decoding.

Compared with the LDPC code and the Polar code in 5G, two-dimensional product code can be encoded and decoded in parallel on both an encoding side and a decoding side. Therefore, it is easier to improve a product parallelism, and improve a peak throughput of encoding and decoding. Therefore, it is easier to satisfy a service requirement of a real-time high data rate.

For ease of understanding, the following briefly describes an encoding process of two-dimensional product code with reference to FIG. 4. FIG. 4 is a diagram of encoding the two-dimensional product code. As shown in FIG. 4, an encoder of the two-dimensional product code may include two encoders, which are respectively denoted as component code 1 and component code 2. The component code 1 may be binary linear code 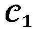 whose code length, information bit length, and shortest distance are respectively (n₁, k₁, d₁). The component code 2 may be binary linear code 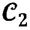 whose code length, information bit length, and shortest distance are respectively (n₂, k₂, d₂). The two-dimensional product code may be constructed by using the following method: Information bits with a length of k₁×k₂ are arranged into a k₁×k₂ matrix, that is, the k₁×k₂ information bits are arranged into k₁ row vectors and k₂ column vectors. Each of the k₁ row vectors is encoded by using the component code 1 to obtain a k₁×n₂ matrix, where the row vector includes k₁ information bits and n₂-k₁ check bits; and each of the k₂ column vectors may be encoded by using the component code 2 to obtain a k₂×n₁ matrix, where the column vector includes k₂ information bits and n₁ check bits. Check bits of the check bits in the figure may be check bits obtained by encoding k₁×(n₂-k₁) check bits, or may be check bits obtained by encoding (n₁-k₁)×k₂ check bits. In this way, an n₁×n₂ matrix may be obtained, that is, a two-dimensional product codeword, with a length of n₁×n₂, that is determined by 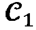 and 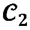 .

It can be easily learned that the two-dimensional product code is obtained through component encoding, and encoding is performed in parallel by using two encoders (namely, the component code 1 and the component code 2). Therefore, a processing parallelism degree is high. This helps increase a throughput. However, because component encoding needs to be performed, to-be-encoded information bits need to be first arranged into a two-dimensional matrix. Therefore, a quantity of rows and a quantity of columns of the two-dimensional matrix, that is, k₁ and k₂ in the foregoing, need to be predefined, so that both an encoding side and a decoding side perform processing based on a same dimension.

However, in wireless communication, a data transmission amount is not fixed. Some services may have large data transmission amounts, for example, an audio and video transmission service. Some services may have small data transmission amounts, for example, an mMTC service and a URLLC service. If channel coding is performed by using two-dimensional product code, a predefined two-dimensional matrix may not adapt to a plurality of different transmission amounts. Therefore, flexibility is poor.

This application provides a method, to arrange a plurality of to-be-encoded bits at a granularity of an encoding unit, and further encode an arranged to-be-encoded input. The encoding unit may include one or more bits. Therefore, a size of the encoding unit may be flexibly adjusted based on a data transmission amount, to adapt to a plurality of different data transmission amounts. In addition, because the size of the encoding unit may be flexibly adjusted, a quantity of check bits obtained through encoding may also be flexibly adjusted in a larger range, thereby facilitating adaptive adjustment of a code rate.

The following describes the encoding method and the decoding method provided in this application with reference to the accompanying drawings.

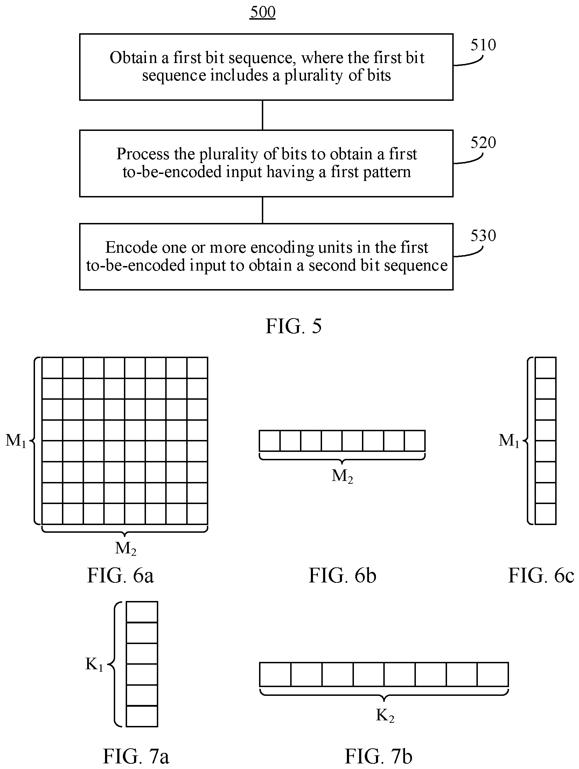

FIG. 5 is a schematic flowchart of an encoding method according to an embodiment of this application. The encoding method shown in FIG. 5 may be performed by a first communication apparatus. The first communication apparatus may be, for example, a communication device, such as a network device or a terminal device, or may be a component disposed in the communication device, such as a chip, a chip system, or a processor, or may be a logical module, software, or the like that can implement some or all functions of the communication apparatus. This is not limited in this application.

The encoding method 500 shown in FIG. 5 includes steps 510 to 530. Each step of the method 500 is described in detail below.

Step 510: Obtain a first bit sequence, where the first bit sequence includes a plurality of bits.

It can be learned from the foregoing processing process at the physical layer described with reference to FIG. 3 that the first bit sequence includes one or more to-be-encoded information bits. For example, the first bit sequence may be a sequence including information bits in a CB, that is, the first bit sequence includes a plurality of to-be-encoded information bits; or the first bit sequence may be a sequence obtained by adding a check bit to a CB, that is, the first bit sequence includes a plurality of to-be-encoded information bits and at least one check bit. In conclusion, the first bit sequence includes a plurality of to-be-encoded bits.

Optionally, the first bit sequence may alternatively be a bit sequence on which other processing is performed, for example, a bit sequence obtained by performing interleaving on the sequence obtained by adding the check bit. Therefore, interference resistance of signal transmission can be improved, and decoding performance can be improved.

Step 520: Process the plurality of bits to obtain a first to-be-encoded input having a first pattern.

That is, the plurality of bits of the first bit sequence are processed to obtain the first to-be-encoded input. It may be understood that the first to-be-encoded input includes a plurality of bits of the first bit sequence. Because an encoding process may be implemented by an encoder, the first to-be-encoded input may also be understood as a plurality of bits to be input to the encoder.

In this application, the first to-be-encoded input has the first pattern. In other words, elements in the first to-be-encoded input are arranged in the first pattern. Herein, the element (element) may also be understood as a minimum granularity at which the first to-be-encoded input is arranged to have the first pattern. Each element may include one or more bits in the first bit sequence. In other words, the first to-be-encoded input is arranged at a granularity of an element instead of a granularity of a bit. Compared with two-dimensional product code, one bit is extended to one element, and one element may include one or more bits. Therefore, the element may also be referred to as a lifting size (lifting size). At an encoding side, because one or more bits in each element are input to the encoder for encoding, each element may also be referred to as an encoding unit, an encoding element, a unit, or the like. This is not limited in this application.

Each encoding unit may be a one-dimensional vector, or may be a two-dimensional matrix. In other words, each encoding unit may be a one-dimensional or two-dimensional array.

For ease of understanding, FIG. 6a to FIG. 6c show several examples of the encoding unit. As shown in FIG. 6a, the encoding unit is an M₁×M₂ two-dimensional matrix, that is, the encoding unit may include M₁×M₂ bits. As shown in FIG. 6b, the encoding unit is a one-dimensional row vector whose length is M₂, that is, the encoding unit includes M₂ bits. As shown in FIG. 6c, the encoding unit is a one-dimensional column vector whose length is M₁, that is, the encoding unit includes M₁ bits. Both M₁ and M₂ may be positive integers.

It should be understood that both M₁ and M₂ are merely examples. In this application, a dimension of the encoding unit is not limited, and a quantity of bits included in each dimension and an arrangement manner in one or more bit encoding units are not limited either.

The arrangement manner may be specifically first row then column or first column then row. The first row then column is to first perform arrangement by row and then perform arrangement by column. Specifically, bits may be first arranged by row (for example, in a left-to-right or right-to-left order), and after one row is fully filled with bits, a next row is filled with bits. An arrangement order of different rows may be predefined, for example, may be a top-to-bottom order, or may be a bottom-to-top order. If each row is considered as a whole, and the plurality of rows may be considered as one column, an arrangement of the plurality of rows may also be considered as an arrangement of the column.

The first column then row is to first perform arrangement by column and then perform arrangement by row. Specifically, bits may be first arranged by column (for example, in a top-to-bottom order), and after one column is fully filled with bits, a next column is filled with bits. An arrangement order of different columns may be predefined, for example, may be a left-to-right order, or may be a right-to-left order. If each column is considered as a whole, and the plurality of columns may be considered as one row, an arrangement of the plurality of columns may also be considered as an arrangement of the row.

Optionally, different encoding units in the plurality of encoding units included in the first to-be-encoded input include a same quantity of bits.

For example, each of the plurality of encoding units includes M₁×M₂ bits.

A plurality of encoding units including a same quantity of bits may have a same dimension, or may have different dimensions. This is not limited in this application. For example, each encoding unit is an M₁×M₂ two-dimensional matrix. For another example, a part of the encoding units are M₁×M₂ two-dimensional matrices, and a part of the encoding units are M₂×M₁ two-dimensional matrices. For another example, a part of the encoding units are M₁×M₂ two-dimensional matrices, and a part of the encoding units are one-dimensional vectors whose lengths are M₁×M₂. This is not limited.

In different encoding units, one or more bits may be arranged in a same way or different ways in respective encoding units. For example, it is assumed that the plurality of encoding units are all two-dimensional matrices, and each encoding unit is arranged in the first row then column order, and is arranged in the left-to-right order when being arranged by row and is arranged in the top-to-bottom order when being arranged by column; or a part of the encoding units are arranged in the row-first column-then order, and a part of the encoding units are arranged in the column-first row-then order, where the encoding units are arranged in the left-to-right order when being arranged by row and are arranged in the top-to-bottom order when being arranged by column.

Optionally, at least two of the plurality of encoding units included in the first to-be-encoded input include different quantities of bits.

For example, a part of the encoding units include M₁ bits, and a part of the encoding units include M₂ bits. Dimensions of the encoding units may alternatively be different. Arrangement manners of the bits in the encoding units may be the same or may be different. For more detailed descriptions of the dimension of the encoding unit and the arrangement manner of the bits in the encoding unit, refer to the foregoing descriptions. Details are not described again.

The first pattern is a type of pattern. The pattern may also be referred to as a basic graph (basic graph), a basic pattern, a basic model, or the like. This is not limited in this application.

The first pattern may indicate distribution of the plurality of encoding units of the first to-be-encoded input having the first pattern across one or more dimensions. In the first to-be-encoded input having the first pattern, the plurality of encoding units may be distributed in one dimension, or may be distributed in a plurality of dimensions. One or more encoding units may be distributed in each dimension of the first to-be-encoded input.

It should be noted that a to-be-encoded input (for example, the first to-be-encoded input) may be considered as being obtained by arranging a plurality of encoding units in a form of a pattern (for example, the first pattern), or may be considered as being obtained by filling a plurality of encoding units into different positions in the pattern. The pattern includes no encoding unit, and only indicates the distribution of the plurality of encoding units in each dimension of the pattern, but does not limit a quantity of bits included in each encoding unit, an arrangement manner, and a dimension of the encoding unit. Therefore, the pattern may also be considered as a model, and is used to restrict distribution of the plurality of encoding units in the to-be-encoded input.

In this specification, for ease of differentiation and description, units that are included in the pattern and distributed across one or more dimensions are denoted as pattern units, and the pattern unit may be considered as a minimum unit or a minimum granularity used to describe an arrangement form of the pattern. The pattern may indicate distribution of a plurality of pattern units across one or more dimensions. In different patterns, arrangements of pattern units are also different. Each pattern unit may be used to carry (or be filled with) one encoding unit. Each encoding unit may correspond to one pattern unit. Because the first to-be-encoded input has the first pattern, and the first to-be-encoded input includes the plurality of encoding units, the first pattern may indicate the distribution of the plurality of encoding units across the one or more dimensions.

The following describes the pattern in detail with reference to FIG. 7a to FIG. 18d. It should be understood that the first pattern may be any one of a plurality of patterns shown below, or may be obtained by splicing two or more of the plurality of patterns shown below, or may be obtained by simply transforming the pattern shown below. A specific form of the first pattern is not limited in this application.

Optionally, the plurality of pattern units in the pattern are distributed in one dimension. In other words, the pattern includes only the plurality of pattern units distributed in one dimension. In other words, projection positions of the plurality of pattern units in any other dimension perpendicular to the dimension in which the plurality of pattern units are located are the same, in other words, overlap. For example, the pattern is in a strip shape or a linear shape. If each pattern unit is considered as an element, the pattern may be a row vector or a column vector. The pattern may indicate distribution of the plurality of encoding units in the dimension.

FIG. 7a and FIG. 7b show two examples of the pattern. The pattern shown in FIG. 7(a) is a column vector including K₁ pattern units, that is, a length of the column vector is K₁. Assuming that the pattern is the first pattern, the first to-be-encoded input having the first pattern includes K₁ encoding units distributed in a vertical direction.

The pattern shown in FIG. 7b is a row vector including K₂ pattern units, that is, a length of the row vector is K₂. Assuming that the pattern is the first pattern, the first to-be-encoded input having the first pattern includes K₂ encoding units distributed in a horizontal direction.

Optionally, the plurality of pattern units in the pattern are distributed across two dimensions. In other words, the pattern includes the pattern units distributed across the two dimensions. In other words, projection positions of the plurality of pattern units in either of the two dimensions in which the plurality of pattern units are located are not completely the same, in other words, do not completely overlap. The pattern may indicate distribution of the plurality of encoding units across the two dimensions.

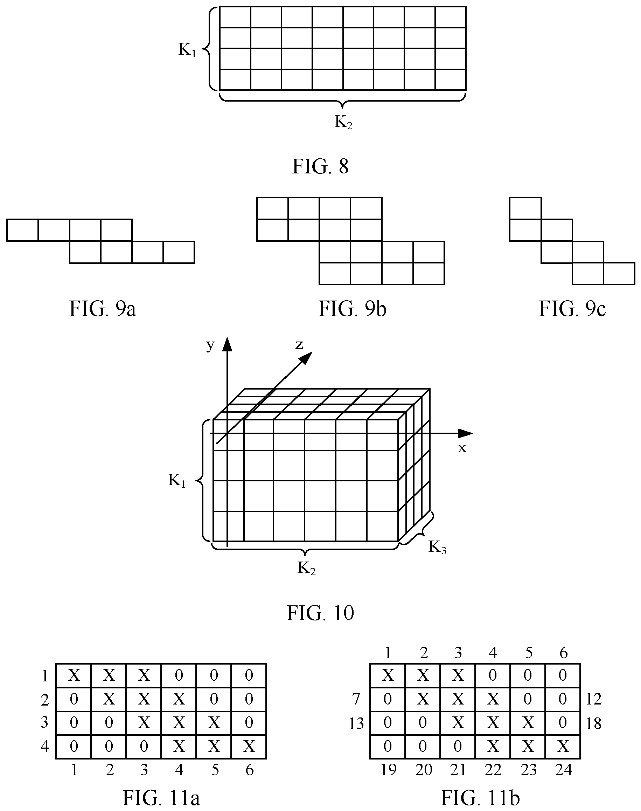

For example, the pattern is in a rectangular shape. It can be learned that the pattern shown in FIG. 8 is a regular pattern. If each pattern unit is considered as an element, the pattern may be a two-dimensional matrix. FIG. 8 shows an example of the pattern. As shown in the figure, the pattern includes K₁ row vectors and K₂ column vectors, and is a K₁×K₂ two-dimensional matrix, where both K₁ and K₂ are positive integers. In other words, the pattern includes K₁ groups of pattern units distributed in the horizontal direction, and each group of pattern units includes K₂ pattern units; or the pattern includes K₂ groups of pattern units distributed in the vertical direction, and each group of pattern units includes K₁ pattern units. Assuming that the pattern is the first pattern, the first to-be-encoded input having the first pattern includes K₁ groups of encoding units distributed in the horizontal direction, and each group of encoding units includes K₂ encoding units; or the first to-be-encoded input having the first pattern includes K₂ groups of encoding units distributed in the vertical direction, and each group of encoding units includes K₁ encoding units.

For another example, the pattern is in a step shape. In other words, the pattern may alternatively be an irregular pattern. FIG. 9a to FIG. 9c show several examples of the pattern. The pattern shown in FIG. 9a includes two row vectors. The two row vectors may be considered as being obtained by shifting one row vector in a two-dimensional matrix rightward or leftward by two pattern units relative to the other row vector, that is, an offset is two pattern units. For example, the second row in the figure is shifted rightward by two pattern units relative to the first row, or the first row in the figure is shifted leftward by two pattern units relative to the second row. Assuming that the pattern is the first pattern, the first to-be-encoded input having the first pattern includes two groups of encoding units distributed in the horizontal direction, that is, the two rows in the figure, each group of encoding units includes four encoding units, and there is an offset of two encoding units between the two groups of encoding units.

When shifting occurs, the shifting may be performed at a granularity of one row vector, or may be performed at a granularity of a plurality of row vectors. For example, the pattern shown in FIG. 9b includes four row vectors. The four row vectors may be considered as being obtained by shifting two row vectors in a two-dimensional matrix rightward or leftward by two pattern units relative to the other two row vectors. Assuming that the pattern is the first pattern, the first to-be-encoded input having the first pattern includes four groups of encoding units distributed in the horizontal direction, that is, the four rows in the figure, each group of encoding units includes four encoding units, and there is an offset of two encoding units between every two groups of encoding units.

The offset is not limited to 2. For example, in the pattern shown in FIG. 9c, an offset between every two adjacent row vectors is one pattern unit. Assuming that the pattern is the first pattern, the first to-be-encoded input having the first pattern includes four groups of encoding units distributed in the horizontal direction, that is, four rows or four columns in the figure, where each of three groups of encoding units includes two encoding units, and the other group of encoding units includes one encoding unit, and there is an offset of one encoding unit between every two encoding units.

It can be learned that the step-shaped pattern is not necessarily obtained by shifting a row or column vector in a regular pattern. For example, the pattern shown in FIG. 9c is also irregular before the shifting.

It should be understood that, for ease of understanding, when the step-shaped pattern is described above, the step-shaped pattern is described as a pattern obtained by shifting a regular pattern or an irregular pattern. This should not constitute any limitation on this application. During specific implementation, the shifting operation does not necessarily need to be performed, and the step-shaped pattern may alternatively be pre-stored.

It should be further understood that, for ease of understanding and description, distribution of pattern units in each pattern is described by using specific values in FIG. 9a to FIG. 9c. A quantity of pattern units in each dimension in the pattern is not limited in this application.

Optionally, the plurality of pattern units in the pattern are distributed across three dimensions. In other words, the pattern includes the pattern units distributed across the three dimensions. In other words, projection positions of the plurality of pattern units in any one of the three dimensions in which the plurality of pattern units are located are not completely the same, or do not completely overlap. The pattern may indicate distribution of the plurality of encoding units across the three dimensions.

For example, the pattern is in a rectangular shape. In other words, the pattern may be a regular pattern. FIG. 10 shows an example of the pattern. As shown in the figure, the pattern is a K₁×K₂×K₃ three-dimensional matrix, where K₁, K₂, and K₃ are all positive integers. The pattern includes K₂ pattern units in an x direction, includes K₁ pattern units in a y direction, and includes K₃ pattern units in a z direction. The x direction, the y direction, and the z direction are an example of the three dimensions in the pattern. It can be learned that projection positions of the plurality of pattern units in the x direction, the y direction, and the z direction are not completely the same, or do not completely overlap.

The pattern includes K₂ groups of pattern units distributed in the x direction, and each group of pattern units includes K₁×K₃ pattern units; or the pattern includes K₁ groups of pattern units distributed in the y direction, and each group of pattern units includes K₂×K₃ pattern units; or the pattern includes K₃ groups of pattern units distributed in the z direction, and each group of pattern units includes K₁×K₂ pattern units. Assuming that the pattern is the first pattern, the first to-be-encoded input having the first pattern includes K₂ groups of encoding units distributed in the x direction, and each group of encoding units includes K₁×K₃ encoding units; or the first to-be-encoded input having the first pattern includes K₁ groups of encoding units distributed in the y direction, and each group of encoding units includes K₂×K₃ encoding units; or the first to-be-encoded input having the first pattern includes K₃ groups of encoding units distributed in the z direction, and each group of encoding units includes K₁×K₂ encoding units.

It should be understood that the pattern shown in FIG. 10 is merely an example of three-dimensional distribution, and the pattern may alternatively be irregularly distributed across three dimensions. For brevity, no accompanying drawing is provided herein for illustration.

It should be further understood that the patterns shown in FIG. 7a to FIG. 10 show several possible forms of the pattern merely for ease of understanding, and should not constitute any limitation on this application. A direction of each dimension in the pattern and a quantity of pattern units distributed in the dimension are not limited in this application.

In this embodiment of this application, that the first pattern indicates the distribution of the plurality of encoding units across the one or more dimensions includes: The first pattern indicates a quantity of encoding units, in the plurality of encoding units, that are distributed in each dimension.

It may be understood that, because the plurality of encoding units are encoding units in the first to-be-encoded input, and the first to-be-encoded input is a to-be-encoded input having the first pattern, the first pattern indicates a quantity of encoding units, in the plurality of encoding units in the first to-be-encoded input, that are distributed in each dimension.

The foregoing provides a plurality of examples of the pattern with reference to a plurality of accompanying drawings. The first pattern may be any one of the plurality of patterns in the foregoing examples. In other words, the pattern may indicate a quantity of pattern units, in the plurality of pattern units, that are distributed in each dimension. It can be learned from the foregoing examples that the first pattern may be a regular pattern. In this case, the distribution of the plurality of encoding units of the first to-be-encoded input having the first pattern in each dimension may be determined by indicating a quantity of pattern units in the dimension.

In a possible implementation, the first pattern may indicate, in a form of a one-dimensional vector, a two-dimensional matrix, or an array of more dimensions, the quantity of encoding units, in the plurality of encoding units, that are distributed in each dimension. For the form of the one-dimensional vector, the two-dimensional matrix, or the array of more dimensions, refer to the foregoing examples with reference to the plurality of accompanying drawings. Details are not described.

For example, the pattern shown in FIG. 7a may indicate, by using a one-dimensional vector whose length is K₁, that a quantity of the plurality of pattern units distributed in one dimension is K₁; the pattern shown in FIG. 7b may indicate, by using a one-dimensional vector whose length is K₂, that a quantity of the plurality of pattern units distributed in one dimension is K₂; the pattern shown in FIG. 8 may indicate, by using a two-dimensional matrix whose dimension is K₁×K₂, that a quantity of pattern units, in the plurality of pattern units, that are distributed in the horizontal direction (namely, one dimension) is K₂, and a quantity of pattern units distributed in the vertical direction (namely, the other dimension) is K₁; and the pattern shown in FIG. 10 may indicate, by using a three-dimensional array whose dimension is K₁×K₂×K₃, that a quantity of pattern units, in the plurality of pattern units, that are distributed in an x-axis direction (namely, one dimension) is K₂, a quantity of pattern units distributed in a y-axis direction (namely, another dimension) is K₁, and a quantity of pattern units distributed in a z-axis direction (namely, the other dimension) is K₃. The rest may be deduced by analogy, and examples are not enumerated.

Optionally, that the first pattern indicates the distribution of the plurality of encoding units across the one or more dimensions further includes: The first pattern indicates an empty position.

It can be learned from the foregoing examples that the first pattern may alternatively be an irregular pattern. In other words, the plurality of pattern units in the first pattern may include at least one pattern unit used to carry an encoding unit and at least one pattern unit not used to carry an encoding unit. In other words, the first pattern may include at least one blank pattern unit.

For an irregular pattern, in addition to indicating a quantity of pattern units distributed in each dimension, the first pattern may further indicate an empty position, so that the distribution of the plurality of encoding units of the first to-be-encoded input having the first pattern in each dimension can be determined.

Because the first pattern may be any one of the plurality of patterns in the foregoing examples, it may also be said that the pattern may indicate an empty position.

In a possible implementation, the first pattern may indicate the empty position in a form of a one-dimensional vector, a two-dimensional matrix, or an array of more dimensions.

FIG. 11a and FIG. 11b show other examples of the pattern. Patterns shown in FIG. 11a and FIG. 11b are the same, and include at least one pattern unit used to carry an encoding unit and at least one pattern unit not used to carry an encoding unit, where in the figure, the pattern unit that may be used to carry an encoding unit is represented by "X", and the pattern unit that is not used to carry an encoding unit is represented by "0". The pattern may indicate the empty position by filling "0" into the empty position.

In another implementation, when indicating the empty position, the first pattern may specifically indicate a row number and a column number of a blank pattern unit in the pattern, or indicate a number of the pattern unit in the pattern.

As shown in FIG. 11a, rows are sequentially numbered from 1 in a top-to-bottom order, and columns are sequentially numbered from 1 in a left-to-right order, to obtain numbers of the rows and the columns that are shown in the figure. Based on the row numbers and the column numbers, the pattern may indicate that empty positions are: {column 1, rows 2 to 4}, {column 2, rows 3 and 4}, {column 3, row 4}, {column 4, row 1}, {column 5, rows 1 and 2}, and {column 6, rows 1 to 3}.

As shown in FIG. 11b, if pattern units are numbered in an arrangement manner of first row then column, numbers of the pattern units that are shown in the figure may be obtained. Due to limited space, the numbers of all the pattern units are not completely shown in the figure, but the numbers of the other pattern units may be deduced from the numbers of some pattern units shown in the figure. Based on the numbers of the pattern units, the pattern may indicate that empty positions are: {pattern units respectively numbered 4, 5, 6, 7, 11, 12, 13, 14, 18, 19, 20, and 21}.

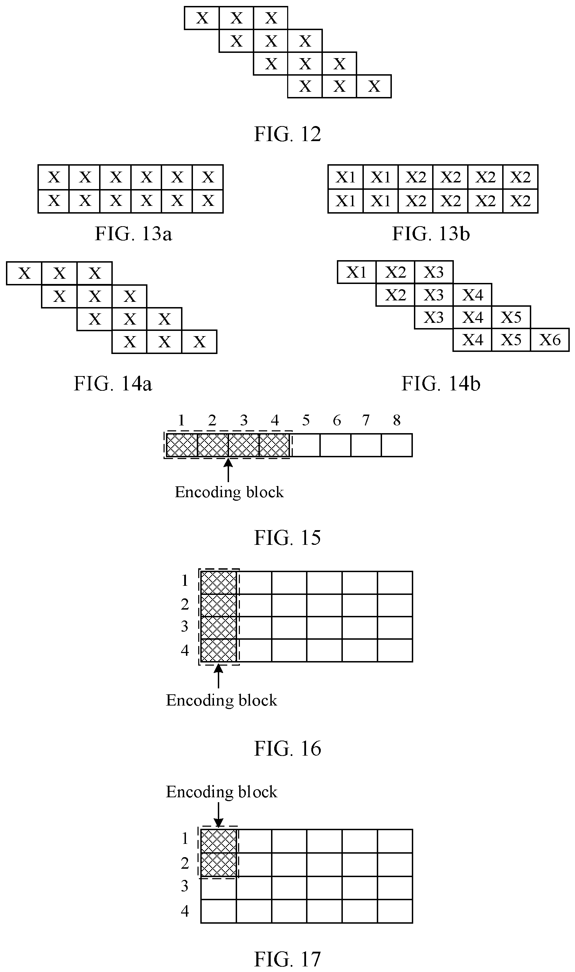

It should be noted that, the pattern unit that is not used to carry the encoding unit, to be specific, information or data carried in the pattern unit does not need to be encoded. Therefore, the pattern shown in FIG. 11a and FIG. 11b may also be understood as a pattern equivalent to that in FIG. 12. In other words, in an irregular pattern similar to those shown in FIG. 9a to FIG. 9c, a position at which no pattern unit is placed may also be understood as an empty position. Therefore, for an indication of the empty position in the irregular pattern, the empty position may also be determined and indicated by converting the irregular pattern into a regular pattern. For example, in the pattern shown in FIG. 9a, empty positions are located in {row 1, columns 5 and 6} and {row 2, columns 1 and 2}. The pattern may indicate that the empty positions are: {row 1, columns 5 and 6} and {row 2, columns 1 and 2}. By analogy, for brevity, no examples are provided for description.

In any one of the patterns shown in FIG. 7a to FIG. 12 above, quantities of bits included in the encoding units mapped to the pattern units may be the same, or may be different. In this specification, for ease of description, the quantity of bits included in the encoding unit is denoted as a size of the encoding unit. Because the first pattern may be one of the plurality of patterns listed above, in the first to-be-encoded unit having the first pattern, different encoding units include a same quantity of bits, or at least two encoding units include different quantities of bits.

Examples are provided below with reference to FIG. 13a and FIG. 13b, and FIG. 14a and FIG. 14b.

FIG. 13a and FIG. 13b, and FIG. 14a and FIG. 14b show two examples of to-be-encoded inputs having different patterns. For ease of differentiation and understanding, in the figures, "X" or "Xi" represents a size of one encoding unit, where i may be any integer, and different values of i indicate different values of Xi.

The pattern shown in FIG. 13a is in a rectangle shape, and the pattern is a regular pattern. Sizes of a plurality of encoding units in the to-be-encoded input having the pattern are the same, and are all represented by "X" in the figure. For example, the size of each encoding unit is 4×4 dimensions.

FIG. 13b is different from FIG. 13a. Although the pattern shown in FIG. 13b is in a rectangle shape, sizes of a plurality of encoding units in to-be-encoded input having the pattern may be different. As shown in the figure, the sizes of the encoding units in the left two columns are X1, and the sizes of the encoding units in the right four columns are X2, where X1 is different from X2. For example, the sizes of the encoding units in the left two columns are 4×2 dimensions, and the sizes of the encoding units in the right four columns are 4×4 dimensions.

The pattern shown in FIG. 14a is in a step shape, and the pattern is an irregular pattern. Sizes of different encoding units in the to-be-encoded input having the pattern are the same, and are all represented by "X" in the figure. Different from FIG. 14a, in the to-be-encoded input having the pattern shown in FIG. 14b, sizes of a plurality of encoding units may be different. The to-be-encoded input includes encoding units of six different sizes, which are represented by X1 to X6 in the figure, and X1, X2, X3, X4, X5, and X6 are different from each other.

It should be understood that, for ease of understanding, FIG. 13a and FIG. 13b, and FIG. 14a and FIG. 14b are used as examples to show to-be-encoded input including a plurality of encoding units of different sizes. Actually, a to-be-encoded input having any one of the patterns shown in FIG. 7a to FIG. 12 may include encoding units of a same size, or may include encoding units of different sizes. For brevity, examples are not listed.

Optionally, the first pattern further indicates patterns (or structures) of encoding units distributed in each dimension.

As described above, the plurality of encoding units in the first to-be-encoded input may be encoding units of different sizes, and the first pattern may further indicate sizes of the encoding units distributed in each dimension. Actually, encoding units of a same size may have differences such as different dimensions and different arrangement manners. Based on this, the first pattern may further indicate the patterns of the encoding units in each dimension. Encoding units of different patterns are different in at least one of the following: a dimension, a quantity of bits included in each dimension, or an arrangement manner of one or more bits in the encoding unit. In the first to-be-encoded input having the first pattern, a plurality of encoding units distributed in a same dimension may be encoding units of a same pattern, or may be encoding units of different patterns. This is not limited in this application.

For example, the first pattern may indicate encoding units of different patterns by using different indexes, and an encoding unit of each pattern may be identified by using one index. When the first pattern provides indications by using a one-dimensional vector, a two-dimensional matrix, or an array of more dimensions, the first pattern may indicate a pattern of an encoding unit at the position by indicating one index in each element. For example, "Xi" in FIG. 13b and FIG. 14b may be considered as an example of the foregoing indexes indicating encoding units of different patterns.

Because quantities of bits included in different encoding units in the to-be-encoded input are not limited, the quantities of bits in different encoding units may be flexibly configured based on different data transmission amounts and different service requirements, so that a code rate can be controlled more accurately, and decoding performance can be improved.

Optionally, the pattern may further indicate an encoding position, and an encoding unit located at the encoding position in the to-be-encoded input having the pattern is a unit to be encoded. It may be understood that there may be one or more units to be encoded. For ease of description, the one or more units to be encoded are referred to as encoding blocks herein. The encoding block may include one or more pattern units, and encoding units carried in the one or more pattern units in the encoding block are units to be encoded or units needing to be encoded. Therefore, the pattern may indicate an encoding position, or the pattern may indicate a position of the encoding block. By indicating the encoding position (or the position of the encoding block), specific positions in the to-be-encoded input may be determined, where encoding units at the positions need to be encoded.

With reference to the accompanying drawings, the following describes the encoding block and a method for indicating the encoding position by the pattern. For ease of differentiation and description, pattern units in encoding blocks are shown in the figures by using blocks with filling patterns.

In a pattern with one-dimensional distribution, an encoding block may include one or more pattern units in the pattern. FIG. 15 is an example of the encoding block. If each pattern unit is considered as an element, a pattern shown in FIG. 15 is a row vector. The encoding block includes some pattern units in the pattern. As shown in the figure, the pattern includes eight pattern units, and the encoding block includes four pattern units located on a left side.

For example, a possible implementation in which the pattern indicates the encoding block is to indicate a number of a pattern unit included in the encoding block. Assuming that the pattern units in the pattern are sequentially numbered from 1 in a left-to-right order, in the pattern shown in FIG. 15, the pattern units included in the encoding block are four pattern units numbered 1 to 4. When indicating a position of the encoding block, the pattern may specifically indicate: {pattern units numbered 1 to 4}.

It should be understood that the numbers of the pattern units in the pattern may be determined according to a preset rule. For example, the preset rule may include one or more of the following: sequentially numbering in the left-to-right order, sequentially numbering in a top-to-bottom order, sequentially numbering in a front-to-back order, or a start value of numbering. The start value may be 1, or may be 0, or may be any integer value, and start values in all directions may be the same or may be different. This is not limited in this application.

In a pattern with two-dimensional distribution, an encoding block may also have two-dimensional distribution. The encoding block may include one or more rows and/or one or more columns in the pattern; or the encoding block may include some or all of pattern units in each of one or more rows in the pattern, and/or some or all of pattern units in each of one or more columns in the pattern. For ease of differentiation and description, a row in which the encoding block is located is denoted as an encoding row, and a column in which the encoding block is located is denoted as an encoding column. That is, the encoding block is located in the encoding row and/or the encoding column.

If the encoding block includes one or more rows and/or one or more columns in the pattern, it may be considered that the encoding block includes an encoding row and/or an encoding column. A possible implementation in which the pattern indicates a position of the encoding block is to indicate a row number of the encoding row and/or a column number of the encoding column.

FIG. 16 is another example of the encoding block. The encoding block shown in FIG. 16 includes a part of columns in the pattern, or includes all pattern units in the part of the columns in the pattern. As shown in the figure, the pattern includes six columns, and the encoding block includes one leftmost column. Assuming that the columns in the pattern are sequentially numbered from 1 in a left-to-right order, in the pattern shown in FIG. 16, a column number of the encoding column included in the encoding block is 1. When indicating a position of the encoding block, the pattern may specifically indicate: {column numbered 1}.

If the encoding block includes a part or all of pattern units in each of one or more rows in the pattern, and/or a part or all of pattern units in each of one or more columns in the pattern, a possible implementation in which the pattern indicates a position of the encoding block is to indicate a row number of an encoding row in which the pattern unit in the encoding block is located and a number of the pattern unit in the encoding row, and/or a column number of an encoding column in which the pattern unit in the encoding block is located and a number of the pattern unit in the encoding column.

FIG. 17 is still another example of the encoding block. The encoding block shown in FIG. 17 includes a part of pattern units in a part of columns of the pattern. As shown in the figure, the encoding block is located in two upper pattern units in one leftmost column. Assuming that columns in the pattern are sequentially numbered from 1 in a left-to-right order, and pattern units are sequentially numbered from 1 in a top-to-bottom order, in the pattern shown in FIG. 17, the pattern units included in the encoding block are two pattern units numbered 1 and 2 in a column numbered 1. When indicating a position of the encoding block, the pattern may specifically indicate: {column numbered 1, pattern units numbered 1 and 2}.

In another implementation, the pattern may alternatively indicate a number of each pattern unit in the encoding block in the pattern. For details, refer to the foregoing example of the pattern with one-dimensional distribution. Details are not described again.

In conclusion, in a pattern that with two-dimensional distribution, when indicating a position of an encoding block, the pattern may specifically indicate one or more of the following: a row number of an encoding row, a column number of an encoding column, a number of a pattern unit of the encoding block in the encoding row, a number of the pattern unit of the encoding block in the encoding column, or a number of the pattern unit of the encoding block in the pattern.

It should be understood that a number of a row or a column in the pattern may alternatively be determined according to a preset rule, and a number of a pattern unit in each row or column may also be determined according to a preset rule. For example, the preset rule may include one or more of the following: sequentially numbering in the left-to-right order, sequentially numbering in a top-to-bottom order, sequentially numbering in a front-to-back order, or a start value of numbering. The start value may be 1, or may be 0, or may be any integer value, and start values of numbers of different rows and/or different columns may be the same or may be different. This is not limited in this application.

In a pattern with three-dimensional distribution, a group of planes may be determined based on every two dimensions, and three groups of planes may be determined based on the three dimensions. Each group of planes may include one plane or a plurality of planes that are parallel to each other. An encoding block may exist in at least one of the three groups of planes. Similar to the pattern with two-dimensional distribution, in each plane in which the encoding block is located, the encoding block may include an encoding row and/or an encoding column, or the encoding block may include a part or all of pattern units in each of one or more rows in the pattern, and/or a part or all of pattern units in each of one or more columns in the pattern.

A possible implementation in which the pattern indicates a position of the encoding block is to indicate one or more of the following: a number of the plane in which the encoding block is located, a row number of the encoding row in the plane, a column number of an encoding column in the plane, a number of a pattern unit of the encoding block in the encoding row, or a number of the pattern unit of the encoding block in the encoding column.

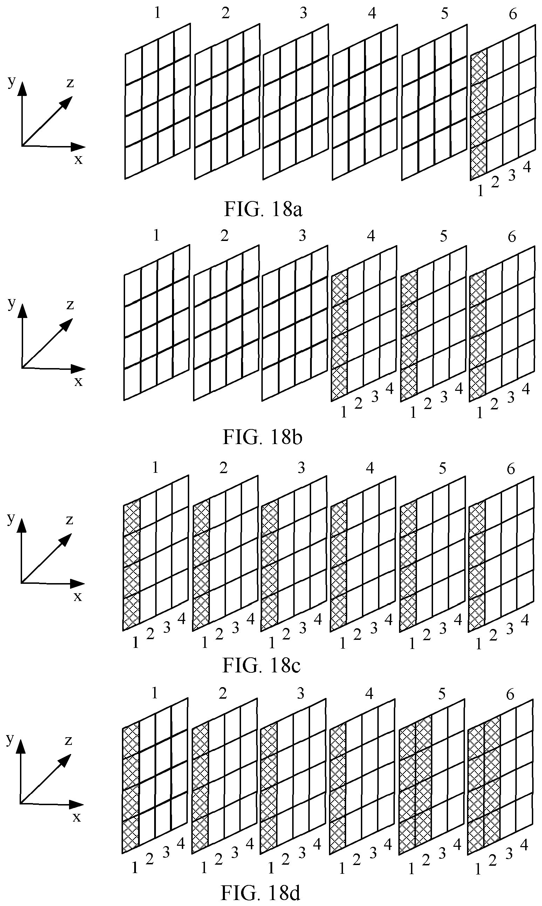

FIG. 18a, FIG. 18b, FIG. 18c, and FIG. 18d are other examples of the encoding block. The pattern shown in FIG. 18 is in a cuboid shape. For specific descriptions, refer to the foregoing descriptions with reference to FIG. 10. For ease of understanding and description, in FIG. 18a to FIG. 18d, the pattern is split into a plurality of planes, and the plurality of planes are a group of planes determined based on a y-axis and a z-axis.

The encoding block shown in FIG. 18a is located in one plane determined based on the y-axis and the z-axis in the pattern. Along the z-axis direction, the encoding block includes one leftmost column located in the plane. Assuming that planes in the pattern are sequentially numbered from 1 along the x-axis direction, and columns are sequentially numbered from 1 along the z-axis direction, in the pattern shown in FIG. 18a, the encoding block is a column numbered 1 in a plane that is numbered 6 along the x-axis direction. When the pattern indicates the position of the encoding block, the pattern may specifically indicate: {plane numbered 6 along the x-axis direction, column numbered 1 along the z-axis direction}.

Alternatively, in another implementation, the encoding block shown in FIG. 18a is also located in one plane determined based on an x-axis and a y-axis in the pattern. Along the x-axis direction, the encoding block includes one rightmost column located in the plane. Assuming that planes in the pattern are sequentially numbered from 1 along the z-axis direction, and columns are sequentially numbered from 1 along the x-axis direction, in the pattern shown in FIG. 18a, the encoding block is a column numbered 6 in a plane that is numbered 1 along the z-axis direction. When the pattern indicates the position of the encoding block, the pattern may specifically indicate: {plane numbered 1 along the z-axis direction, column numbered 6 along the x-axis direction}.

The encoding block shown in FIG. 18b is located in three planes determined based on the y-axis and the z-axis in the pattern. Along the z-axis direction, the encoding block is located in one leftmost column in the three planes. Assuming that planes in the pattern are sequentially numbered from 1 along the x-axis direction, and columns are sequentially numbered from 1 along the z-axis direction, in the pattern shown in FIG. 18b, encoding units included in the encoding block are located in a column numbered 1 in each of three planes that are numbered 4 to 6. When the pattern indicates the position of the encoding block, the pattern may specifically indicate: {planes numbered 4 to 6 along the x-axis direction, column numbered 1}.

Alternatively, in another implementation, the encoding block shown in FIG. 18b is also located in one plane determined based on an x-axis and a y-axis in the pattern. Along the x-axis direction, the encoding block includes three rightmost columns located in the plane. Assuming that planes in the pattern are sequentially numbered from 1 along the z-axis direction, and columns are sequentially numbered from 1 along the x-axis direction, in the pattern shown in FIG. 18b, the encoding block are three columns numbered 4 to 6 in a plane that is numbered 1 along the z-axis direction. When the pattern indicates the position of the encoding block, the pattern may specifically indicate: {plane numbered 1 along the z-axis direction, columns numbered 4 to 6 along the x-axis direction}.

The encoding block shown in FIG. 18c is located in six planes determined based on a y-axis and a z-axis in the pattern, or the encoding block is located in one plane determined based on an x-axis and the y-axis in the pattern. Based on the foregoing same manner, it follows that: When the pattern indicates the position of the encoding block, the pattern may specifically indicate: {planes numbered 1 to 6 along the x-axis direction, column numbered 1 along the z-axis direction}, or {plane numbered 1 along the z-axis direction}.

The encoding block shown in FIG. 18d is located in six planes determined based on a y-axis and a z-axis in the pattern, or the encoding block is located in two planes determined based on an x-axis and the y-axis in the pattern. Based on the foregoing same manner, it may be obtained: When the pattern indicates the position of the encoding block, the pattern may specifically indicate: {planes numbered 1 to 3 along the x-axis direction, column numbered 1 along the z-axis direction; and planes numbered 4 to 6 along the x-axis direction, columns numbered 1 and 2 along the z-axis direction}, or {plane numbered 1 along the z-axis direction, columns numbered 1 to 6 along the x-axis direction; and plane numbered 2 along the z-axis direction, columns numbered 5 and 6 along the x-axis direction}.

In another implementation, the pattern may also indicate a number of each pattern unit of the encoding block in the pattern, or indicate a number of a plane in which each pattern unit in the encoding block is located and a number of the pattern unit in the plane. For a method for indicating the number of the pattern unit, refer to the foregoing example of the pattern with in one-dimensional distribution. Details are not described again.

In conclusion, in a pattern with three-dimensional distribution, when the pattern indicates a position of an encoding block, the pattern may specifically indicate one or more of the following: a number of a plane in which the encoding block is located, a number of a pattern unit of the encoding block in the plane, a row number of an encoding row in the plane, a column number of an encoding column in the plane, a row number of the encoding row in the pattern, a column number of the encoding column in the pattern, a number of the pattern unit of the encoding block in the encoding row, a number of the pattern unit of the encoding block in the encoding column, or a number of the pattern unit of the encoding block in the pattern.

The foregoing describes, with reference to a plurality of accompanying drawings, several possible indication manners in which the pattern indicates the position of the encoding block. This application includes the indication manners but is not limited thereto. Based on a same concept, these indication manners may be further used in a pattern of more dimensions to indicate a position of an encoding block. In addition, the indication manners enumerated above are merely possible implementations. For example, pattern units in a pattern may be sequentially numbered according to a preset rule without considering dimensions of the pattern, to indicate a number of each pattern unit for the pattern units included in an encoding block. For brevity, examples are not described herein.

It may be understood that the pattern may include an encoding block, and may further include a non-encoding block, where the non-encoding block may include one or more pattern units. Encoding units carried in the one or more pattern units in the non-encoding block are encoding units that are not to be encoded, or encoding units that do not need to be encoded. Therefore, when the pattern indicates a position of the encoding block, the pattern may directly indicate the position of the encoding block, or may indicate the position of the encoding block by indicating a position of the non-encoding block. This is not limited in this application. The position of the non-encoding block may also be referred to as a non-encoding position. In other words, the pattern may also indicate the encoding position by indicating the non-encoding position.

The encoding position is indicated, so that not all encoding units in the first to-be-encoded input participate in encoding. Therefore, a quantity of redundant bits can be more flexibly controlled, that is, the code rate can be more flexibly controlled, thereby improving the decoding performance.

The foregoing shows a plurality of possible forms of the pattern with reference to FIG. 7a to FIG. 18d. This application includes the possible forms but is not limited thereto. In this embodiment of this application, the first pattern may be one of the plurality of patterns shown with reference to FIG. 7a to FIG. 18d. In the first to-be-encoded input having the first pattern, quantities of bits included in different encoding units may be the same; or in the first to-be-encoded input having the first pattern, quantities of bits included in at least two encoding units may be different.

The first to-be-encoded input is data that is to be input to the encoder for encoding, that is, to-be-encoded data, to-be-encoded bits, to-be-encoded information bits, to-be-encoded input data, to-be-encoded input bits, or the like. In this application, the first to-be-encoded input has the first pattern, and the first pattern indicates the distribution of the plurality of encoding units across the one or more dimensions. Therefore, data that is about to be input into the encoder is distributed across one or more dimensions, and may be presented as a one-dimensional vector, a two-dimensional matrix, or an array of more dimensions. This is not limited in this application. In addition, regardless of the one-dimensional vector, the two-dimensional matrix, or the array of more dimensions, the first to-be-encoded input is input into the encoder at a granularity of an encoding unit.

Optionally, step 520 specifically includes:
arranging a plurality of bits of the first bit sequence according to an arrangement rule, to obtain a plurality of encoding units; and
processing the plurality of encoding units to obtain the first to-be-encoded input having the first pattern.

That the arrangement rule indicates the pattern of each encoding unit may specifically indicate: a dimension of the encoding unit, a quantity of bits included in the encoding unit in each dimension (or a size of the encoding unit in each dimension), and an arrangement manner of one or more bits included in the encoding unit.

The first communication apparatus may first arrange the plurality of bits of the first bit sequence into the plurality of encoding units according to the arrangement rule, and process the plurality of encoding units at the granularity of the encoding unit, to obtain the first to-be-encoded input having the first pattern.

In a possible implementation, the processing the plurality of encoding units includes: arranging the plurality of encoding units based on the first pattern. To be specific, the plurality of encoding units are mapped to (or filled into) the plurality of pattern units based on the distribution that is of the plurality of pattern units in each dimension and indicated by the first pattern.

The pattern shown in FIG. 7a is used as an example. The first bit sequence is arranged to obtain K₁ encoding units (namely, an example of the plurality of encoding units), which are denoted as e₁, e₂, e₃, ..., and e_{K1}. The K₁ encoding units are mapped to the plurality of pattern units according to a preset mapping rule, to obtain the first to-be-encoded input having the first pattern. For example, if the mapping rule indicates that the plurality of encoding units are mapped sequentially in a top-to-bottom order, e₁ may be mapped to the 1^{st} pattern unit counted from top to bottom, e₂ may be mapped to the 2^{nd} pattern unit counted from top to bottom, ..., and e_{K1} may be mapped to a K₁^{th} pattern unit counted from top to bottom.

In another possible implementation, the processing the plurality of encoding units includes: generating at least one copy of a first encoding unit in the plurality of encoding units; and arranging the plurality of encoding units and the at least one copy based on the first pattern. To be specific, the plurality of encoding units and the at least one copy are mapped to the plurality of pattern units based on the distribution that is of the plurality of encoding units in each dimension and indicated by the first pattern.

The first encoding unit may be one or more of the plurality of encoding units. This is not limited in this application. An information bit in the first encoding unit may be directly used as a check bit. It may be understood that, because the first encoding unit includes one or more bits in the first bit sequence, the copy of the first encoding unit also includes the one or more bits in the first bit sequence. In other words, each encoding unit mapped to the first pattern includes the one or more bits in the first bit sequence.

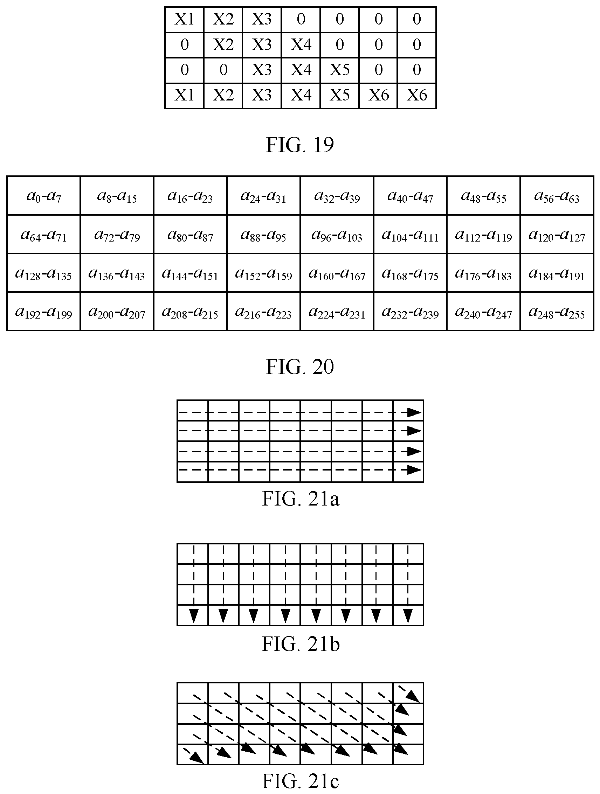

The pattern shown in FIG. 19 is used as an example. The first bit sequence is arranged to obtain six encoding units (namely, an example of the plurality of encoding units), which are denoted as e₁, e₂, ..., and e₆. At least one copy is replicated for each of first five of the six encoding units. For example, one copy is replicated for e₁, two copies are replicated for e₂, three copies are replicated for e₃, two copies are replicated for e₄, and one copy is replicated for e₅. In this way, 15 encoding units may be obtained. Then, the 15 encoding units are mapped to the plurality of pattern units based on the first pattern.

Optionally, the first pattern further indicates encoding units at different positions.

As described above, because one or more of the plurality of encoding units included in the first to-be-encoded input have one or more copies, whether each encoding unit needs to be replicated, a quantity of to-be-replicated copies, and a position of the copy in the first pattern may also be indicated by the first pattern. For example, encoding units obtained by arranging different bits may be identified by different indexes. In the first pattern, indicating indexes at different positions may indicate encoding units to be filled into different positions. For example, "Xi" shown in FIG. 19 is an example of the index of the encoding unit. That is, X₁ corresponds to e₁, X₂ corresponds to e₂, X₃ corresponds to e₃, X₄ corresponds to e₄, X₅ corresponds to e₅, and X₆ corresponds to e₆.

In the first to-be-encoded input, the first encoding unit and the copy of the first encoding unit are mapped to different positions, so that bits in a same encoding unit can participate in more times of encoding, that is, a plurality of pieces of same data are encoded. Therefore, the decoding performance can be improved by using diversity effects.

It should be understood that a manner of processing the plurality of bit sequences in the first bit sequence to obtain the first to-be-encoded input having the first pattern is not limited to the foregoing descriptions. The first communication apparatus may map each encoding unit to each pattern unit of the first pattern while constructing the encoding unit. That is, a process of obtaining the encoding unit and a process of obtaining the first to-be-encoded input are synchronously performed.

Step 530: Encode one or more encoding units in the first to-be-encoded input, to obtain a second bit sequence.

In a possible case, the first pattern does not indicate an encoding position, or the first pattern does not indicate a non-encoding position, or the first pattern indicates that positions of all pattern units are all encoding positions, or the first pattern indicates that all pattern units belong to an encoding block, or the first pattern indicates that all pattern units participate in encoding. In this case, each encoding unit in the first to-be-encoded input may be encoded. In other words, the first communication apparatus (or the encoder) may encode all encoding units of the first to-be-encoded input.

In another possible case, the first pattern indicates an encoding position, or the first pattern indicates a non-encoding position, or the first pattern indicates that a position of a part of pattern units is an encoding position (or a non-encoding position), or the first pattern indicates that a part of the pattern units belong to an encoding block (or a non-encoding block), or the first pattern indicates that a part of the pattern units participate in encoding. In this case, an encoding unit at the encoding position may be encoded, and an encoding unit at the non-encoding position is not encoded. In other words, the first communication apparatus (or the encoder) may encode a part or all of the encoding units of the first to-be-encoded input.

As described above, the first pattern may be in one-dimensional distribution, or may be in two-dimensional or more-dimensional distribution. When encoding is performed on each unit to be encoded in the first to-be-encoded input having the first pattern, encoding may be performed in different dimensions, to obtain a parallel processing effect.

Optionally, step 530 specifically includes: performing component encoding on the one or more encoding units in the first to-be-encoded input, to obtain the second bit sequence.

In this application, the component encoding means that a plurality of to-be-encoded bits are decomposed into one or more dimensions at a granularity of an encoding unit, and are respectively encoded in one or more directions. A process of decomposing the plurality of to-be-encoded bits into the one or more dimensions at the granularity of the encoding unit is the foregoing process of obtaining the first to-be-encoded input. Performing encoding separately in the one or more directions means that an encoding unit in each direction is used as a bit that participates in encoding, and is input into the encoder for encoding. In other words, each time of encoding is performed on a bit in an encoding unit in a same direction.

It should be noted that, although the first to-be-encoded input having the first pattern is obtained at the granularity of the encoding unit in step 520, the encoding process is still performed at a granularity of a bit. In other words, one or more bits in each encoding unit may be restored to a one-dimensional vector before encoding, or before being input to the encoder. A process of restoring the bits to a one-dimensional vector is an inverse process of arranging the bits into encoding units according to the arrangement rule in step 520. Details are not described herein again. It may be understood that, if the encoding unit is originally a one-dimensional vector, the foregoing operation of restoring the bits to a one-dimensional vector may not be performed.

It can be learned from the plurality of patterns shown above with reference to the accompanying drawings that, in the first to-be-encoded input having the first pattern, a plurality of encoding units may be distributed across one or more dimensions. The encoder may encode an encoding unit distributed in each dimension, or may encode an encoding unit located in another dimension. For ease of differentiation and description, in this specification, a direction in which one or more encoding units participating in same encoding are located is referred to as an encoding direction. One or more directions in the foregoing one or more directions in which encoding are separately performed are one or more encoding directions.

In this embodiment of this application, the one or more encoding directions may include a direction corresponding to at least one of the one or more dimensions, or may include another direction. Optionally, the one or more encoding directions include one or more of the following plurality of directions: a direction corresponding to each of the one or more dimensions that are indicated by the first pattern and in which the plurality of encoding units are distributed, a horizontal direction in a two-dimensional plane determined based on any two of the plurality of dimensions of the first pattern, a vertical direction in the two-dimensional plane determined based on the any two of the plurality of dimensions of the first pattern, or a diagonal direction in the two-dimensional plane determined based on the any two of the plurality of dimensions of the first pattern.

Because one or more encoding units in the first to-be-encoded input are distributed in each encoding direction, encoding units participating in encoding in different encoding directions may be different, to be specific, input bits participating in encoding in different encoding directions may be different, or input bits input to the encoder in different encoding directions may be different, or objects to be encoded in different encoding directions may be different.

Optionally, the performing component encoding on the one or more encoding units in the first to-be-encoded input may specifically include: obtaining one or more groups of input bits from the one or more encoding units in the first to-be-encoded input based on the one or more encoding directions; and separately encoding the one or more groups of input bits.

The one or more encoding units in the first to-be-encoded input may be encoding units located at encoding positions of the first to-be-encoded input. The one or more groups of input bits are determined from the encoding units at the encoding positions of the first to-be-encoded input based on the one or more encoding directions. Each group of input bits may include a bit in one or more encoding units distributed in a same encoding direction. Therefore, each group of input bits may include one or more bits. It should be noted that there may be one or more groups of bit inputs in a same encoding direction. A quantity of groups of bit inputs in each encoding direction is not limited in this application.

With reference to different patterns, the following describes, by using examples, the encoding direction and the one or more groups of bit inputs in each encoding direction.

It is assumed that the first pattern has one-dimensional distribution, that is, the plurality of encoding units indicated by the first pattern are distributed in one dimension, that is, the horizontal direction or the vertical direction. The encoding direction may be the same as a dimension in which the encoding units are located.

For example, the first pattern is the pattern shown in FIG. 7a, and the encoding direction is the vertical direction. In this case, a group of input bits may be determined. For another example, the first pattern is the pattern shown in FIG. 7b, and the encoding direction is the horizontal direction. In this case, a group of input bits may be determined.

It is assumed that the first pattern has two-dimensional distribution, that is, the plurality of encoding units indicated by the first pattern are distributed across two dimensions, that is, the horizontal direction and the vertical direction. The encoding direction may be one or more of the following plurality of directions: the horizontal direction, the vertical direction, or a diagonal direction.

For example, the first pattern is the pattern shown in FIG. 8, and the encoding direction is the horizontal direction and the vertical direction. In this case, a plurality of groups of input bits may be determined, that is, K₁ groups of input bits in the horizontal direction and K₂ groups of input bits in the vertical direction. For another example, the first pattern is the pattern shown in FIG. 8, and the encoding direction is the horizontal direction, the vertical direction, and the diagonal direction. In this case, a plurality of groups of input bits may be determined as follows: K₁ groups of input bits in the horizontal direction, K₂ groups of input bits in the vertical direction, and several groups of input bits in the diagonal direction (11 groups are shown in the figure, namely, K₁+K₂-1).

It is assumed that the first pattern has three-dimensional distribution, and the plurality of encoded bits indicated by the first pattern are distributed across three dimensions, that is, an x-axis direction, a y-axis direction, and a z-axis direction. The encoding direction may be one or more of the following plurality of directions: the x-axis direction (that is, a horizontal direction in a plane determined based on the x-axis and the y-axis, or a vertical direction in a plane determined based on the x-axis and the z-axis), the y-axis direction (that is, a vertical direction in the plane determined based on the x-axis and the y-axis, or a vertical direction in a plane determined based on the y-axis and the z-axis), the z-axis direction (that is, a horizontal direction in the plane determined based on the x-axis and the z-axis, or the horizontal direction in the plane determined based on the y-axis and the z-axis), a diagonal direction in the plane determined based on the x-axis and the y-axis, a diagonal direction in the plane determined based on the y-axis and the z-axis, and a diagonal direction in the plane determined based on the x-axis and the z-axis.

For example, the first pattern is the pattern shown in FIG. 10, and the encoding direction is the x-axis direction and the y-axis direction. In this case, a plurality of groups of input bits may be determined as follows: K₁×K₃ groups of input bits in the x-axis direction, and K₂×K₃ groups of input bits in the y-axis direction. For another example, the first pattern is the pattern shown in FIG. 10, and the encoding direction is the x-axis direction and the z-axis direction. In this case, a plurality of groups of input bits may be determined as follows: K₁×K₃ groups of input bits in the x-axis direction, and K₁×K₂ groups of input bits in the z-axis direction.

Further, the separately encoding the one or more groups of input bits may specifically include: encoding each of the one or more groups of input bits in an encoding order.

The encoding order may indicate an order in which bits in each group of input bits are encoded. Because encoding may be implemented by the encoder, it may also be referred to as that the encoding order may indicate an order in which each group of input bits are input into the encoder. As described above, the encoding process is performed at a granularity of a bit. Because each group of input bits is carried in the one or more encoding units, an order in which each group of input bits are input into the encoder may be controlled by controlling an order in which the encoding units are input into the encoder. One group of input bits may be carried in a plurality of encoding units, and an order in which the plurality of encoding units are input into the encoder may be determined based on the encoding order. Therefore, it may also be referred to as that the encoding order indicates an order in which a plurality of encoding units that are used to carry each group of input bits are input into the encoder.

For example, the encoding order may be the same as an ascending order of numbers of the pattern units, or may be opposite to the ascending order of the numbers of the pattern units, or may be a left-to-right order in the horizontal encoding direction, or may be a top-to-bottom order in the vertical encoding direction, or may be an order from top left to bottom right in the diagonal encoding direction. This is not limited in this application.

In an example, it is assumed that the first pattern is the pattern shown in FIG. 8, and the dimension K₁×K₂ of the first pattern may be specifically 4×8. A dimension of each encoding unit is 1×8, that is, a one-dimensional vector with a length of 8. In this case, it can be learned that eight encoding units in each row include 64 bits, and four encoding units in each column include 32 bits. It is assumed that 256 to-be-encoded bits are denoted as *a*₀, *a*₁, ... , *a*₂₅₅ . Bits in each encoding unit are arranged in a left-to-right order, and the plurality of encoding units are arranged in the first pattern in a row-first column-then order, to obtain distribution of bits of the encoding units in the first to-be-encoded input, as shown in FIG. 20. FIG. 20 is a diagram of the first to-be-encoded input. Details are as follows:
64 bits (that is, a group of input bits in the horizontal direction) in the eight encoding units in a row 1 are respectively as follows: [[*a*₀ *a*₁ ... *a*₇][*a*₈ *a*₉ ... *a*₁₅] ... [*a*₅₆ *a*₅₇ ... *a*₆₃]];
64 bits (that is, another group of input bits in the horizontal direction) in the eight encoding units in a row 2 are respectively as follows: [[*a*₆₄ *a*₆₅ ... *a*₇₁][*a*₇₂ *a*₇₃ ... *a*₇₉] ... [*a*₁₂₀ *a*₁₂₁ ... *a*₁₂₇]];
64 bits (that is, still another group of input bits in the horizontal direction) in the eight encoding units in a row 3 are respectively as follows: [[*a*₁₂₈ *a*₁₂₉ ... *a*₁₃₅][*a*₁₃₆ *a*₁₃₇ ... *a*₁₄₃] ... [*a*₁₈₄ *a*₁₈₅ ... *a*₁₉₁]];
64 bits (that is, yet another group of input bits in the horizontal direction) in the eight encoding units in a row 4 are respectively as follows: [[*a*₁₉₂ *a*₁₉₃ ... *a*₁₉₉][*a*₂₀₀ *a*₂₀₁ ... *a*₂₀₇] ... [*a*₂₄₈ *a*₂₄₉ ... *a*₂₅₅]];
32 bits (that is, a group of input bits in the vertical direction) in the four encoding units in a column 1 are respectively as follows: [[*a*₀ *a*₁ ... *a*₇][*a*₆₄ *a*₆₅ ... *a*₇₁][*a*₁₂₈ *a*₁₂₉ ... *a*₁₃₅][*a*₁₉₂ *a*₁₉₃ ... *a*₁₉₉]];
32 bits (that is, another group of input bits in the vertical direction) in the four encoding units in a column 2 are respectively as follows: [[*a*₈ *a*₉ ... *a*₁₅][*a*₇₂ *a*₇₃ *... a*₇₉][*a*₁₃₆ *a*₁₃₇ ... *a*₁₄₃][*a*₂₀₀ *a*₂₀₁ ... *a*₂₀₇]]; and
for input bits in a column 3 to a column 8, refer to FIG. 20, and examples are not enumerated.

In the foregoing descriptions, each group of input bits is enumerated at a granularity of an encoding unit. For ease of differentiation, bits in each encoding unit are represented by "[]".

FIG. 21a to FIG. 21c show different encoding directions and encoding orders.

FIG. 21a is a diagram in which the encoding direction is the horizontal direction and the encoding order is from left to right. If the encoding direction includes the horizontal direction, and the encoding order is from left to right, bits in a plurality of encoding units in each row may be sequentially input into the encoder in a right-to-left order. In this way, eight groups of input bits may be obtained, that is, corresponding to four rows in FIG. 20, and the groups of input bits are arranged in the encoding order as follows:
*a*₀*, a*₁*,*...,*a*₆₂, *a*₆₃;
*a*₆₄*, a*₆₅,... , *a*₁₂₆, *a*₁₂₇;
*a*₁₂₈, *a*₁₂₉, ... , *a*₁₉₀, *a*₁₉₁; and
*a*₁₉₂, *a*₁₉₃, ... , *a*₂₅₄, *a*₂₅₅.

FIG. 21b is a diagram in which the encoding direction is the vertical direction and the encoding order is from top to bottom. If the encoding direction includes the vertical direction, and the encoding order is from top to bottom, bits in a plurality of encoding units in each column may be sequentially input into the encoder in a top-to-bottom order. In this way, four groups of input bits may be obtained, that is, corresponding to eight columns in FIG. 20, and the groups of input bits are arranged in the encoding order as follows:
*a*₀*, a*₁*,* ... , *a*₇*, a*₆₄*, a*₆₅*,* ... , *a*₇₁*, a*₁₂₈, *a*₁₂₉, ... , *a*₁₃₅, *a*₁₉₂, *a*₁₉₃, ... , *a*₁₉₉;
*a*₈*, a*₉*,* ... , *a*₁₅, *a*₇₂*, a*₇₃*,* ... , *a*₇₉*, a*₁₃₆, *a*₁₃₇, ... , *a*₁₄₃, *a*₂₀₀, *a*₂₀₁, ... , *a*₂₀₇;
*a*₁₆, *a*₁₇*,* ... , *a*₂₃, *a*₈₀, *a*₈₂*,* ... , *a*₈₇*, a*₁₄₄*, a*₁₄₅, ... , *a*₁₅₁, *a*₂₀₈, *a*₂₀₉, ... , *a*₂₁₅;
*a*₂₄*, a*₂₅, ... , *a*₃₁, *a*₈₈, *a*₈₉*,* ... , *a*₉₅, *a*₁₅₂, *a*₁₅₃, ... , *a*₁₅₉, *a*₂₁₆, *a*₂₁₇, ... , *a*₂₂₃;
*a*₃₂, *a*₃₃, ... , *a*₃₉, *a*₉₆, a₉₇, ... , *a*₁₀₃, *a*₁₆₀, *a*₁₆₁, ... , *a*₁₆₇, *a*₂₂₄, *a*₂₂₅, ... , *a*₂₃₁;
*a*₄₀*, a*₄₁*,* ... , *a*₄₇*, a*₁₀₄, *a*₁₀₅, ... , *a*₁₁₁, *a*₁₆₈, *a*₁₆₉, ... , *a*₁₇₅, *a*₂₃₂, *a*₂₃₃, ... , *a*₂₃₉;
*a*₄₈*, a*₄₉*,* ... , *a*₅₅, *a*₁₁₂, *a*₁₁₃, ... , *a*₁₁₉, *a*₁₇₆, *a*₁₇₇*,* ... , *a*₁₈₃, *a*₂₄₀, *a*₂₄₁, ... , *a*₂₄₇; and
*a*₅₆, *a*₅₇, ... , *a*₆₃, *a*₁₂₀, *a*₁₂₁, ... , *a*₁₂₇, *a*₁₈₄, *a*₁₈₅, ... , *a*₁₉₁, *a*₂₄₈, *a*₂₄₉, ... , *a*₂₅₅.

FIG. 21c is a diagram in which the encoding direction is a diagonal direction and the encoding order is from top left to bottom right. If the encoding direction includes the diagonal direction, and the encoding order is from top left to bottom right, bits in encoding units on each diagonal may be sequentially input into the encoder in an order from top left to bottom right. In this way, 11 groups of input bits may be obtained, and the groups of input bits are arranged in the encoding order as follows:
*a*₁₉₂, *a*₁₉₃, ... , *a*₁₉₉;
*a*₁₂₈, *a*₁₂₉, ... , *a*₁₃₅, *a*₂₀₀, *a*₂₀₁, ... , *a*₂₀₇;
*a*₆₄, *a*₆₅, ... , *a*₇₁*, a*₁₃₆, *a*₁₃₇, ... , *a*₁₄₃, *a*₂₀₈, *a*₂₀₉, ... , *a*₂₁₅;
*a*₀*, a*₁*,* ... , *a*₇*, a*₇₂*, a*₇₃*,* ... , *a*₇₉*, a*₁₄₄*, a*₁₄₅, ... , *a*₁₅₁, *a*₂₁₆, *a*₂₁₇, ... , *a*₂₂₃;
a*₈, a*₉*,* ... , *a*₁₅, *a*₈₀, *a*₈₁*,* ... , *a*₈₇*, a*₁₅₂, *a*₁₅₃, ... , *a*₁₅₉, *a*₂₂₄, *a*₂₂₅, ... , *a*₂₃₁;
*a*₁₆, *a*₁₇*,* ... , *a*₂₃, *a*₈₈, *a*₈₉*,* ... , *a*₉₅, *a*₁₆₀, *a*₁₆₁, ... , *a*₁₆₇, *a*₂₃₂, *a*₂₃₃, ... , *a*₂₃₉;
*a*₂₄*, a*₂₅, ... , *a*₃₁, *a*₉₆, *a*₉₇*,* ... , *a*₁₀₃, *a*₁₆₈, *a*₁₆₉, ... , *a*₁₇₅, *a*₂₄₀, *a*₂₄₁, ... , *a*₂₄₇;
*a*₃₂, *a*₃₃, ... , *a*₃₉, *a*₁₀₄, *a*₁₀₅, ... , *a*₁₁₁, *a*₁₇₆, *a*₁₇₇*,* ... , *a*₁₈₃, *a*₂₄₈, *a*₂₄₉, ... , *a*₂₅₅;
*a*₄₀*, a*₄₁*,* ... , *a*₄₇*, a*₁₁₂, *a*₁₁₃, ... , *a*₁₁₉, *a*₁₈₄, *a*₁₈₅, ... , *a*₁₉₁;
*a*₄₈*, a*₄₉*,* ... , *a*₅₅, *a*₁₂₀, *a*₁₂₁, ... , *a*₁₂₇; and
*a*₅₆, *a*₅₇*,* ... , *a*₆₃.

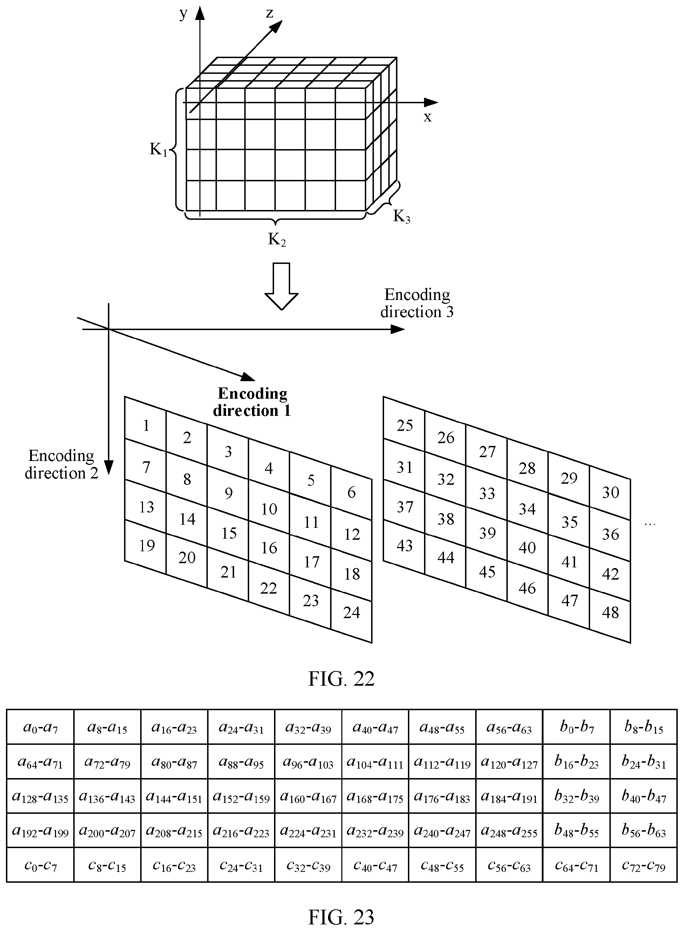

In another example, it is assumed that the first pattern is the pattern shown in FIG. 10, and the dimension K₁×K₂×K₃ of the first pattern may be specifically 4×6×4. A dimension of each encoding unit is not limited. FIG. 22 shows different encoding directions. In an x-axis direction, an encoding order of each group of input bits is consistent with the x-axis direction, as shown by an encoding direction 1 in the figure. In a y-axis direction, an encoding order of each group of input bits is opposite to the y-axis direction, as shown by an encoding direction 2 in the figure. In a z-axis direction, an encoding order of each group of input bits is consistent with the y-axis direction, as shown by an encoding direction 3 in the figure. For ease of differentiation and description, in this example, a number of each encoding unit is used to describe an input bit in the encoding unit. Details are as follows:

There are a total of K₁×K₃ groups of input bits in the encoding direction 1, where the encoding order of an i^{th} group of input bits is: consecutive integer values that are taken from K₂×(*i-*1)+1 to K₂×i, where i is 1, 2, ..., or K₁×K₃. For example, in the pattern shown in FIG. 10, a value of i may be 1, 2, ..., or 16. Therefore, in the encoding direction 1, numbers of encoding units in which the 1^{st} group of input bits are located are {1, 2, 3, 4, 5, 6}, numbers of encoding units in which the 2^{nd} group of input bits are located are {7, 8, 9, 10, 11, 12}, numbers of encoding units in which the 3^{rd} group of input bits are located are {13, 14, 15, 16, 17, 18}, numbers of encoding units in which the 4^{th} group of input bits are located are {19, 20, 21, 22, 23, 24}, and numbers of encoding units in which the 5^{th} group of input bits are located are {25, 26, 27, 28, 29, 30}. The rest may be deduced by analogy, and examples are not enumerated.

There are a total of K₂×K₃ groups of input bits in the encoding direction 2, where the encoding order of a *j*^{th} group of input bits is: integer values that are taken at an interval of K₂ within a range from *j* to *j+*(K₁-1)×K₂, where *j* is 1, 2, ..., or K₂×K₃. For example, in the pattern shown in FIG. 10, a value of *j* may be 1, 2, ..., or 24. Therefore, in the encoding direction 2, numbers of encoding units in which the 1^{st} group of input bits are located are {1, 7, 13, 19}, numbers of encoding units in which the 2^{nd} group of input bits are located are {2, 8, 14, 20}, numbers of encoding units in which the 3^{rd} group of input bits are located are {3, 9, 15, 21}, numbers of encoding units in which the 4^{th} group of input bits are located are {4, 10, 16, 20}, numbers of encoding units in which the 5^{th} group of input bits are located are {5, 11, 17, 23}, numbers of encoding units in which the 6^{th} group of input bits are located are {6, 12, 18, 24}, and numbers of encoding units in which the 7^{th} group of input bits are located are {25, 31, 37, 43}. The rest may be deduced by analogy, and examples are not enumerated.

There are a total of K₁×K₂ groups of input bits in the encoding direction 3, where the encoding order of a *k*^{th} group of input bits is: integer values that are taken at an interval of K₂×K₃ within a range from *k* to *k+*(K₃-1)×K₂×K₃, where *j* is 1, 2, ..., or K₁×K₂. For example, in the pattern shown in FIG. 10, a value of *j* may be 1, 2, ..., or 24. Therefore, in the encoding direction 3, numbers of encoding units in which the 1^{st} group of input bits are located are {1, 25, 49, 73}, numbers of encoding units in which the 2^{nd} group of input bits are located are {2, 26, 50, 74}, numbers of encoding units in which the 3^{rd} group of input bits are located are {3, 27, 51, 75}, numbers of encoding units in which the 4^{th} group of input bits are located are {4, 28, 52, 76}, numbers of encoding units in which the 5^{th} group of input bits are located are {5, 29, 53, 77}, numbers of encoding units in which the 6^{th} group of input bits are located are {6, 30, 54, 78}, and numbers of encoding units in which the 7^{th} group of input bits are located are {7, 31, 55, 79}. The rest may be deduced by analogy, and examples are not enumerated.

The foregoing describes the encoding direction and the encoding order in detail with reference to a plurality of accompanying drawings. These accompanying drawings are merely examples for ease of understanding, and should not constitute any limitation on specific forms of the pattern and the encoding unit, or constitute any limitation on the encoding direction and the encoding order either.

It may be understood that, if one group of input bits are carried in one encoding unit, one or more bits in the encoding unit may be directly input into the encoder in a form of a one-dimensional vector. In this case, the one or more bits in the encoding unit may be encoded, and encoding does not need to be performed based on the encoding order.

In conclusion, it can be learned that the first to-be-encoded input is input into the encoder at the granularity of the encoding unit. In component encoding, that the first to-be-encoded input is input into the encoder at the granularity of the encoding unit may be understood as follows: At the granularity of the encoding unit, one or more bits in each of one or more encoding units that carry a same group of input bits are restored to a one-dimensional vector, the vector is input into the encoder to complete input of one encoding unit in the encoding order, then input of a next encoding unit is performed, and this process repeats until the same group of input bits are input; or may be understood as follows: At the granularity of the encoding unit, one or more bits in each of one or more encoding units that carry a same group of input bits are restored to a one-dimensional vector, and in the encoding order, the one-dimensional vectors obtained by restoring each of the one or more encoding units may be spliced into a larger one-dimensional vector, where encoding refers to encoding of the larger one-dimensional vector.

During specific implementation, one encoder may be configured in each encoding direction for component encoding. For ease of differentiation and description, an encoder used for component encoding is denoted as a sub-encoder in this specification. It should be understood that the encoder may include a plurality of sub-encoders, and each sub-encoder may be configured to encode one or more groups of input bits in one encoding direction.

For example, in the three encoding directions shown in FIG. 21a, FIG. 21b, and FIG. 21c, one sub-encoder may be configured in each encoding direction, for example, denoted as a sub-encoder 1, a sub-encoder 2, and a sub-encoder 3. The sub-encoder 1 may be configured to encode the four groups of input bits in the horizontal direction, the sub-encoder 2 may be configured to encode the eight groups of input bits in the vertical direction, and the sub-encoder 3 may be configured to encode the 11 groups of input bits in the diagonal direction.

For another example, in the three encoding directions shown in FIG. 22, one sub-encoder may be configured in each encoding direction, for example, denoted as a sub-encoder 1, a sub-encoder 2, and a sub-encoder 3. The sub-encoder 1 may be configured to encode the 24 groups of input bits in the encoding direction 1, the sub-encoder 2 may be configured to encode the 16 groups of input bits in the encoding direction 2, and the sub-encoder 3 may be configured to encode the 24 groups of input bits in the encoding direction 3.

As described above, the encoder may be implemented by software and/or hardware. Configuring a sub-encoder may be understood as configuring a unit module having an encoding function, for example, writing a segment of code to implement the encoding function, or configuring a circuit to implement the encoding function. This is not limited.

Because different sub-encoders are configured in different encoding directions, different sub-encoders may implement respective corresponding operations by executing different code.

Further, one or more sub-encoders may be configured in each encoding direction, and correspond to one or more groups of input bits. The one or more sub-encoders in each encoding direction may synchronously encode one or more groups of input bits in a same encoding direction, thereby improving processing efficiency, to help improve a throughput.

When encoding the plurality of groups of input bits, the first communication apparatus may encode the plurality of groups of input bits by using a same encoding type, or may encode the plurality of groups of input bits by using different encoding types. This is not limited in this application. In this application, the encoding type is a specific manner used to implement bit-level encoding. The encoding type may include but is not limited to, for example, LDPC encoding, Polar encoding, Turbo encoding, and coupling code encoding. This is not limited in this application. A code type obtained through encoding varies with the encoding type. Therefore, it may also be referred to as that code patterns obtained by encoding the plurality of groups of input bits may be the same or may be different.

Because the first communication apparatus may separately encode the one or more groups of input bits, when a quantity of groups of input bits is greater than 1, the first communication apparatus may encode the plurality of groups of input bits by using one or more encoding types.

Optionally, in the plurality of groups of input bits, encoding types used for encoding different groups of input bits in a same encoding direction are the same.

In other words, a plurality of groups of input bits in a same encoding direction may be encoded by using a same encoding type. For example, in FIG. 21a, the four groups of input bits may be encoded by using a same encoding type. For another example, in FIG. 21b, the eight groups of input bits may be encoded by using a same encoding type. For still another example, in FIG. 21c, the 11 groups of input bits may be encoded by using a same encoding type.

Further, when encoding types are the same, encoding parameters used for encoding different groups of input bits in a same encoding direction may be the same or may be different.

For example, the encoding parameters may include but are not limited to, for example, an information bit length, a codeword length, a code rate, and the like.

With reference to different encoding types, the encoding parameters may include more parameters.

For example, in the LDPC encoding, the encoding parameters may further include a basic graph (BG) 1, a lifting size (lifting size) Z, and the like. It is assumed that encoding types used for encoding different groups of input bits in an encoding direction are all LDPC, and there are the following two groups of encoding parameters: an information bit length 1, a codeword length 1, a code rate 1, a basic graph 1, and a lifting size 1; and an information bit length 2, a codeword length 2, a code rate 2, a basic graph 2, and a lifting size 2. One or more parameters in the two groups of encoding parameters are different. One group of encoding parameters are used for one or more groups of input bits in the encoding direction, and the other group of encoding parameters are used for other groups of input bits in the encoding direction.

For another example, in the Polar encoding, the encoding parameters may further include a quantity of CRCs, a frozen bit position, a core sub-matrix, and the like. It is assumed that encoding types used for encoding different groups of input bits in an encoding direction are all Polar encoding, and there are the following two groups of encoding parameters: an information bit length 1, a codeword length 1, a code rate 1, a quantity 1 of CRCs, a frozen bit position 1, and a core sub-matrix 1; and an information bit length 2, a codeword length 2, a code rate 2, a quantity 2 of CRCs, a frozen bit position 2, and a core sub-matrix 2. One or more parameters in the two groups of encoding parameters are different. One group of encoding parameters are used for one or more groups of input bits in the encoding direction, and the other group of encoding parameters are used for other groups of input bits in the encoding direction.

Optionally, in the plurality of groups of input bits, encoding types used for encoding at least two groups of input bits in a same encoding direction are different.

In other words, a plurality of groups of input bits in a same encoding directions may alternatively be encoded by using different encoding types. For example, in FIG. 21a, the four groups of input bits may be encoded by using different encoding types, or a part of the four groups of input bits are encoded by using one encoding type, and the other part is encoded by using another encoding type. For example, the first two groups are encoded by using one encoding type, for example, LDPC encoding, and the last two groups are encoded by using another encoding type, for example, coupling code encoding.

Optionally, encoding types used for encoding the plurality of groups of input bits are the same.

In other words, all input bits may be encoded by using a same encoding type without distinguishing between encoding directions.

Further, encoding parameters for encoding the plurality of groups of input bits may be the same or may be different.

Optionally, encoding types used for encoding at least two of the plurality of groups of input bits are different.

In other words, a plurality of groups of input bits in one or more encoding directions may be encoded by using different encoding types. For example, different groups of input bits in a same encoding direction may be encoded by using different encoding types, or one or more groups of input bits in each encoding direction may be encoded by using one encoding type and input bits in different encoding directions are encoded by using different encoding types. This is not limited in this application.

During specific implementation, different sub-encoders may be configured for different encoding types in a same encoding direction. For example, if two encoding types are used in the horizontal direction, a sub-encoder 1a and a sub-encoder 1b may be configured in the horizontal direction. If four encoding types are used in the vertical direction, a sub-encoder 2a to a sub-encoder 2d may be configured in the vertical direction.

In this way, a plurality of groups of input bits in a same encoding direction may alternatively be encoded in parallel, thereby improving the processing efficiency to a greater extent. In addition, different groups of input bits are encoded by using different encoding types, so that the total code rate can be controlled more flexibly and accurately, thereby improving the decoding performance.

For ease of understanding, the following describes a component encoding process with reference to the accompanying drawings.

In an example, the first pattern is the pattern shown in FIG. 8, the dimension K₁×K₂ is specifically 4×8, and the encoding direction is the encoding directions shown in FIG. 21a and FIG. 21b, that is, includes the horizontal direction and the vertical direction. The four groups of encoding units included in the first to-be-encoded input in the horizontal direction and the eight groups of encoding units included in the first to-be-encoded input in the vertical direction are respectively shown above with reference to FIG. 21a and FIG. 21b. Details are not described again. For ease of description and understanding, in the following example, it is assumed that each encoding unit includes 8 bits.

The first communication apparatus may encode the four groups of encoding units in the horizontal direction by using one sub-encoder (for example, denoted as a sub-encoder 1), and an encoding type is represented by using a function fi(); and encode the eight groups of encoding units in the vertical direction by using another sub-encoder (for example, denoted as a sub-encoder 2), and an encoding type is represented by a function *f*₂().

As shown in the figure, encoding is first performed in the horizontal direction, and a process of encoding the four groups of input bits in the horizontal direction may separately satisfy:
f₁(*a*₀, *a*₁, ..., *a*₆₂, *a*₆₃);
f₁(*a*₆₄, *a*₆₅, ..., *a*₁₂₆, *a*₁₂₇);
f₁(*a*₁₂₈, *a*₁₂₉, ..., *a*₁₉₀, *a*₁₉₁); and
f₁(*a*₁₉₂, *a*₁₉₃, ..., *a*₂₅₄, *a*₂₅₅).

In this way, the four groups of encoded bits in the horizontal direction may be obtained, and each group of encoded bits includes one group of information bits and one group of corresponding check bits. It is assumed that each group of check bits includes 16 bits carried in two encoding units, which are represented by *bₙ*, where n is an integer. An example of the four groups of encoded bits is as follows:
*a*₀, *a*₁, ... , *a*₆₂, *a*₆₃, *b*₀, ... , *b*₇, *b*₈, ..., *b*₁₅; and
*a*₆₄, *a*₆₅, ..., *a*₁₂₆, *a*₁₂₇, *b*₁₆, ..., *b*₂₃, *b*₂₄, ..., *b*₃₁; and
*a*₁₂₈, *a*₁₂₉, ..., *a*₁₉₀, *a*₁₉₁, *b*₃₂, ..., *b*₃₉, *b*₄₀, ..., *b*₄₇; and
*a*₁₉₂, *a*₁₉₃, ... , *a*₂₅₄, *a*₂₅₅, *b*₄₈, ..., *b*₅₅, *b*₅₆, ..., *b*₆₃.

Because the two groups of check bits are obtained through encoding in the horizontal direction, two groups of to-be-encoded bits are added in the vertical direction, and there are a total of 10 groups of input bits. A process of encoding the 10 groups of input bits in the vertical direction may separately satisfy:
f₂(*a*₀, *a*₁, ..., *a*₇, *a*₆₄, *a*₆₅, ..., *a*₇₁, *a*₁₂₈, *a*₁₂₉, ..., *a*₁₃₅, *a*₁₉₂, *a*₁₉₃, ..., *a*₁₉₉);
f₂(*a*₈, *a*₉, ..., *a*₁₅, *a*₇₂, *a*₇₃, ..., *a*₇₉, *a*₁₃₆, *a*₁₃₇, ..., *a*₁₄₃, *a*₂₀₀, *a*₂₀₁, ..., *a*₂₀₇);
f₂(*a*₁₆, *a*₁₇, ..., *a*₂₃, *a*₈₀, *a*₈₂, ..., *a*₈₇, *a*₁₄₄, *a*₁₄₅, ..., *a*₁₅₁, *a*₂₀₈, *a*₂₀₉, ..., *a*₂₁₅);
f₂(*a*₂₄, *a*₂₅, ..., *a*₃₁, *a*₈₈, *a*₈₉, ..., *a*₉₅, *a*₁₅₂, *a*₁₅₃, ..., *a*₁₅₉, *a*₂₁₆, *a*₂₁₇, ..., *a*₂₂₃);
f₂(*a*₃₂, *a*₃₃, ..., *a*₃₉, *a*₉₆, *a*₉₇, ..., *a*₁₀₃, *a*₁₆₀, *a*₁₆₁, ..., *a*₁₆₇, *a*₂₂₄, *a*₂₂₅, ..., *a*₂₃₁);
f₂(*a*₄₀, *a*₄₁, ..., *a*₄₇, *a*₁₀₄, *a*₁₀₅, ..., *a*₁₁₁, *a*₁₆₈, *a*₁₆₉, ..., *a*₁₇₅, *a*₂₃₂, *a*₂₃₃, ..., *a*₂₃₉);
f₂(*a*₄₈, *a*₄₉, ..., *a*₅₅, *a*₁₁₂, *a*₁₁₃, ..., *a*₁₁₉, *a*₁₇₆, *a*₁₇₇, ..., *a*₁₈₃, *a*₂₄₀, *a*₂₄₁, ..., *a*₂₄₇);
f₂(*a*₅₆, *a*₅₇, ..., *a*₆₃, *a*₁₂₀, *a*₁₂₁, ..., *a*₁₂₇, *a*₁₈₄, *a*₁₈₅, ..., *a*₁₉₁, *a*₂₄₈, *a*₂₄₉, ..., *a*₂₅₅);
f₂(*b*₀, ... , *b*₇, *b*₁₆, ... , *b*₂₃, *b*₃₂, ... , *b*₃₉, *b*₄₈, ..., *b*₅₅); and
f₂(*b*₈, ..., *b*_{*1*5}, *b*₂₄, ... , *b*₃₁, *b*₄₀, ... , *b*₄₇, *b*₅₆, ... , *b*₆₃).

In this way, the 10 groups of encoded bits in the vertical direction may be obtained, and each group of encoded bits includes one group of information bits and one group of corresponding check bits. It is assumed that each group of check bits includes 4 bits, which are represented by c, where n is an integer. An example of the 10 groups of encoded bits is as follows:
*a*₀, *a*₁, ..., *a*₇, *a*₆₄, *a*₆₅, ... , *a*₇₁, *a*₁₂₈, *a*₁₂₉, ... , *a*₁₃₅, *a*₁₉₂, *a*₁₉₃, ..., *a*₁₉₉, *c*₀, *c*₁, ..., *c*₇;
*a*₈, *a*₉, ..., *a*₁₅, *a*₇₂, *a*₇₃, ..., *a*₇₉, *a*₁₃₆, *a*₁₃₇, ... , *a*₁₄₃, *a*₂₀₀, *a*₂₀₁, ..., *a*₂₀₇, *c*₈, *c*₉, ..., *c*₁₅;
*a*₁₆, *a*₁₇, ... , *a*₂₃, *a*₈₀, *a*₈₂, ... , *a*₈₇, *a*₁₄₄, *a*₁₄₅, ... , *a*₁₅₁, *a*₂₀₈, *a*₂₀₉, ... , *a*₂₁₅, *c*₁₆, *c*₁₇, ... , *c*₂₃;
*a*₂₄, *a*₂₅, ..., *a*₃₁, *a*₈₈, *a*₈₉, ..., *a*₉₅, *a*₁₅₂, *a*₁₅₃, ..., *a*₁₅₉, *a*₂₁₆, *a*₂₁₇, ... , *a*₂₂₃, *c*₂₄, *c*₂₅, ... , *c*₃₁;
*a*₃₂, *a*₃₃, ..., *a*₃₉, *a*₉₆, *a*₉₇, ..., *a*₁₀₃, *a*₁₆₀, *a*₁₆₁, ..., *a*₁₆₇, *a*₂₂₄, *a*₂₂₅, ..., *a*₂₃₁, *c*₃₂, *c*₃₃, ..., *c*₃₉;
*a*₄₀, *a*₄₁, ..., *a*₄₇, *a*₁₀₄, *a*₁₀₅, ..., *a*₁₁₁, *a*₁₆₈, *a*₁₆₉, ... , *a*₁₇₅, *a*₂₃₂, *a*₂₃₃, ... , *a*₂₃₉, *c*₄₀, *c*₄₁, ..., *c*₄₇;
*a*₄₈, *a*₄₉, ... , *a*₅₅, *a*₁₁₂, *a*₁₁₃, ... , *a*₁₁₉, *a*₁₇₆, *a*₁₇₇, ... , *a*₁₈₃, *a*₂₄₀, *a*₂₄₁, ... , *a*₂₄₇, *c*₄₈, *c*₄₉, ... , *c*₅₅;
*a*₅₆, *a*₅₇, ... , *a*₆₃, *a*₁₂₀, *a*₁₂₁, ... , *a*₁₂₇, *a*₁₈₄, *a*₁₈₅, ... , *a*₁₉₁, *a*₂₄₈, *a*₂₄₉, ... , *a*₂₅₅, *c*₅₆, *c*₅₇, *.*.. , *c*₆₃;
*b*₀, ..., *b*₇, *b*₁₆, ... , *b*₂₃, *b*₃₂, ... , *b*₃₉, *b*₄₈, ... , *b*₅₅, *c*₆₄, *c*₆₅, ... , *c*₇₁; and
*b*₈, ..., *b*₁₅, *b*₂₄, ... , *b*₃₁, *b*₄₀, ... , *b*₄₇, *b*₅₆, ... , *b*₆₃, *c*₇₂, *c*₇₃, ... , *c*₇₉·

After encoding is completed, a plurality of groups of obtained encoded bits may be arranged according to a preset output rule into a one-dimensional vector for output, to obtain the second bit sequence. It may be understood that the second bit sequence includes a plurality of encoded bits, which may specifically include a plurality of information bits and a plurality of check bits.

For example, the preset output rule may be first row then column, or first column then row.

The first row then column means that output is first performed by row and then by column. Outputting by row means that encoded bits of each row are sequentially output at a granularity of a row. For example, the encoded bits are sequentially output in a left-to-right order. After all encoded bits of each row are output, encoded bits of a next row are output. An output order of different rows may be predefined, for example, may be a top-to-bottom order, or may be a bottom-to-top order. If each row is considered as a whole, and the plurality of rows may be considered as one column, output of the plurality of rows may also be considered as output of the column.

The first column then row means that output is first performed by column and then by row. Outputting by column means that encoded bits of each column are sequentially output at a granularity of a column. For example, the encoded bits are sequentially output in a top-to-bottom order. After all encoded bits of each column are output, encoded bits of a next column are output. An output order of different columns may also be predefined, for example, may be a left-to-right order, or may be a right-to-left order. If each column is considered as a whole, and the plurality of columns may be considered as one row, output of the plurality of columns may also be considered as output of the row.

For ease of understanding and description, FIG. 23 shows a plurality of groups of encoded bits after encoding. If the output rule is "first row then column", the second bit sequence may be obtained as follows: *a*₀, *a*₁, ... , *a*₆₃, *b*₀, ... , *b*₁₅, *a*₆₄, *a*₆₅, ... , *a*₁₂₇, *b*₁₆, ... , *b*₃₁, *a*₁₂₈, *a*₁₂₉, ... , *a*₁₉₁, *b*₃₂, ... , *b*₄₇, *a*₁₉₂, *a*₁₉₃, ... , *a*₂₅₅, *b*₄₈, ... , *b*₆₃, *c*₀, ... , *c*₇₉.

It may be understood that, if the output rule is first column then row, the second bit sequence may also be obtained based on a same principle with reference to FIG. 23. For brevity, details are not described again.

It should be further understood that an output rule used to obtain the second bit sequence is not limited to the foregoing listed outputting by row and outputting by column, and may be another rule. This application includes this but is not limited thereto.

It should be further understood that, for ease of understanding, the foregoing shows a possible example of the encoded bits, but should not constitute any limitation on this application. In some other encoding types, the encoded bits are not necessarily arranged in the manner shown in the foregoing example.

In another example, the first pattern is the pattern shown in FIG. 10, the dimension K₁×K₂×K₃ is specifically 4×6×4, and the encoding direction is the encoding direction 1 to the encoding direction 3 shown in FIG. 22. The first communication apparatus may perform encoding by using one sub-encoder in each encoding direction, for example, a sub-encoder 1, a sub-encoder 2, and a sub-encoder 3. If encoding types used in the three encoding directions are the same, the encoding types may be represented by using a same function *f*().

A process in which the sub-encoder 1 encodes the 24 groups of input bits in the encoding direction 1 may satisfy *f* (K₂×(*i-*1)+1:K₂×*i*), where ":" in the formula indicates consecutive values; a process in which the sub-encoder 2 encodes the 16 groups of input bits in the encoding direction 2 may satisfy *f*(*j:*K₂: *j+*(K₁-1)×K₂), where ":K2:" in the formula indicates that values are taken at an interval of K₂, that is, a difference between two values that are consecutively taken is K₂; and a process in which the sub-encoder 3 encodes the 24 groups of input bits in the encoding direction 3 may satisfy *f*(*k*:K₂×K₃:*k+*(K₃-1)×K₂×K₃), where ":K₂×K₃:" in the formula indicates that values are taken at an interval of K₂×K₃, that is, a difference between two values that are consecutively taken is K₂×K₃.

Encoded bits obtained through encoding may also be arranged according to a preset output rule into a one-dimensional vector for output, to obtain the second bit sequence. For example, the output rule may be: determining an output order based on a plurality of different orders in three directions x, y, and z. The plurality of different orders in the three directions may be, for example, x, y, and z, or x, z, and y, or y, x, and z, or y, z, and x, or z, x, and y, or z, y, and x. A process of obtaining a one-dimensional vector according to any one of the orders is similar to the foregoing first row then column and first column then row. For details, refer to the foregoing example with reference to FIG. 23. Details are not described.

In still another example, the first pattern is the pattern shown in FIG. 9c. A dimension of each encoding unit is not limited. The encoding direction includes the horizontal direction and the vertical direction. The first communication apparatus may perform encoding in each encoding direction by using one sub-encoder. For example, the first communication apparatus performs encoding in the horizontal direction by using a sub-encoder 1, and performs encoding in the vertical direction by using a sub-encoder 2. Encoding types used in two encoding directions are different. For example, an encoding type used by the sub-encoder 1 may be represented by using a function *f*₁(), and an encoding type used by the sub-encoder 2 may be represented by using a function *f*₂().

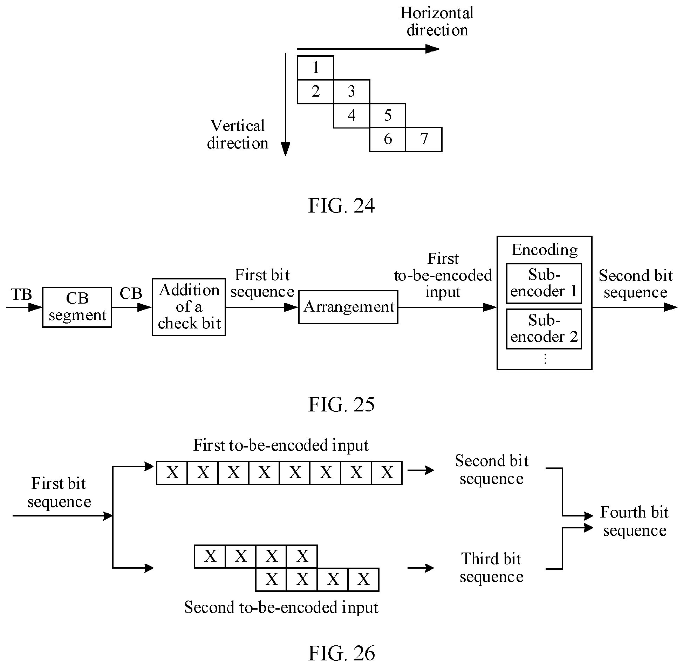

FIG. 24 is a diagram of encoding in different encoding directions. As shown in FIG. 24, there are four groups of input bits in each of the horizontal direction and the vertical direction. For ease of differentiation and description, in this example, input bits in each encoding unit are described by using a number of the encoding unit. Details are as follows:
There are a total of four groups of input bits in the horizontal direction, which are respectively as follows: [[1] [2 3] [4 5] [6 7]].
There are a total of four groups of input bits in the vertical direction, which are respectively as follows: [[1 2] [3 4] [5 6] [7]].

The first communication apparatus may perform encoding by using one sub-encoder in each encoding direction, for example, a sub-encoder 1 and a sub-encoder 2. A process in which the sub-encoder 1 encodes the four groups of input bits in the horizontal direction may satisfy *f*₁(1), *f*₁(2, 3), *f*₁(4, 5), *f*₁(6, 7); and a process in which the sub-encoder 2 encodes the four groups of input bits in the vertical direction may satisfy *f*₂(1, 2), *f*₂(3, 4), *f*₂(5, 6), *f*₂(7).

The sub-encoder 1 and the sub-encoder 2 may alternately encode all the groups of input bits, for example, sequentially encode the input bits in a top-to-bottom order, where an encoding order of the encoding units is as follows: [1], [1 2], [2 3], [3 4], [4 5], [5 6], [6 7], [7]. Alternatively, the sub-encoder 1 and the sub-encoder 2 may encode all the groups of input bits in an order of first completing encoding in one encoding direction and then completing encoding in the other encoding direction. For example, the sub-encoder 1 first performs encoding in the horizontal direction, and the sub-encoder 2 then performs encoding in the vertical direction. An encoding order of the encoding unit is as follows: [1], [2 3], [4 5], [6 7], [1 2], [3 4], [5 6], [7]. For another example, the sub-encoder 2 first performs encoding in the vertical direction, and the sub-encoder 1 then performs encoding in the horizontal direction. An encoding order of the encoding units is as follows: [1 2], [3 4], [5 6], [7], [1], [2 3], [4 5], [6 7].

Encoded bits obtained through encoding may also be arranged according to a preset output rule into a one-dimensional vector for output, to obtain the second bit sequence. For a process of arranging the encoded bits according to the output rule into the one-dimensional vector for output, refer to the foregoing example with reference to FIG. 23. Details are not described again.

It should be noted that, in the example in FIG. 24, a case in which only one encoding unit is included in the horizontal direction and the vertical direction is excluded, and is not determined as a group of input bits, for example, the encoding unit 1 in the horizontal direction and the encoding unit 7 in the vertical direction.

It may be understood that, when the first pattern is in one-dimensional distribution, encoding may be performed in one dimension, or encoding may be performed in another dimension perpendicular to the dimension, so that two groups of encoded bits may be obtained based on a same group of input bits. The two groups of encoded bits may be obtained through encoding by using a same encoding type, or may be obtained through encoding by using different encoding types. This is not limited in this application.

Encoding a same group of input bits in different encoding directions is equivalent to that the same group of input bits participate in more times of encoding, thereby improving the decoding performance.

Certainly, when the first pattern has one-dimensional distribution, encoding may be performed without component encoding, but may be directly performed by using a specific encoding type, to obtain the second bit sequence. In this case, bits distributed in one or more encoding units in this dimension may also be considered as a group of input bits, which are encoded by using a specific encoding type, to obtain the second bit sequence. In this way, a quantity of times of encoding can be reduced, and the processing efficiency can be improved.

The foregoing describes a procedure in which the first communication apparatus encodes the first bit sequence with reference to the plurality of accompanying drawings. To better understand the foregoing procedure, FIG. 25 shows the encoding method from a perspective of a signal flow.

As shown in FIG. 25, a TB passes through a CB segmentation to obtain several CBs. A to-be-encoded bit sequence, for example, the first bit sequence shown in this specification, may be obtained by adding a check bit to each CB. Processing (for example, including but not limited to arrangement) is performed on the plurality of bits of the first bit sequence, to obtain the first to-be-encoded input. The first to-be-encoded input is encoded, for example, component encoding is performed by using a plurality of sub-encoders, to obtain the second bit sequence.

During specific implementation, the arrangement operation may be implemented by an arranger, and the encoding operation may be implemented by an encoder. The encoder may include a plurality of sub-encoders for component encoding. A specific name of a module configured to implement each operation is not limited in this application.

Optionally, the method further includes: sending the second bit sequence.

After obtaining the second bit sequence through encoding, the first communication apparatus may perform operations such as scrambling, modulation, pre-coding, and RE mapping on the second bit sequence, and finally send the second bit sequence through an antenna after performing operations such as up-conversion and power amplification. It may be understood that a signal sent by the first communication apparatus through the antenna may be a radio frequency signal carrying the second bit sequence. In other words, the second bit sequence is carried in the radio frequency signal for sending, but is not necessarily output in a form of a bit sequence.

Optionally, the sending the second bit sequence includes: sending the radio frequency signal carrying the second bit sequence.

A specific procedure of sending the radio frequency signal may be implemented by using conventional technologies. Details are not described herein.

According to the technical solution provided above, the first communication apparatus may arrange the plurality of bits at the granularity of the encoding unit, to obtain the first to-be-encoded input having the first pattern. The quantity of bits included in the encoding unit is not fixed, and may be flexibly adjusted. Therefore, a limited quantity of patterns may adapt to a plurality of different data transmission amounts, and the quantity of bits in the encoding unit may be flexibly adjusted based on the data transmission amounts. Moreover, the first pattern may be used to restrict the distribution of the plurality of encoding units in the first to-be-encoded input across the one or more dimensions, that is, encoding may be performed by using or not using component encoding based on a requirement. In addition, when component encoding is used, the first communication apparatus may encode a plurality of groups of input bits in a same encoding direction in parallel, that is, product parallelism is easily implemented, so that processing efficiency can be improved. This helps improve a peak throughput and area efficiency. Moreover, in a component encoding process, encoding may be performed in a plurality of different encoding directions, so that a same encoding unit may participate in more times of encoding. Therefore, decoding performance can be improved.

In addition, because the bits are arranged into the encoding units, and are arranged at the granularity of the encoding unit, and component encoding is performed on the to-be-encoded input obtained through arrangement, so that larger coding gains may be further brought.

For example, the to-be-encoded first bit sequence includes 10000 bits. If the foregoing solution is used, assuming that the encoding unit is a 10×10 two-dimensional matrix, each encoding unit is considered as an element, and the first pattern is a 10×10 two-dimensional matrix, the 10000 bits may be constructed into 100 10×10 encoding units, and are arranged in the 10×10 two-dimensional matrix, that is, an example of the first to-be-encoded input. The first to-be-encoded input includes 10 rows and 10 columns, each row includes 1000 bits, and each column includes 1000 bits. The encoder may perform component encoding on the 10 rows and the 10 columns of the first to-be-encoded input. 1000 bits are input into the encoder each time, and encoding of the first to-be-encoded input may be completed through 10 times of encoding (that is, 20 times of encoding in total) in each of the horizontal direction and the vertical direction.

If no encoding unit is introduced, the 10000 bits in the first bit sequence may be arranged into a two-dimensional matrix of more dimensions, for example, 100×100, that is, 100 rows and 100 columns. Each row includes 100 bits, and each column also includes 100 bits. The encoder may perform component encoding on the 100 rows and the 100 columns. 100 bits are input into the encoder each time. The 10000 bits may be encoded by performing 100 times of encoding (that is, 200 times of encoding in total) in each of the horizontal direction and the vertical direction. Compared with the foregoing descriptions, a code length is shortened, and a quantity of times of encoding is increased.

It is not difficult to learn that, when no encoding unit is introduced, patterns of more dimensions may be provided to adapt to different data transmission amounts. However, there may be some patterns. The first bit sequence is segmented, so that a quantity of bits in each row and/or each column is small, and a code length after encoding is also short. Consequently, coding gains are not high, and encoding performance is affected. In addition, the quantity of times of encoding is large, and an implementation possibility is low. Although there are a large quantity of patterns, the large quantity of patterns bring low gains to encoding.

In contrast, in the solution provided in this application, a size of the encoding unit may be determined for different data transmission amounts, and the quantity of times of encoding may be controlled by using the patterns. In this way, excessive encoding and an excessively short code length can be avoided, and the encoding performance is not affected. In addition, a large quantity of patterns do not need to be predefined to adapt to different data transmission amounts, to avoid high storage overheads of the communication apparatus that are caused by pre-storing the large quantity of patterns.

The encoding method provided in this application is described in detail above with reference to the plurality of accompanying drawings. In the foregoing plurality of examples, an encoding process is described by using the first to-be-encoded input having the first pattern. Actually, this application is not limited thereto. The first communication apparatus may also process the first bit sequence to obtain to-be-encoded inputs having different patterns, for example, a second to-be-encoded input having a second pattern. In this way, the to-be-encoded inputs having different patterns are separately encoded, and then encoded bits are combined according to some rules to obtain a one-dimensional vector for output.

Optionally, the method further includes:
arranging a plurality of bits of the first bit sequence to obtain the second to-be-encoded input having the second pattern;
encoding one or more encoding units in the second to-be-encoded input to obtain a third bit sequence; and
obtaining a fourth bit sequence based on the second bit sequence and the third bit sequence.

Similar to the first to-be-encoded input, the second to-be-encoded input also includes a plurality of encoding units, and each encoding unit includes one or more bits. The plurality of encoding units in the second to-be-encoded input and the plurality of encoding units in the first to-be-encoded input may be a plurality of same encoding units, or may be a plurality of different encoding units. For example, a quantity of encoding units in the second to-be-encoded input is different from a quantity of encoding units in the first to-be-encoded input. For another example, a dimension of the encoding unit in the second to-be-encoded input is different from a dimension of the encoding unit in the first to-be-encoded input. This is not limited in this application.

Similar to the first pattern, the second pattern may indicate distribution of the plurality of encoding units of the second to-be-encoded input having the second pattern across one or more dimensions.

Optionally, the second pattern is the same as the first pattern. When the second pattern is the same as the first pattern, the operation of obtaining the first to-be-encoded input and the operation of obtaining the second to-be-encoded input may be considered as one operation.

Optionally, the second pattern is different from the first pattern. When the first pattern is different from the second pattern, the operation of obtaining the first to-be-encoded input and the operation of obtaining the second to-be-encoded input may be considered as two operations.

After the first to-be-encoded input and the second to-be-encoded input are obtained, the first to-be-encoded input and the second to-be-encoded input may be separately encoded. A process of encoding the second to-be-encoded input is similar to a process of encoding the first to-be-encoded input. For details, refer to the foregoing related descriptions of encoding the first to-be-encoded input. Details are not described again.

After obtaining the third bit sequence, the first communication apparatus may combine the second bit sequence and the third bit sequence according to some rules to obtain the fourth bit sequence. For ease of differentiation and description, rules for obtaining the fourth bit sequence through combination is denoted as a combination rule herein. For example, the combination rule is that the second bit sequence is before the third bit sequence, or the third bit sequence is before the second bit sequence, or the second bit sequence and the third bit sequence are arranged in an interleaved manner. This is not limited.

For ease of understanding, FIG. 26 shows a process of obtaining the fourth bit sequence based on the first bit sequence. As shown in FIG. 26, processing (for example, includes but not limited to arrangement) is performed on the first bit sequence, to obtain the first to-be-encoded input having the first pattern and the second to-be-encoded input having the second pattern. The first communication apparatus may encode the first to-be-encoded input to obtain the second bit sequence, and encode the second to-be-encoded input to obtain the third bit sequence. The second bit sequence and the third bit sequence are combined according to the combination rule, to obtain the fourth bit sequence.

Optionally, the method further includes: sending the fourth bit sequence.

After obtaining the fourth bit sequence through encoding, the first communication apparatus may perform operations such as scrambling, modulation, pre-coding, and RE mapping on the fourth bit sequence, and finally send the fourth bit sequence through an antenna after performing operations such as up-conversion and power amplification. A signal sent by the first communication apparatus through the antenna may be a radio frequency signal carrying the fourth bit sequence. In other words, the fourth bit sequence is carried in the radio frequency signal for sending, but is not necessarily output in a form of a bit sequence.

Optionally, the sending the fourth bit sequence includes: sending the radio frequency signal carrying the fourth bit sequence.

A specific procedure of sending the radio frequency signal may be implemented by using conventional technologies. Details are not described herein.

Because the fourth bit sequence is obtained based on the second bit sequence and the third bit sequence, and the second bit sequence is included in the fourth bit sequence, the foregoing step of sending the second bit sequence and the step of sending the fourth bit sequence may be combined into one step for execution. Correspondingly, another possible implementation of sending the second bit sequence is: sending a fourth bit sequence, where the fourth bit sequence includes the second bit sequence.

For more detailed descriptions of sending the fourth bit sequence by the first communication apparatus, refer to the foregoing descriptions of sending the second bit sequence. Details are not described again.

It is not difficult to learn that the process shown in FIG. 26 is similar to that the first bit sequence is divided into two signals, the two signals may be processed in a same way or different ways to obtain the second bit sequence and the third bit sequence, and the two signals are combined. In this way, the decoding performance can be further improved.

Actually, this application is not limited thereto. The first bit sequence may alternatively be divided into more signals, and the signals are combined after multi-processing, thereby further improving the decoding performance.

The foregoing describes in detail the encoding method provided in this application with reference to the plurality of accompanying drawings. The following describes in detail a decoding method provided in this application with reference to the accompanying drawings. It may be understood that the decoding method provided in this application may be used to decode a bit sequence obtained through encoding based on the encoding method provided in the foregoing embodiment. In this embodiment, the bit sequence may be the foregoing second bit sequence, and has a feature of the second bit sequence. For example, the second bit sequence is obtained by encoding one or more encoding units in a first to-be-encoded input having a first pattern, the first to-be-encoded input includes a plurality of encoding units distributed across one or more dimensions, each of the plurality of encoding units includes one or more bits, and the first pattern indicates distribution of the plurality of encoding units across the one or more dimensions. A fifth bit sequence corresponding to the first bit sequence may be obtained by decoding the second bit sequence.

In a possible implementation, the decoding method may correspond to the encoding method, and may be used to decode a bit sequence obtained by using the encoding method provided above.

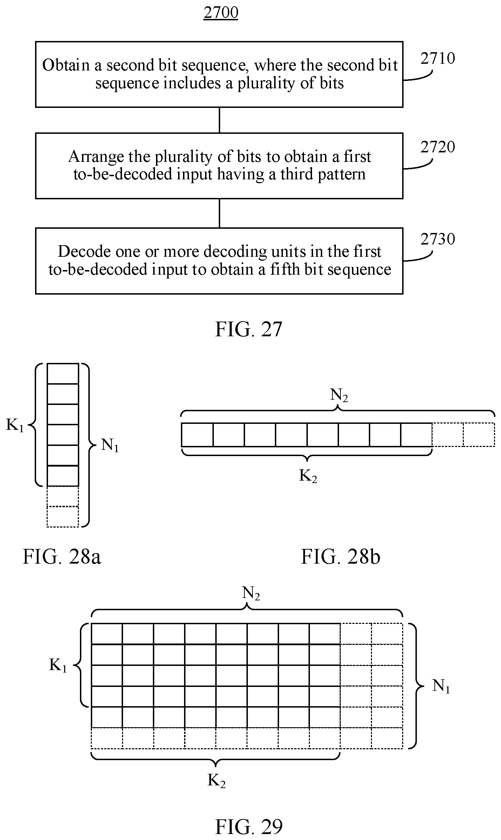

FIG. 27 is a schematic flowchart of a decoding method according to an embodiment of this application. The decoding method shown in FIG. 27 may be performed by a second communication apparatus. The second communication apparatus may be, for example, a communication device, such as a network device or a terminal device, or may be a component disposed in the communication device, such as a chip, a chip system, or a processor, or may be a logical module, software, or the like that can implement some or all functions of the communication apparatus. This is not limited in this application.

The decoding method 2700 shown in FIG. 27 includes steps 2710 to 2730. Each step of the method 2700 is described in detail below.

Step 2710: Obtain a second bit sequence, where the second bit sequence includes a plurality of bits.

It can be learned from the processing process at the physical layer that is described with reference to FIG. 3 and the encoding process described in FIG. 5 that the second bit sequence includes a plurality of encoded bits, and the plurality of encoded bits may be obtained based on the encoding method shown in FIG. 5.

Optionally, the obtaining the second bit sequence includes:
receiving a signal carrying the second bit sequence; and
obtaining the second bit sequence from the signal.

When the second communication apparatus is a terminal device or a network device, the second communication apparatus may receive the second bit sequence from a first communication apparatus through an antenna. As described above, the first communication apparatus may use a radio frequency signal to carry the second bit sequence, and the second communication apparatus may receive, through the antenna, the radio frequency signal carrying the second bit sequence. In other words, after receiving the radio frequency signal, the second communication apparatus may obtain the second bit sequence by performing an operation corresponding to the first communication apparatus. The obtaining the second bit sequence may specifically include: performing operations such as down-conversion, RE demapping, demodulation, descrambling, and de-rate matching on the radio frequency signal. This is not limited.

When the second communication apparatus is a chip or a chip system, the second communication apparatus may receive the second bit sequence through an input/output circuit or an interface circuit.

For more detailed descriptions of the second bit sequence, refer to the related descriptions in step 530 in the foregoing method 500. Details are not described again.

Step 2720: Arrange the plurality of bits to obtain a first to-be-decoded input having a third pattern.

In the encoding process, the first communication apparatus processes a plurality of bits of a first bit sequence to obtain a to-be-encoded input having a first pattern. Correspondingly, in the decoding process, the second communication apparatus may process the plurality of bits of the second bit sequence to obtain the first to-be-decoded input having the third pattern. It may be understood that the first to-be-decoded input includes the plurality of bits of the second bit sequence. Because the decoding process may be implemented by a decoder, the first to-be-decoded input may also be understood as a plurality of bits to be input to the decoder.

In this embodiment, the first to-be-decoded input has the third pattern. In other words, elements in the first to-be-decoded input are arranged in the third pattern. Similar to the first pattern, the element may be understood as a minimum granularity of the first to-be-decoded input having the third pattern for arrangement. Each element includes one or more bits in the second bit sequence. In other words, the first to-be-decoded input is arranged at the granularity of the element instead of a granularity of a bit. Compared with two-dimensional product code, one bit is extended to one element, and one element may include one or more bits. Therefore, the element may also be referred to as a lifting size. At a decoding side, because one or more bits of each element are input to the decoder for decoding, each element may also be a decoding unit, a decoding element, or the like. This is not limited in this application.

Similar to an encoding unit, each decoding unit may be a one-dimensional vector, or may be a two-dimensional matrix. In other words, each decoding unit may be a one-dimensional or two-dimensional array. Understanding of the decoding unit is similar to that of the encoding unit. For understanding, refer to the foregoing example with reference to FIG. 6a to FIG. 6c. Details are not described again.

The third pattern is a pattern corresponding to the first pattern. The first pattern may indicate distribution of a plurality of encoding units of a first to-be-encoded input across one or more dimensions. Correspondingly, the third pattern may indicate distribution of a plurality of decoding units of the first to-be-decoded input across one or more dimensions. Directions in which the plurality of encoding units in the first to-be-encoded input are distributed are the same as directions in which the plurality of decoding units in the first to-be-decoded input are distributed. A decoding unit at each position in the third pattern and an encoding unit at a corresponding position in the first pattern may include a same quantity of bits, or a size of the decoding unit is the same as a size of the encoding unit.

Similar to a to-be-encoded input, a to-be-decoded input (for example, the first to-be-decoded input) may be considered as being obtained by arranging a plurality of decoding units in a form of a pattern (for example, the third pattern), or may be considered as being obtained by filling a plurality of decoding units into different positions in the pattern. The pattern includes no decoding unit, and indicates the distribution of the plurality of decoding units in each dimension of the pattern, but does not limit a quantity of bits included in each decoding unit, an arrangement manner, and a dimension of the decoding unit. Therefore, the pattern may also be considered as a model used to restrict distribution of the plurality of decoding units in the to-be-decoded input.

Because a method for decoding the second bit sequence is corresponding to a method for encoding the first bit sequence, it is expected that the second bit sequence is arranged in a pattern such as the first pattern. However, a check bit is added after the first to-be-encoded input having the first pattern is encoded, and a total quantity of bits of the obtained second bit sequence is greater than a total quantity of bits of the first bit sequence. Therefore, a dimension of the first pattern needs to be expanded. For ease of differentiation and description, a first pattern obtained through dimension expansion is denoted as the third pattern.

For example, the first pattern has one-dimensional distribution, and a dimension is K₁. The third pattern also has one-dimensional distribution, and a dimension is N₁, where N₁ is a positive integer greater than K₁. For another example, the first pattern has two-dimensional distribution, and a dimension is K₁×K₂. The third pattern is also distributed across two dimensions, and a dimension is N₁×N₂, where N₁ is a positive integer greater than K₁, and N₂ is a positive integer greater than K₂. For still another example, the first pattern has three-dimensional distribution, and a dimension is K₁×K₂×K₃. The third pattern is also distributed across three dimensions, and a dimension is N₁×N₂×N₃, where N₁ is a positive integer greater than K₁, N₂ is a positive integer greater than K₂, and N₃ is a positive integer greater than K₃.

FIG. 28a to FIG. 30c are diagrams of third patterns. FIG. 28a to FIG. 30c respectively show, by using the patterns shown in FIG. 7a, FIG. 7b, FIG. 8, and FIG. 10 in the method 500 as first patterns, third patterns respectively corresponding to the first patterns. For ease of differentiation and understanding, in the figures, positions corresponding to the first pattern are shown by solid line boxes, and pattern units that are more than the first pattern are shown by dashed line boxes.

Corresponding to FIG. 7a, the third pattern shown in FIG. 28a is a column vector including N₁ pattern units, that is, a length of the column vector is N₁. A first to-be-decoded input having the third pattern includes N₁ decoding units distributed in a vertical direction.

Corresponding to FIG. 7b, the third pattern shown in FIG. 28b is a row vector including N₂ pattern units, that is, a length of the row vector is N₂, where N₂ is a positive integer greater than K₂. A first to-be-decoded input having the third pattern includes N₂ decoding units distributed in the horizontal direction.

Corresponding to FIG. 8, the third pattern shown in FIG. 29 includes N₁ row vectors and N₂ column vectors, and is an N₁×N₂ two-dimensional matrix, where both N₁ and N₂ are positive integers. In other words, the pattern includes N₁ groups of pattern units distributed in the horizontal direction, and each group of pattern units includes N₂ pattern units; or the pattern includes N₂ groups of pattern units distributed in the vertical direction, and each group of pattern units includes N₁ pattern units. The first to-be-decoded input having the third pattern includes N₁ groups of decoding units distributed in the horizontal direction, and each group of decoding units includes N₂ decoding units; or the first to-be-decoded input having the third pattern includes N₂ groups of decoding units distributed in the vertical direction, and each group of decoding units includes N₁ decoding units.

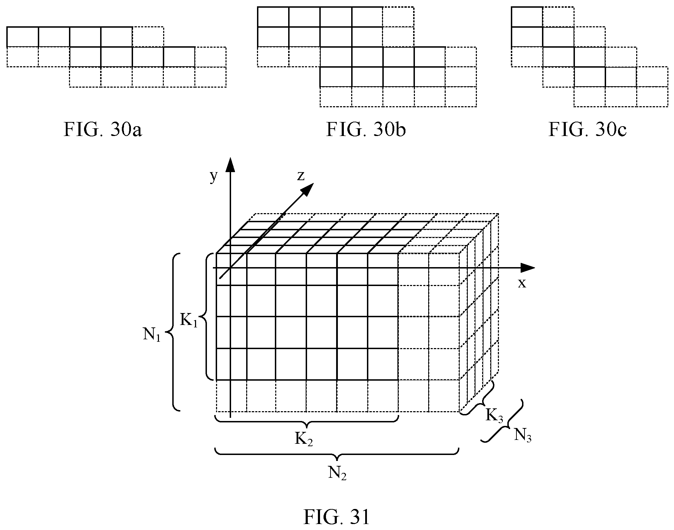

Corresponding to FIG. 9a to FIG. 9c, the third patterns shown in FIG. 30a to FIG. 30c are irregular patterns. The third patterns shown in FIG. 30a, FIG. 30b, and FIG. 30c respectively correspond to the patterns shown in FIG. 9a, FIG. 9b, and FIG. 9c. It may be found through comparison that, in each dimension, a quantity of pattern units in the third pattern is greater than a quantity of pattern units in the first pattern.

Corresponding to FIG. 10, a third pattern shown in FIG. 31 is an N₁×N₂×N₃ three-dimensional matrix, where N₁, N₂, and N₃ are all positive integers. The pattern includes N₂ pattern units in an x direction, includes N₁ pattern units in a y direction, and includes N₃ pattern units in a z direction. The third pattern includes N₂ groups of pattern units distributed in the x direction, and each group of pattern units includes N₁×N₃ pattern units; or the pattern includes N₁ groups of pattern units distributed in the y direction, and each group of pattern units includes N₂×N₃ pattern units; or the pattern includes N₃ groups of pattern units distributed in the z direction, and each group of pattern units includes N₁×N₂ pattern units. A first to-be-decoded input having the third pattern includes N₂ groups of decoding units distributed in the x direction, and each group of decoding units includes N₁×N₃ decoding units; or a first to-be-decoded input having the third pattern includes N₁ groups of decoding units distributed in the y direction, and each group of decoding units includes N₂×N₃ decoding units; or a first to-be-decoded input having the third pattern includes N₃ groups of decoding units distributed in the z direction, and each group of decoding units includes N₁×N₂ decoding units.

It should be noted that a quantity of pattern units of the third pattern in each dimension may be determined based on a quantity of bits, distributed in each dimension, of the first pattern and a code rate in the dimension. The code rate in each dimension may be a ratio of information bits to encoded bits in the dimension. In the first to-be-encoded input having the first pattern, a quantity of bits in each dimension may also be determined. A quantity of bits of the first to-be-decoded input that are distributed in any dimension may be determined based on a code rate and a quantity of bits in the dimension, and a quantity of decoding units in the dimension may be determined based on a quantity of bits included in the decoding unit.

In the first to-be-decoded input having the third pattern, quantities of bits included in different decoding units are the same, or quantities of bits included in at least two decoding units are different. A quantity of bits included in each decoding unit may be denoted as a size of the decoding unit. In other words, in the first to-be-decoded input having the third pattern, sizes of different decoding units are the same, or sizes of at least two decoding units are different. It should be further noted that a size of each decoding unit in the first to-be-decoded input is consistent with a size of each encoding unit in the first to-be-encoded input.

For example, if the sizes of the plurality of encoding units in the first to-be-encoded input are the same, the sizes of the plurality of decoding units in the first to-be-decoded input are also the same, and the size of the encoding unit is consistent with the size of the decoding unit. For example, the encoding unit is of 4×4 dimensions, and the decoding unit is also of 4×4 dimensions.

For another example, if the first to-be-encoded unit has encoding units of two sizes, for example, 4×2 dimensions and 4×4 dimensions, the first to-be-decoded input also has decoding units of two sizes, for example, 4×2 dimensions and 4×4 dimensions. The pattern shown in FIG. 13b is used as an example. It is assumed that the pattern is a first pattern, and in a first to-be-encoded input having the first pattern, sizes of encoding units in the left two columns are of 4×2 dimensions, and sizes of encoding units in the right four columns are of 4×4 dimensions. In this case, in the first to-be-decoded input having the third pattern, sizes of decoding units in the left two columns are of 4×2 dimensions, and sizes of decoding units in the right four columns are of 4×4 dimensions. The third pattern further includes at least one decoding unit that corresponds to each row in the horizontal direction and that is used to carry a check bit, and at least one decoding unit that corresponds to each column in the vertical direction and that is used to carry a check bit. A dimension of the at least one decoding unit corresponding to each row in the horizontal direction may continue to use a dimension of an adjacent decoding unit of the at least one decoding unit, namely 4×4 dimensions, and a dimension of the at least one decoding unit corresponding to each column in the vertical direction may also continue to use a dimension of an adjacent decoding unit of the at least one decoding unit. For example, two decoding units on the left are of 4×2 dimensions, and four decoding units on the right are of 4×4 dimensions.

It should be noted that, to control the code rate more accurately, when encoded bits in each dimension are calculated based on the foregoing code rate to calculate the quantity of decoding units, the quantity of decoding units that is obtained through calculation may not be an integer. In this case, a decoding unit at a tail is punched, to control the code rate more accurately.

More possible examples of the third pattern may be obtained by extending the foregoing patterns in FIG. 7a to FIG. 18d in each dimension. For brevity, no figure is provided for example herein again.

Optionally, that the third pattern indicates the distribution of the plurality of decoding units across the one or more dimensions includes: The third pattern indicates a quantity of decoding units distributed in each of the one or more dimensions among the plurality of decoding units.

It may be understood that, because the plurality of decoding units are decoding units in the first to-be-decoded input, and the first to-be-decoded input is a to-be-decoded input having the first pattern, the first pattern indicates a quantity of decoding units, in the plurality of decoding units in the first to-be-decoded input, that are distributed in each dimension.

It can be learned from the foregoing examples that the third pattern may be a regular pattern. The distribution of the plurality of decoding units of the first to-be-decoded input having the third pattern in each dimension may be determined by indicating a quantity of pattern units in the dimension.

For example, in the foregoing plurality of examples with reference to FIG. 28a, FIG. 28b, FIG. 29, and FIG. 31, the third pattern may indicate the quantity of pattern units, in the plurality of pattern units, that are distributed in each dimension. For example, the third pattern shown in FIG. 28a may indicate that the quantity of the plurality of pattern units distributed in one dimension is N₁; the third pattern shown in FIG. 28b may indicate that the quantity of the plurality of pattern units distributed in one dimension is N₂; the third pattern shown in FIG. 29 may indicate that the quantity of pattern units, in the plurality of pattern units, that are distributed in the horizontal direction (namely, one dimension) is N₂ and the quantity of pattern units distributed in the vertical direction (namely, the other dimension) is N₁; and the pattern shown in FIG. 31 may indicate that the quantity of pattern units, in the plurality of pattern units, that are distributed in the x-axis direction (namely, one dimension) is N₂, the quantity of pattern units distributed in the y-axis direction (namely, another dimension) is N₁, and the quantity of pattern units distributed in the z-axis direction (namely, the other dimension) is N₃. The rest may be deduced by analogy, and examples are not enumerated.

Optionally, that the third pattern indicates the distribution of the plurality of decoding units across the one or more dimensions further includes: The third pattern indicates an empty position in the third pattern.

It can be learned from the foregoing examples that the third pattern may alternatively be an irregular pattern. Therefore, in addition to indicating the quantity of pattern units in each dimension, the third pattern may further indicate the empty position, to obtain the distribution of the plurality of decoding units of the first to-be-decoded input having the third pattern in each dimension.

For more detailed descriptions of the third pattern indicating the quantity of pattern units in each dimension and more detailed descriptions of the third pattern indicating the empty position, refer to the related descriptions of the first pattern indicating the quantity of pattern units in each dimension and the related descriptions of the first pattern indicating the empty position in the method 500. Details are not described again.

Optionally, the third pattern further indicates a decoding position, and a decoding unit located at the decoding position is a to-be-decoded decoding unit.

As described in the method 500, the first communication apparatus may encode bits in a part or all of the encoding units in the first to-be-encoded input. The first pattern may indicate the encoding position. To be specific, the first communication apparatus may encode an encoding unit located at the encoding position in the first to-be-encoded input. Corresponding to encoding, the second communication apparatus may also decode a decoding unit corresponding to a same decoding position in the first to-be-decoded input.

In other words, except a decoding unit used to carry the check bit, the decoding position indicated by the third pattern is the same as the encoding position indicated by the first pattern. In addition, the decoding unit used to carry the check bit is also a to-be-decoded decoding unit. Therefore, for the third pattern, the decoding position includes the position that is the same as the encoding position in the first pattern, and the position of the decoding unit used to carry the check bit.

The first communication apparatus may encode a part of the encoding units in the first to-be-encoded input, to control the code rate more flexibly and improve decoding performance. By indicating the decoding position in the third pattern, the second communication apparatus may decode a decoding unit at the decoding position corresponding to the encoding position, so that the second communication apparatus correctly performs decoding, thereby improving the decoding performance.

In a possible implementation, the third pattern may indicate, in a form of a one-dimensional vector, a two-dimensional matrix, or a more-dimensional array, the quantity of decoding units, in the plurality of decoding units, that are distributed in each dimension, the empty position in the third pattern, and the decoding position in the third pattern. For more detailed descriptions of the third pattern indicating the foregoing content, refer to the related descriptions of the first pattern in step 520 in the foregoing method 500. Details are not described again.

The first to-be-decoded input is data that is to be input to the decoder for decoding, that is, to-be-decoded data, to-be-decoded bits, to-be-decoded encoded bits, to-be-decoded input data, to-be-decoded input bits, or the like. In this application, the first to-be-decoded input has the third pattern, and the third pattern indicates the distribution of the plurality of decoding units across the one or more dimensions. Therefore, data that is about to be input into the decoder may be presented as a one-dimensional vector, a two-dimensional matrix, or an array of more dimensions. This is not limited in this application. In addition, regardless of the one-dimensional vector, the two-dimensional matrix, or the array of more dimensions, the first to-be-decoded input is input into the decoder at a granularity of a decoding unit.

Optionally, step 2720 specifically includes:
arranging the plurality of bits of the second bit sequence according to an arrangement rule, to obtain a plurality of decoding units; and
arranging the plurality of decoding units to obtain the to-be-decoded input having the third pattern.

The arrangement rule indicates: a dimension of each decoding unit, a quantity of bits included in the decoding unit in each dimension, and an arrangement manner of one or more bits included in the decoding unit. For more detailed descriptions of the arrangement rule, refer to the related descriptions of the arrangement rule in the foregoing method 500. Details are not described again.

The second communication apparatus may first arrange the plurality of bits of the second bit sequence into a plurality of decoding units according to the arrangement rule, and map (or fill) the plurality of decoding units to (or into) a plurality of pattern units at the granularity of the decoding unit and based on the distribution of the plurality of pattern units in each dimension that is indicated by the third pattern, to obtain the first to-be-decoded input having the third pattern.

Alternatively, when constructing the decoding units, the second communication apparatus may map each decoding unit to each pattern unit of the third pattern, that is, a process of obtaining the decoding units and a process of obtaining the first to-be-decoded input may be synchronously performed.

Step 2730: Decode one or more decoding units in the first to-be-decoded input, to obtain a fifth bit sequence.

The second communication apparatus may perform decoding in a manner corresponding to encoding. As described in step 530 of the method 500, a method for encoding the first to-be-encoded input by the first communication apparatus may be component encoding, or may not be component encoding. For example, for a first to-be-encoded input having a first pattern in one-dimensional distribution, encoding may be performed according to conventional technologies, or component encoding may be performed. For a first to-be-encoded input having a first pattern distributed in a plurality of dimensions, component encoding may be performed. Correspondingly, the second communication apparatus may perform component decoding on one or more decoding units in the first to-be-decoded input, or may not perform component decoding, but perform decoding according to conventional technologies.

As described above, the third pattern may indicate the decoding position in the third pattern. To be specific, a decoding object is one or more decoding units at the decoding position in the first to-be-decoded input having the third pattern, and is not necessarily all the decoding units in the first to-be-decoded input.

Optionally, step 2730 specifically includes: performing component decoding on the one or more decoding units in the first to-be-decoded input, to obtain the fifth bit sequence.

In this application, component decoding means that a plurality of to-be-decoded bits are decomposed into one or more dimensions at the granularity of the decoding unit, and are respectively decoded in one or more directions. A process of decomposing the plurality of to-be-decoded bits into the one or more dimensions at the granularity of the decoding unit is the foregoing process of obtaining the first to-be-decoded input. Performing decoding separately in the one or more directions means that a decoding unit in each direction is used as a bit that participates in decoding, and is input into the decoder for decoding. In other words, each time of decoding is performed on a bit in a decoding unit in a same direction.

It should be noted that, although the first to-be-decoded input having the third pattern is obtained at the granularity of the decoding unit in step 2720, the decoding process is still performed at the granularity of the bit. In other words, one or more bits in each decoding unit may be restored to a one-dimensional vector before decoding, or before being input to the decoder. A process of restoring the bits to a one-dimensional vector is an inverse process of arranging the bits into decoding units according to the arrangement rule in step 2720. Details are not described herein again. It may be understood that, if the decoding unit is originally a one-dimensional vector, the foregoing operation of restoring the bits to a one-dimensional vector may not be performed.

Corresponding to encoding, the decoder may perform decoding in one or more decoding directions. The decoding direction may be a direction in which each decoding unit of the first to-be-decoded input having the third pattern is distributed, or may be another direction. This is not limited in this application.

For example, the decoding direction includes one or more of the following plurality of directions: a direction corresponding to the one or more dimensions that are indicated by the third pattern and in which the plurality of decoding units are distributed, a horizontal direction in a two-dimensional plane determined based on any two of the plurality of dimensions of the third pattern, a vertical direction in the two-dimensional plane determined based on the any two of the plurality of dimensions of the third pattern, or a diagonal direction in the two-dimensional plane determined based on the any two of the plurality of dimensions of the third pattern.

It should be understood that a decoding direction of the first to-be-decoded input is consistent with an encoding direction of the first to-be-encoded input, to ensure correct decoding at the decoding side.

For more detailed descriptions of the decoding direction, refer to the example and related descriptions of the encoding direction in step 530 of the method 500 with reference to the accompanying drawings. Details are not described again.

Optionally, the performing component decoding on the one or more decoding units in the first to-be-decoded input may specifically include: obtaining one or more groups of input bits from the one or more decoding units in the first to-be-decoded input based on the one or more decoding directions; and separately decoding the one or more groups of input bits.

The one or more decoding units in the first to-be-decoded input may be decoding units located at decoding positions of the first to-be-decoded input. The one or more groups of input bits are determined from the decoding units at the decoding positions of the first to-be-decoded input based on the one or more decoding directions. Each group of input bits may include a bit in one or more decoding units distributed in a same decoding direction. Therefore, each group of input bits may include one or more bits. It should be noted that there may be one or more groups of bit inputs in a same decoding direction. A quantity of groups of bit inputs in each decoding direction is not limited in this application.

Corresponding to encoding, the decoder may perform decoding in each decoding direction based on a decoding order. The decoding order may indicate an order in which bits in each group of input bits are decoded. A decoding order of the first to-be-decoded input is consistent with an encoding order of the first to-be-encoded input, to ensure correct decoding at the decoding side.

Further, the separately decoding the one or more groups of input bits may specifically include: decoding each of the one or more groups of input bits in the decoding order.

The decoding order may indicate an order in which input bits in each group of input bits are decoded. Because decoding may be implemented by the decoder, it may also be referred to as that the decoding order may indicate an order in which each group of input bits are input into the decoder. As described above, the decoding process is performed at the granularity of the bit. Because each group of input bits is carried in the one or more decoding units, an order in which each group of input bits are input into the decoder may be controlled by controlling an order in which the decoding units are input into the decoder. One group of input bits may be carried in a plurality of decoding units, and an order in which the plurality of decoding units are input into the decoder may be determined based on the decoding order. Therefore, it may also be referred to as that the decoding order indicates an order in which a plurality of decoding units that are used to carry each group of input bits are input into the decoder.

Similar to the encoding order, the decoding order may be the same as an ascending order of numbers of the pattern units, or may be opposite to the ascending order of the numbers of the pattern units, or may be a left-to-right order in a horizontal decoding direction, or may be a top-to-bottom order in a vertical decoding direction, or may be an order from top left to bottom right in a diagonal decoding direction. This is not limited in this application.

For more detailed descriptions of the decoding order, refer to the example and related descriptions of the encoding order in step 530 of the method 500 with reference to the accompanying drawings. Details are not described again.

During specific implementation, one sub-decoder may be configured in each decoding direction for component decoding. It should be understood that the decoder may include a plurality of sub-decoders, and each sub-decoder may be configured to decode one or more groups of input bits in one decoding direction.

Further, one or more sub-decoders may be configured in each decoding direction, and correspond to one or more groups of input bits. The one or more sub-decoders in each decoding direction may synchronously decode one or more groups of input bits in a same decoding direction, thereby improving processing efficiency, to help improve a throughput.

Corresponding to encoding, when decoding the plurality of groups of input bits, the decoder may perform decoding by using a same decoding type, or may perform decoding by using different decoding types. A decoding type of the first to-be-decoded input is consistent with an encoding type of the first to-be-encoded input, to ensure correct decoding at the decoding side.

Optionally, in the plurality of groups of input bits, decoding types used for decoding different groups of input bits in a same decoding direction are the same.

In other words, a plurality of groups of input bits in a same encoding direction may be encoded by using a same encoding type.

Further, when decoding types are the same, decoding parameters for decoding different groups of input bits in a same decoding direction may be the same or may be different.

Optionally, in the plurality of groups of input bits, decoding types used for decoding different groups of input bits in a same decoding direction are different.

Optionally, decoding types used for decoding the plurality of groups of input bits are the same.

In other words, all input bits may be decoded by using a same decoding type without distinguishing between decoding directions.

Optionally, decoding types used for decoding at least two of the plurality of groups of input bits are different.

In other words, a plurality of groups of input bits in one or more decoding directions may be decoded by using different decoding types.

For more detailed descriptions of the decoding type and the decoding parameter, refer to the descriptions of the encoding type and the encoding parameter in step 530 in the foregoing method 500. Details are not described again.

During specific implementation, different sub-decoders may be configured for different decoding types in a same decoding direction. For example, if two decoding types are used in the horizontal direction, a sub-decoder 1a and a sub-decoder 1b may be configured in the horizontal direction. If four decoding types are used in the vertical direction, a sub-decoder 2a to a sub-decoder 2d may be configured in the vertical direction.

In this way, a plurality of groups of input bits in a same decoding direction may alternatively be decoded in parallel, thereby improving decoding efficiency to a greater extent.

The fifth bit sequence corresponds to the first bit sequence. If the second communication apparatus can correctly decode the second bit sequence, the fifth bit sequence obtained through decoding is consistent with the first bit sequence obtained by the first communication apparatus. In other words, the fifth bit sequence is a first bit sequence obtained through decoding, or is a received first bit sequence.

It may be understood that, because the first to-be-encoded input is input to an encoder at a granularity of an encoding unit for encoding, although all bits in each encoding unit are restored to a one-dimensional form before encoding, an order of bits in the one-dimensional vector restored in the encoding order is not necessarily the same as an order of bits in the first bit sequence. Therefore, a bit sequence (denoted as an eighth bit sequence for ease of differentiation and description) output after decoding is not necessarily the same as the fifth bit sequence, or is not necessarily the same as the first bit sequence. The second communication apparatus may further obtain the fifth bit sequence with reference to the first pattern.

Further, the performing component decoding on the one or more decoding units in the first to-be-decoded input to obtain the fifth bit sequence includes:
performing component decoding on the first to-be-decoded input to obtain an eighth bit sequence, where the eighth bit sequence includes a plurality of bits obtained through decoding;
arranging the eighth bit sequence to obtain a first decoded output having a first pattern, where the first decoded output includes a plurality of units distributed across one or more dimensions, and the first pattern indicates distribution of the plurality of units across one or more dimensions; and
obtaining the fifth bit sequence from the first decoded output.

A process of performing component decoding on the first to-be-decoded input to obtain the eighth bit sequence is similar to a process of performing component encoding on the first to-be-encoded input to obtain the second bit sequence in step 530 of the method 500. The plurality of bits obtained through decoding may be output according to a preset output rule, to obtain the eighth bit sequence. Because the output rule and the process of obtaining the second bit sequence have been described in detail in the foregoing method 500 with reference to the plurality of different patterns, for a process of performing component decoding on the first to-be-decoded input to obtain the eighth bit sequence, refer to the foregoing descriptions. Details are not described again.

After obtaining the eighth bit sequence, the second communication apparatus may arrange the plurality of bits of the eighth bit sequence based on the first pattern, to obtain the first decoded output having the first pattern. It may be understood that the first decoded output corresponds to the first to-be-encoded input in the method 500. The first pattern may indicate the distribution of the plurality of units of the first decoded output having the first pattern across the one or more dimensions.

In this embodiment, the first pattern corresponds to the third pattern. The second communication apparatus may obtain the first pattern based on the third pattern. For example, a dimension is updated based on the third pattern to obtain the first pattern. In other words, the second communication apparatus may pre-store one of the first pattern or the third pattern, and may update one of the first pattern or the third pattern to obtain the other.

The second communication apparatus may obtain the fifth bit sequence from the first decoded output based on the first pattern. The second communication apparatus may obtain bits from the units in the first decoded output based on the arrangement rule of the units, and arrange, based on an arrangement of the units in the first pattern, the bits obtained from the units into a one-dimensional vector, to obtain the fifth bit sequence. A process in which the bits in the units are obtained from the first decoded output to obtain the fifth bit sequence may be referred to as extraction.

Optionally, the plurality of units included in the first decoded output include a first unit and at least one copy of the first unit, and positions of the first unit and the at least one copy are different in the first decoded output.

It should be understood that a process in which the second communication apparatus obtains the fifth bit sequence from the first decoded output based on the first pattern is similar to a process in which the first communication apparatus obtains the first to-be-encoded input having the first pattern based on the first pattern in step 520 of the method 500. For details, refer to the related descriptions in the method 500. Details are not described again.

As described in the foregoing method 500, the first to-be-encoded input includes a first encoding unit and at least one copy corresponding to the first encoding unit. After the first decoded output is obtained through decoding, at positions of the first encoding unit and the at least one copy of the first encoding unit in the first pattern, there are the first unit corresponding to the first encoding unit and at least one copy of the first unit.

It should be understood that there may be one or more first units. This is not limited in this application.

As described above, the first pattern may indicate whether each encoding unit needs to be replicated, a quantity of to-be-replicated copies, and positions of the copies in the first pattern. Based on this, the second communication apparatus may determine specific units that are the same in the first decoded output. In this way, the second communication apparatus may perform combination processing (for example, weighted combination) on same units, to restore one or more bits corresponding to the plurality of same units. A specific implementation of the combination processing may be implemented by using conventional technologies. Details are not described herein.

Because one encoding unit is copied into one or more copies, a plurality of pieces of data of one or more bits may be obtained through decoding at the decoding side, and the one or more bits are restored based on the plurality of pieces of data. Therefore, the decoding performance can be improved.

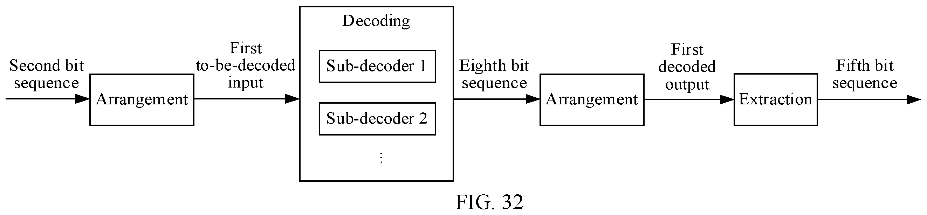

The foregoing describes a procedure in which the second communication apparatus decodes the second bit sequence with reference to the plurality of accompanying drawings. To better understand the foregoing procedure, FIG. 32 shows the decoding method from a perspective of a signal flow.

As shown in FIG. 32, a second bit sequence is arranged to obtain a first to-be-decoded input having a third pattern. The first to-be-decoded input is decoded, for example, component decoding is performed by using a plurality of sub-decoders, to obtain an eighth bit sequence. The eighth bit sequence is arranged, to obtain a first decoded output having a first pattern, and extraction is performed on the first decoded output, to obtain a fifth bit sequence.

During specific implementation, the arrangement operation and the extraction operation may be implemented by an arranger, and the decoding operation may be implemented by a decoder. The decoder may include a plurality of sub-decoders for component decoding. A specific name of a module configured to implement each operation is not limited in this application.

According to the technical solution provided above, the first communication apparatus may arrange the plurality of bits at the granularity of the decoding unit, to obtain the first to-be-decoded input having the third pattern. A quantity of bits included in the decoding unit is not fixed, and may be flexibly adjusted. Therefore, a limited quantity of patterns may adapt to a plurality of different data transmission amounts, and a quantity of bits in the encoding unit may be flexibly adjusted based on the data transmission amounts. Moreover, the third pattern may be used to restrict the distribution of the plurality of decoding units in the first to-be-decoded input across the one or more dimensions, that is, decoding may be performed by using or not using component decoding based on a requirement. For example, when the first communication apparatus uses component encoding, the second communication apparatus may use component decoding. In addition, when component decoding is used, the second communication apparatus may decode a plurality of groups of input bits in a same decoding direction in parallel, that is, a product parallelism is easily implemented, so that processing efficiency can be improved. This helps improve a peak throughput and area efficiency. Moreover, in a component decoding process, decoding may be performed in a plurality of different decoding directions, that is, a same decoding unit may participate in more times of decoding. This helps correct errors, and decoding performance is better.

The decoding method provided in this application is described in detail above with reference to the plurality of accompanying drawings. In the foregoing plurality of examples, a decoding process is described by using the first to-be-decoded input having the third pattern. Actually, this application is not limited thereto. As described in the foregoing method 500, the first communication apparatus may also process the first bit sequence to obtain to-be-encoded inputs having different patterns, for example, a second to-be-encoded input having a second pattern, then encode the second to-be-encoded input to obtain a third bit sequence, and combine the second bit sequence and the third bit sequence to obtain a fourth bit sequence for sending. Corresponding to encoding, the second communication apparatus may obtain the fourth bit sequence, obtain the second bit sequence and the third bit sequence from the fourth bit sequence, obtain to-be-decoded inputs having different patterns, separately decode the to-be-decoded inputs, and combine, according to some rules, decoded bits to obtain a one-dimensional vector for output.

Optionally, the method further includes:
obtaining a third bit sequence, where the third bit sequence includes a plurality of bits;
arranging the plurality of bits of the third bit sequence to obtain a second to-be-decoded input having a fourth pattern, where the second to-be-decoded input includes a plurality of decoding units distributed across one or more dimensions, each of the plurality of decoding units includes one or more of the plurality of bits, and the fourth pattern indicates distribution of the plurality of decoding units across the one or more dimensions;
decoding one or more decoding units in the second to-be-decoded input to obtain a sixth bit sequence; and
obtaining a seventh bit sequence based on the fifth bit sequence and the sixth bit sequence.

It should be understood that the fourth pattern may correspond to the second pattern in the method 500, the second to-be-decoded input may correspond to the second to-be-encoded input in the method 500, and the sixth bit sequence may correspond to the first bit sequence in the method 500.

Similar to the first to-be-decoded input, the second to-be-decoded input also includes the plurality of decoding units, and each decoding unit includes the one or more bits. The plurality of decoding units in the second to-be-decoded input and the plurality of decoding units in the first to-be-decoded input may be a plurality of same decoding units, or may be a plurality of different decoding units. For example, a quantity of decoding units in the second to-be-decoded input is different from a quantity of decoding units in the first to-be-decoded input. For another example, a dimension of the decoding unit in the second to-be-decoded input is different from a dimension of the decoding unit in the first to-be-decoded input. This is not limited in this application.

Similar to the third pattern, the fourth pattern may indicate the distribution of the plurality of decoding units of the second to-be-decoded input having the fourth pattern across the one or more dimensions.

Optionally, the fourth pattern is the same as the third pattern. When the fourth pattern is the same as the third pattern, the operation of obtaining the first to-be-decoded input and the operation of obtaining the second to-be-decoded input may be considered as one operation.

Optionally, the fourth pattern is different from the third pattern. When the fourth pattern is different from the third pattern, the operation of obtaining the first to-be-decoded input and the operation of obtaining the second to-be-decoded input may be considered as two operations.

After the first to-be-decoded input and the second to-be-decoded input are obtained, the first to-be-decoded input and the second to-be-decoded input may be separately decoded. A process of decoding the second to-be-decoded input is similar to a process of decoding the first to-be-decoded input. For details, refer to the foregoing related descriptions of decoding the first to-be-decoded input. Details are not described again.

After obtaining the sixth bit sequence, the first communication apparatus may perform combination processing (for example, weighted combination) on the fifth bit sequence and the sixth bit sequence, to obtain the seventh bit sequence.

It may be understood that the fifth bit sequence and the sixth bit sequence each may be considered as a first bit sequence obtained through decoding, or a received first bit sequence. Because the first communication apparatus divides the first bit sequence into two signals for encoding, the obtained fourth bit sequence is equivalent to carrying two first bit sequences, so that the decoding performance can be improved by using diversity effects.

Optionally, the third bit sequence and the second bit sequence are included in the fourth bit sequence, and the second bit sequence and the third bit sequence are obtained from the fourth bit sequence. Correspondingly, the method further includes: obtaining the fourth bit sequence.

Optionally, the obtaining the fourth bit sequence includes:
receiving a radio frequency signal carrying the fourth bit sequence; and
obtaining the fourth bit sequence from the radio frequency signal.

The second communication apparatus may receive the fourth bit sequence from the first communication apparatus through the antenna. As described above, the first communication apparatus may use the radio frequency signal to carry the fourth bit sequence, and the second communication apparatus may receive, through the antenna, the radio frequency signal carrying the fourth bit sequence. In other words, after receiving the radio frequency signal, the second communication apparatus may obtain the fourth bit sequence by performing an operation corresponding to the first communication apparatus. The obtaining the fourth bit sequence may specifically include: performing operations such as down-conversion, RE demapping, demodulation, descrambling, and de-rate matching on the radio frequency signal. This is not limited.

In other words, another possible implementation of obtaining the second bit sequence in step 2710 is: obtaining the second bit sequence from the fourth bit sequence.

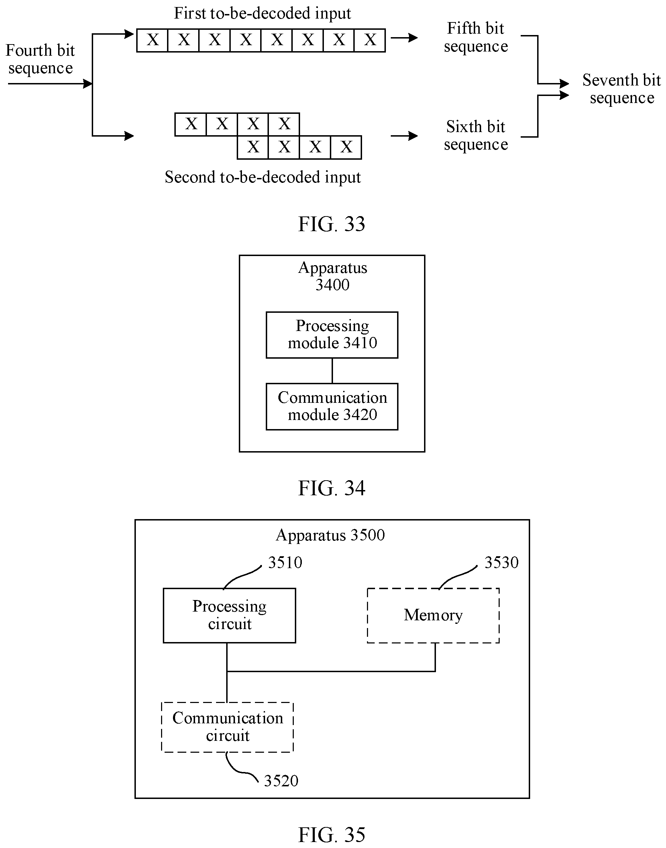

It is not difficult to learn that a process shown in FIG. 33 corresponds to FIG. 26 in the foregoing method 500, and may be understood as an inverse process corresponding to the process shown in FIG. 26. In the procedure shown in FIG. 26, the first bit sequence is divided into two signals, the two signals may be processed in a same way or different ways to obtain the second bit sequence and the third bit sequence, and the two signals are combined to output the fourth bit sequence. In FIG. 33, the two signals, namely, the second bit sequence and the third bit sequence, may be obtained from the fourth bit sequence. The two signals may be processed in a same way or different ways, to obtain the fifth bit sequence and the sixth bit sequence, and the seventh bit sequence is obtained by combining the two signals. The first bit sequence may alternatively be divided into more signals, and the signals are combined after multi-processing, thereby further improving the decoding performance.

With reference to any embodiment of the method 500 or the method 2700, it can be learned that, in a process of implementing the method, a plurality of parameters need to be determined between the first communication apparatus and the second communication apparatus. The following describes possible signaling between the first communication apparatus and the second communication apparatus with reference to these parameters.

To ensure an encoding side and a decoding side can obtain bit sequences for elements in patterns according to a same rule, the encoding side and the decoding side may pre-determine an arrangement rule. The arrangement rule may indicate a pattern of each element, that is, indicate a dimension of the element, a quantity of bits included in the element, and an arrangement manner of one or more bits in the element. It should be understood that, for the encoding side, the element may be referred to as an encoding unit, and for the decoding side, the element may also be referred to as a decoding unit. This is not limited in this application.

At least one of the dimension of the encoding unit, the quantity of bits included in the encoding unit, or the arrangement manner of the one or more bits in the encoding unit (or at least one of the arrangement rule) may be predefined, or may be determined by the first communication apparatus, or may be indicated by the second communication apparatus that communicates with the first communication apparatus. This is not limited in this application. In other words, the arrangement rule may be determined based on one or more of the following: determined according to the predefined rule, determined by the first communication apparatus itself, or determined based on the indication of the second communication apparatus.

For example, the dimension of the encoding unit, the quantity of bits included in the encoding unit, or the arrangement manner of the one or more bits in the encoding unit are all predefined in a protocol. For another example, a part of the dimension of the encoding unit, the quantity of bits included in the encoding unit, or the arrangement manner of the one or more bits in the encoding unit are predefined in a protocol, and the other part is determined by the first communication apparatus. For still another example, a part of the dimension of the encoding unit, the quantity of bits included in the encoding unit, or the arrangement manner of the one or more bits in the encoding unit are predefined in a protocol, and the other part is indicated by the second communication apparatus.

If at least one item in the arrangement rule is determined by the first communication apparatus, the first communication apparatus may further send, to the second communication apparatus that communicates with the first communication apparatus, information indicating the at least one item in the arrangement rule. Optionally, the method further includes: The first communication apparatus sends first information, where the first information indicates one or more of the following: the dimension of each encoding unit, a quantity of bits included in the encoding unit in each dimension, or the arrangement manner of the one or more bits included in the encoding unit. Correspondingly, the second communication apparatus receives the first information.

If at least one item in the arrangement rule is indicated by the second communication apparatus to the first communication apparatus, the first communication apparatus may receive, from the second communication apparatus, information indicating the at least one item in the arrangement rule. Optionally, the method further includes: The first communication apparatus receives first information, where the first information indicates one or more of the following: the dimension of each encoding unit, a quantity of bits included in the encoding unit in each dimension, or the arrangement manner of the one or more bits included in the encoding unit. Correspondingly, the second communication apparatus sends the first information.

To ensure correct decoding at the decoding side, the second communication apparatus and the first communication apparatus may pre-store the first pattern or a pattern (for example, denoted as a third pattern) corresponding to the first pattern, or may pre-store a plurality of patterns including the first pattern or the third pattern. The third pattern corresponding to the first pattern may be understood as being obtained by extending dimensions of the first pattern in different directions based on the first pattern in consideration of addition of a check bit. For example, the first pattern is of K₁×K₂ dimensions, and the third pattern is of N₁×N₂ dimensions, where N₁ is greater than K₁, and N₂ is greater than K₂. A plurality of different patterns are pre-stored at a receiving end and a transmitting end, to adapt to a wider range of code types. Different services usually require different code patterns. For example, a coupling code pattern is better for a real-time video stream service, and a product code pattern is better for a non-streaming media service. In this case, a plurality of different patterns are pre-stored to adapt to a plurality of different code patterns, so that requirements of more different types of services can be satisfied.

When the first communication apparatus and the second communication apparatus each pre-store a plurality of patterns, the first communication apparatus may further determine, with the second communication apparatus based on signaling, a specific one of the patterns that is used in current encoding and decoding.

One of the first communication apparatus and the second communication apparatus may determine the pattern used in current encoding and decoding. For example, in this embodiment, the pattern used in current encoding and decoding includes the first pattern, or includes the first pattern and a second pattern.

Optionally, the method further includes: The first communication apparatus sends third information, where the third information indicates the pattern for encoding. Correspondingly, the second communication apparatus receives the third information.

That is, the first communication apparatus indicates, to the second communication apparatus through the third information, the pattern for encoding. The pattern for decoding corresponds to the pattern for encoding, and the two patterns may be converted into each other. Therefore, it may also be referred to as that the third information may indicate the pattern for decoding.

For example, in some of the foregoing embodiments, a pattern for encoding is a first pattern, and the third information may be information that can identify the first pattern, for example, an identifier or index corresponding to the first pattern in the plurality of pre-stored patterns. In some other embodiments, patterns for encoding are a first pattern and a second pattern, and the third information may be information that can identify the first pattern and the second pattern, for example, identifiers or indexes corresponding to the first pattern and the second pattern in the plurality of pre-stored patterns.

For example, the pattern for encoding is the first pattern. Because the first pattern used by the encoding side corresponds to the third pattern used by the decoding side, the first pattern and the third pattern may be converted into each other. Therefore, the second communication apparatus may perform decoding based on the third information by using the third pattern corresponding to the first pattern. In other words, the third information may also indicate the third pattern.

Optionally, the method further includes: The first communication apparatus receives third information, where the third information indicates the pattern for decoding. Correspondingly, the second communication apparatus sends the third information.

That is, the second communication apparatus indicates, to the first communication apparatus through the third information, the pattern for decoding. The pattern for decoding corresponds to the pattern for encoding, and the two patterns may be converted into each other. Therefore, it may also be referred to as that the third information may indicate the pattern for encoding.

For example, the pattern for encoding is the first pattern. Because the first pattern used by the encoding side corresponds to the third pattern used by the decoding side, the first pattern and the third pattern may be converted into each other. Therefore, the first communication apparatus may perform decoding based on the third information by using the first pattern corresponding to the third pattern. In other words, the third information may also indicate the first pattern.

In addition, one or more of an encoding direction, an encoding order, an encoding type used for encoding each group of input bits, or a code rate of the group of input bits may be predefined, or may be determined by the first communication apparatus, or may be indicated by the second communication apparatus. This is not limited in this application.

Optionally, the method further includes: The first communication apparatus sends second information, where the second information indicates one or more of the following: one or more encoding directions, an encoding order, an encoding type used for encoding each group of input bits, or a code rate of the group of input bits. Correspondingly, the second communication apparatus receives the second information.

As described in the foregoing method 2700, the decoding direction is consistent with the encoding direction, the decoding order of each group of input bits is consistent with the encoding order of one group of corresponding input bits, the decoding type used for decoding the group of input bits is consistent with the encoding type used for encoding the group of corresponding input bits, and the code rate of the group of input bits may be used to determine a quantity of bits included in each decoding unit that is used to carry a check bit in the third pattern. Therefore, based on the second information sent by the first communication apparatus, the second communication apparatus may determine one or more of the following: one or more decoding directions, a decoding order, a decoding type used for decoding each group of input bits, or a code rate of the group of input bits. Alternatively, the second information may indicate one or more of the following: one or more decoding directions, a decoding order in each decoding direction, a decoding type used for decoding each group of input bits, or a code rate of the group of input bits.

Optionally, the method further includes: The second communication apparatus sends second information, where the second information indicates one or more of the following: one or more decoding directions, a decoding order, a decoding type used for decoding each group of input bits, or a code rate of the group of input bits. Correspondingly, the first communication apparatus receives the second information.

Similar to the foregoing descriptions, the first communication apparatus may also determine, based on the second information, one or more of the following: the one or more encoding directions, an encoding order in each encoding direction, the encoding type used for encoding each group of input bits, or the code rate of the group of input bits.

It should be noted that, in some cases, encoding types used for encoding a plurality of groups of input bits are the same, and the second information may indicate one encoding type for the plurality of groups of input bits, and does not need to indicate the encoding type for each group of input bits; and in some other cases, encoding types used for encoding a plurality of groups of input bits in a same encoding direction are the same, and the second information may indicate one encoding type for each encoding direction, and does not need to indicate an encoding type for each group of input bits. It may be understood that, a communication apparatus receiving the second information may determine, based on the second information, encoding types respectively for encoding the plurality of groups of input bits.

Similarly, in some cases, code rates for encoding a plurality of groups of input bits are the same, and the second information may indicate one code rate for the plurality of groups of input bits, and does not need to indicate the code rate for each group of input bits; and in some other cases, code rates for encoding a plurality of groups of input bits in a same encoding direction are the same, and the second information may indicate one code rate for each encoding direction, and does not need to indicate a code rate for each group of input bits. It may be understood that, a communication apparatus receiving the second information may determine, based on the second information, code rates respectively corresponding to the plurality of groups of input bits.

It may be understood that, how the second information indicates the foregoing information is not limited in this application. However, based on interpretation of the second information, the communication apparatus (for example, the first communication apparatus or the second communication apparatus) that receives the second information may determine one or more of the following: the one or more encoding directions, the encoding order in each encoding direction, or the encoding type used for encoding each group of input bits.

In a possible design, the first communication apparatus indicates a code rate of each group of input bits through a downlink control message (for example, downlink control information (downlink control information, DCI)), and the foregoing one or more encoding directions, the foregoing encoding order, the foregoing encoding type used for encoding each group of input bits, and the like are predefined in the protocol.

In a possible design, the first information, the second information, and the third information may be carried in same signaling. In another possible design, the first information, the second information, and the third information may be respectively carried in different signaling, or any two of the first information, the second information, and the third information is carried in one piece of signaling, and the other one is carried in another piece of signaling. This is not limited in this application.

According to the foregoing solution, one of the first communication apparatus or the second communication apparatus indicates, through one or more of the first information, the second information, or the third information, various types of information involved in an encoding and decoding process, for example, the arrangement rule of the encoding unit, the pattern, the encoding direction, the encoding order, the encoding type, and the code rate, so that the encoding side and the decoding side perform encoding and decoding according to the same rule. This helps improve the decoding performance.

The methods provided in embodiments of this application are described in detail above with reference to the plurality of accompanying drawings. Apparatuses provided in embodiments of this application are described below with reference to the accompanying drawings.

FIG. 34 and FIG. 35 are schematic block diagrams of possible apparatuses according to embodiments of this application. The apparatuses may be configured to implement functions of the first communication apparatus or the second communication apparatus in the foregoing method embodiments, and therefore can also implement beneficial effects of the foregoing method embodiments.

FIG. 34 is a schematic block diagram of an apparatus according to an embodiment of this application. The apparatus 3400 shown in FIG. 34 may include a processing module 3410 and a communication module 3420.

In a possible design, the apparatus 3400 may be configured to implement the communication method implemented by the first communication apparatus in the embodiment shown in FIG. 5. For example, the processing module 3410 is configured to implement processing-related steps, such as obtaining and encoding, performed by the first communication apparatus in steps 510 to 530 of the method 500, and the communication module 3420 is configured to implement steps, such as sending and/or receiving, performed by the first communication apparatus in the method 500.

For example, the processing module 3410 may be configured to: obtain a first bit sequence, where the first bit sequence includes a plurality of bits; process the plurality of bits to obtain a first to-be-encoded input having a first pattern, where the first to-be-encoded input includes a plurality of encoding units distributed across one or more dimensions, each of the plurality of encoding units includes one or more of the plurality of bits, and the first pattern indicates distribution of the plurality of encoding units across the one or more dimensions; and encode one or more encoding units in the first to-be-encoded input to obtain a second bit sequence.

Optionally, the communication module 3420 may be configured to send the second symbol sequence.

Optionally, the communication module 3420 may be configured to send or receive first information, where the first information indicates one or more of the following: a dimension of each encoding unit, a quantity of bits included in the encoding unit in each dimension, or an arrangement manner of the one or more bits included in the encoding unit.

Optionally, the communication module 3420 may be configured to send or receive second information, where the second information indicates one or more of the following: one or more encoding directions, an encoding order, an encoding type used for encoding each group of input bits, or a code rate of the group of input bits, and the encoding order indicates an order in which each group of input bits are input into an encoder.

Optionally, the communication module 3420 may be configured to send or receive third information, where the third information indicates a pattern for encoding.

For more detailed descriptions of the processing module 3410 and the communication module 3420, directly refer to the related descriptions in the method embodiment shown in FIG. 5. Details are not described herein again.

In another possible design, the apparatus 3400 may be configured to implement the communication method implemented by the second communication apparatus in the embodiment shown in FIG. 27. For example, the processing module 3410 is configured to implement processing-related steps, such as obtaining and encoding, performed by the second communication apparatus in steps 2710 to 2730 of the method 2700, and the communication module 3420 is configured to implement steps, such as sending and/or receiving, performed by the second communication apparatus in the method 2700.

For example, the processing module 3410 may be configured to: obtaining a second bit sequence, where the second bit sequence includes a plurality of bits; process the plurality of bits to obtain a first to-be-decoded input having a third pattern, where the first to-be-decoded input includes a plurality of decoding units distributed across one or more dimensions, each of the plurality of decoding units includes one or more of the plurality of bits, and the third pattern indicates distribution of the plurality of decoding units across the one or more dimensions; and decode one or more decoding units in the first to-be-decoded input to obtain a fifth bit sequence.

Optionally, the communication module 3420 may be configured to receive the second symbol sequence.

Optionally, the communication module 3420 may be configured to receive or send first information, where the first information indicates one or more of the following: a dimension of each encoding unit, a quantity of bits included in the encoding unit in each dimension, or an arrangement manner of the one or more bits included in the encoding unit.

Optionally, the communication module 3420 may be configured to receive or send second information, where the second information indicates one or more of the following: one or more encoding directions, an encoding order, an encoding type used for encoding each group of input bits, or a code rate of the group of input bits, and the encoding order indicates an order in which each group of input bits are input into an encoder.

Optionally, the communication module 3420 may be configured to receive or send third information, where the third information indicates a pattern for decoding.

For more detailed descriptions of the processing module 3410 and the communication module 3420, directly refer to the related descriptions in the method embodiment shown in FIG. 27. Details are not described herein again.

It should be noted that the communication module may also be referred to as a transceiver module, a transceiver unit, a transceiver, a transceiver machine, a transceiver apparatus, or the like. The processing module may also be referred to as a processor, a processing board, a processing unit, a processing apparatus, or the like. Optionally, the communication module is configured to perform sending operations and receiving operations of the first communication apparatus or the second communication apparatus in the foregoing methods. A device that is configured to implement receiving functions in the communication module may be considered as a receiving module, and a device that is configured to implement sending functions in the communication module may be considered as a sending module. That is, the communication module may include the receiving module and the sending module.

It should be further noted that, in a possible design, the processing module and/or the communication module may be implemented by using a virtual module. For example, the processing module may be implemented by using a software functional unit or a virtual apparatus, and the communication module may be implemented by using a software function or a virtual apparatus. In another possible design, the processing module or the communication module may alternatively be implemented by using a physical apparatus. For example, if the apparatus is implemented by using a chip/chip circuit, the communication module may be an input/output circuit and/or a communication interface, and performs input operations (corresponding to the receiving operations) and output operations (corresponding to the sending operations). The processing module may be an integrated processor, a microprocessor, or an integrated circuit.

In this embodiment of this application, module division is an example, and is merely a logical function division. During actual implementation, another division manner may be used. In addition, functional modules in the examples in embodiments of this application may be integrated into one processor, or each of the modules may exist alone physically, or two or more modules are integrated into one module. The integrated module may be implemented in a form of hardware, or may be implemented in a form of a software functional module.

FIG. 35 is a diagram of a structure of a communication apparatus according to another embodiment of this application. As shown in FIG. 35, the apparatus 3500 includes a processing circuit 3510 and a communication circuit 3520. The processing circuit 3510 and the communication circuit 3520 are coupled to each other.

It may be understood that the processing circuit 3510 may be one or more processors, or may be all or a part of circuits having a processing function in the one or more processors.

It may be understood that, the communication circuit 3520 may be a transceiver or an input/output interface.

Optionally, the apparatus 3500 may further include a memory 3530, configured to store instructions executed by the processing circuit 3510, or store input data needed by the processing circuit 3510 to run the instructions, or store data generated after the processing circuit 3510 runs the instructions.

It may be understood that the memory 3530 may be located outside the processing circuit 3510, or may be located inside the processing circuit 3510.

In an example, the processing circuit 3510 is configured to implement functions of the processing module 3410, and the communication circuit 3520 is configured to implement functions of the communication module 3420.

In an example, the apparatus 3500 may be a communication device, or may be a chip used in the communication device.

When the apparatus 3500 is a communication device, the communication circuit may be a transceiver. When the apparatus 3500 is a chip, the communication circuit may be an input/output circuit, a bus, a pin, or a communication interface of another type. An input circuit in the input/output circuit may be configured for reception, and an output interface may be configured for sending.

In some embodiments of this application, a computer program product is further provided. When the computer program product is run on a processor, the encoding method implemented by the first communication apparatus in the foregoing method embodiments may be implemented, or the decoding method implemented by the second communication apparatus in the foregoing method embodiments may be implemented.

In some embodiments of this application, a computer-readable storage medium is further provided. The computer-readable storage medium includes computer instructions. When the computer instructions are run on a processor, the encoding method implemented by the first communication apparatus in the foregoing method embodiments may be implemented, or the decoding method implemented by the second communication apparatus in the foregoing method embodiments may be implemented.

In some embodiments of this application, a communication system is further provided, including the foregoing first communication apparatus and second communication apparatus. The first communication apparatus may implement the encoding method provided in the foregoing embodiment, and the second communication apparatus may implement the decoding method provided in the foregoing embodiment; or the communication system may implement the encoding method implemented by the first communication apparatus and the decoding method implemented by the second communication apparatus in the foregoing method embodiments.

It may be understood that the processor in embodiments of this application may be the following device or all or some circuits used for processing functions in the following device: a central processing unit (central processing unit, CPU), or may be another general-purpose processor, a digital signal processor (digital signal processor, DSP), a field programmable gate array (field programmable gate array, FPGA), or another programmable logic device, a transistor logic device, a hardware part, or any combination thereof. The general-purpose processor may be a microprocessor or any regular processor.

The method steps in embodiments of this application may be implemented by hardware, or may be implemented by the processor executing software instructions. The software instructions may include corresponding software modules. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in a chip, for example, an application-specific integrated circuit (application-specific integrated circuit, ASIC), or a chip system, for example, a system on chip (system on a chip, SoC). In addition, the chip or the chip system may be located in a network device or a terminal device. Certainly, the processor and the storage medium may alternatively exist as discrete components in the network device or the terminal device.

All or some of the foregoing embodiments may be implemented by using software, hardware, firmware, or any combination thereof. When the software is used for implementation, all or a part of the embodiments may be implemented in a form of a computer program product. The computer program product includes one or more computer programs or instructions. When the computer program or the instructions are loaded and executed on a computer, all or some of the procedures or the functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions in different embodiments are consistent and can be mutually referenced, and technical features in different embodiments can be combined to form new embodiments based on their inherent logical relationship.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. An encoding method, comprising:
obtaining a first bit sequence, wherein the first bit sequence comprises a plurality of bits;
processing the plurality of bits to obtain a first to-be-encoded input having a first pattern, wherein the first to-be-encoded input comprises a plurality of encoding units distributed across one or more dimensions, each of the plurality of encoding units comprises one or more of the plurality of bits, and the first pattern indicates distribution of the plurality of encoding units across the one or more dimensions; and
encoding one or more encoding units in the first to-be-encoded input to obtain a second bit sequence.

2. The method according to claim 1, wherein the processing the plurality of bits to obtain the first to-be-encoded input having the first pattern comprises:
arranging the plurality of bits according to an arrangement rule, to obtain the plurality of encoding units; and
processing the plurality of encoding units to obtain the first to-be-encoded input having the first pattern.

3. The method according to claim 1 or 2, wherein each encoding unit is a one-dimensional vector or a two-dimensional matrix, and the plurality of encoding units comprise at least one one-dimensional vector and/or at least one two-dimensional matrix.

4. The method according to claim 2, wherein the arrangement rule indicates a dimension of each encoding unit, a quantity of bits comprised in the encoding unit in each dimension, and an arrangement manner of one or more bits comprised in the encoding unit.

5. The method according to any one of claims 1 to 4, wherein the method further comprises:
sending or receiving first information, wherein the first information indicates one or more of the following: the dimension of each encoding unit, the quantity of bits comprised in the encoding unit in each dimension, or the arrangement manner of the one or more bits comprised in the encoding unit.

6. The method according to any one of claims 1 to 5, wherein different encoding units in the plurality of encoding units comprise a same quantity of bits.

7. The method according to any one of claims 1 to 5, wherein at least two of the plurality of encoding units comprise different quantities of bits.

8. The method according to any one of claims 1 to 7, wherein the encoding the one or more encoding units in the first to-be-encoded input to obtain the second bit sequence comprises:
performing component encoding on the one or more encoding units in the first to-be-encoded input to obtain the second bit sequence.

9. The method according to claim 8, wherein the first pattern indicates the distribution of the plurality of encoding units across the plurality of dimensions, and the performing component encoding on the one or more encoding units in the first to-be-encoded input comprises:
obtaining a plurality of groups of input bits from the one or more encoding units in the first to-be-encoded input based on one or more encoding directions, wherein the one or more encoding directions comprise one or more of the following plurality of directions: a horizontal direction in a two-dimensional plane determined based on any two of the plurality of dimensions, a vertical direction in the two-dimensional plane determined based on the any two of the plurality of dimensions, or a diagonal direction in the two-dimensional plane determined based on the any two of the plurality of dimensions; and
encoding each of the plurality of groups of input bits.

10. The method according to claim 9, wherein in the plurality of groups of input bits, encoding types used for encoding different groups of input bits corresponding to a same encoding direction are the same.

11. The method according to claim 9, wherein in the plurality of groups of input bits, encoding types used for encoding at least two groups of input bits corresponding to a same encoding direction are different.

12. The method according to claim 9 or 10, wherein encoding types used for encoding the plurality of groups of input bits are the same.

13. The method according to any one of claims 9 to 11, wherein encoding types used for encoding at least two of the plurality of groups of input bits are different.

14. The method according to any one of claims 9 to 13, wherein the method further comprises:
sending or receiving second information, wherein the second information indicates one or more of the following: the one or more encoding directions, an encoding order, an encoding type used for encoding each group of input bits, or a code rate of the group of input bits, and the encoding order indicates an order in which each group of input bits are input into an encoder.

15. The method according to any one of claims 9 to 14, wherein the first pattern further indicates an encoding position, an encoding unit located at the encoding position in the first to-be-encoded input is a unit to be encoded, and the plurality of groups of input bits are determined from the unit to be encoded in the first to-be-encoded input.

16. The method according to any one of claims 1 to 15, wherein that the first pattern indicates the distribution of the plurality of encoding units across the one or more dimensions comprises: the first pattern indicates a quantity of encoding units distributed across each of the one or more dimensions among the plurality of encoding units.

17. The method according to claim 16, wherein that the first pattern indicates the distribution of the plurality of encoding units across the one or more dimensions further comprises: the first pattern indicates an empty position in the first pattern.

18. The method according to any one of claims 1 to 17, wherein the plurality of encoding units comprise a first encoding unit and at least one copy of the first encoding unit, and the first encoding unit and the at least one copy are at different positions in the first to-be-encoded input.

19. The method according to any one of claims 1 to 18, wherein the method further comprises:
arranging the plurality of bits to obtain a second to-be-encoded input having a second pattern, wherein the second to-be-encoded input comprises a plurality of encoding units distributed across one or more dimensions, each of the plurality of encoding units comprises one or more of the plurality of bits, and the second pattern indicates distribution of the plurality of encoding units across the one or more dimensions;
encoding one or more encoding units in the second to-be-encoded input to obtain a third bit sequence; and
obtaining a fourth bit sequence based on the second bit sequence and the third bit sequence.

20. The method according to any one of claims 1 to 19, wherein the method further comprises:
sending or receiving third information, wherein the third information indicates a used pattern, and the pattern comprises the first pattern.

21. A decoding method, comprising:
obtaining a second bit sequence, wherein the second bit sequence comprises a plurality of bits;
processing the plurality of bits to obtain a first to-be-decoded input having a third pattern, wherein the first to-be-decoded input comprises a plurality of decoding units distributed across one or more dimensions, each of the plurality of decoding units comprises one or more of the plurality of bits, and the third pattern indicates distribution of the plurality of decoding units across the one or more dimensions; and
decoding one or more decoding units in the first to-be-decoded input to obtain a fifth bit sequence.

22. The method according to claim 21, wherein the processing the plurality of bits to obtain the first to-be-decoded input having the third pattern comprises:
arranging the plurality of bits according to an arrangement rule, to obtain the plurality of decoding units; and
processing the plurality of decoding units to obtain the first to-be-decoded input having the third pattern.

23. The method according to claim 21 or 22, wherein each decoding unit is a one-dimensional vector or a two-dimensional matrix, and the plurality of decoding units comprise at least one one-dimensional vector and/or at least one two-dimensional matrix.

24. The method according to claim 22, wherein the arrangement rule indicates a dimension of each decoding unit, a quantity of bits comprised in the decoding unit in each dimension, and an arrangement manner of one or more bits comprised in the decoding unit.

25. The method according to any one of claims 21 to 24, wherein the method further comprises:
receiving or sending first information, wherein the first information indicates one or more of the following: the dimension of each decoding unit, the quantity of bits comprised in the decoding unit in each dimension, or the arrangement manner of the one or more bits comprised in the decoding unit.

26. The method according to any one of claims 21 to 25, wherein different decoding units in the plurality of decoding units comprise a same quantity of bits.

27. The method according to any one of claims 21 to 25, wherein at least two of the plurality of decoding units comprise different quantities of bits.

28. The method according to any one of claims 21 to 27, wherein the decoding the one or more decoding units in the first to-be-decoded input to obtain the fifth bit sequence comprises:
performing component decoding on the one or more decoding units in the first to-be-decoded input to obtain the fifth bit sequence.

29. The method according to claim 28, wherein the performing component decoding on the one or more decoding units in the first to-be-decoded input to obtain the fifth bit sequence comprises:
performing component decoding on the one or more decoding units in the first to-be-decoded input to obtain a first decoded output having a first pattern, wherein the first decoded output comprises a plurality of units distributed across the one or more dimensions, and the first pattern indicates distribution of the plurality of units across the one or more dimensions; and
obtaining the fifth bit sequence from the first decoded output based on the first pattern.

30. The method according to claim 29, wherein the plurality of units comprise a first unit and at least one copy of the first unit, and the first unit and the at least one copy are at different positions in the first decoded output.

31. The method according to any one of claims 28 to 30, wherein the third pattern indicates the distribution of the plurality of decoding units across the plurality of dimensions, and the performing component decoding on the one or more decoding units in the first to-be-decoded input comprises:
obtaining a plurality of groups of input bits from the one or more decoding units in the first to-be-decoded input based on one or more decoding directions, wherein the one or more decoding directions comprise one or more of the following plurality of directions: a horizontal direction in a two-dimensional plane determined based on any two of the plurality of dimensions, a vertical direction in the two-dimensional plane determined based on the any two of the plurality of dimensions, or a diagonal direction in the two-dimensional plane determined based on the any two of the plurality of dimensions; and
decoding each of the plurality of groups of input bits.

32. The method according to claim 31, wherein in the plurality of groups of input bits, decoding types used for decoding different groups of input bits corresponding to a same decoding direction are the same.

33. The method according to claim 31, wherein in the plurality of groups of input bits, decoding types used for decoding at least two groups of input bits corresponding to a same decoding direction are different.

34. The method according to claim 31 or 32, wherein decoding types used for decoding the plurality of groups of input bits are the same.

35. The method according to claim 31 or 33, wherein decoding types used for decoding at least two of the plurality of groups of input bits are different.

36. The method according to any one of claims 31 to 35, wherein the method further comprises:
receiving or sending second information, wherein the second information indicates one or more of the following: one or more encoding directions, an encoding order, an encoding type used for encoding each group of input bits, or a code rate of the group of input bits, wherein the one or more encoding directions are used to determine the one or more decoding directions; the encoding order indicates an order in which each group of input bits are input into an encoder, the encoding order is used to determine a decoding order, and the decoding order indicates an order in which each group of input bits are input into a decoder; and the encoding type used for encoding each group of input bits is used to determine a decoding type used for decoding the group of input bits.

37. The method according to any one of claims 31 to 36, wherein the third pattern further indicates a decoding position, a decoding unit located at the decoding position is a to-be-decoded decoding unit, and the plurality of groups of input bits are determined from the to-be-decoded decoding unit in the first to-be-decoded input.

38. The method according to any one of claims 21 to 37, wherein that the third pattern indicates the distribution of the plurality of decoding units across the one or more dimensions comprises: the third pattern indicates a quantity of decoding units distributed across each of the one or more dimensions among the plurality of decoding units.

39. The method according to claim 38, wherein that the third pattern indicates the distribution of the plurality of decoding units across the one or more dimensions further comprises: the third pattern indicates an empty position in the third pattern.

40. The method according to any one of claims 21 to 39, wherein the second bit sequence is comprised in a fourth bit sequence, the fourth bit sequence comprises the second bit sequence and a third bit sequence, and the second bit sequence is obtained from the fourth bit sequence; and the method further comprises: obtaining the fourth bit sequence.

41. The method according to claim 40, wherein the method further comprises:
obtaining the third bit sequence, wherein the third bit sequence comprises a plurality of bits; arranging the plurality of bits of the third bit sequence to obtain a second to-be-decoded input having a fourth pattern, wherein the second to-be-decoded input comprises a plurality of decoding units distributed across one or more dimensions, and each of the plurality of decoding units comprises one or more of the plurality of bits; decoding one or more decoding units in the second to-be-decoded input to obtain a sixth bit sequence; and obtaining a seventh bit sequence based on the fifth bit sequence and the sixth bit sequence.

42. The method according to any one of claims 21 to 41, wherein the method further comprises:
receiving or sending third information, wherein the third information indicates a used pattern, and the pattern comprises the third pattern.

43. A communication apparatus, comprising a functional module configured to implement the method according to any one of claims 1 to 20, or comprising a functional module configured to implement the method according to any one of claims 21 to 42.

44. A communication apparatus, comprising one or more processors and a communication circuit, wherein the communication circuit is configured for the communication apparatus to perform at least one of signal input or output, and the one or more processors are configured to implement the method according to any one of claims 1 to 42.

45. A communication system, comprising a communication apparatus configured to perform the method according to any one of claims 1 to 20 and a communication apparatus configured to perform the method according to any one of claims 21 to 42.

46. A computer-readable storage medium, configured to store computer program instructions, wherein the computer program instructions cause a computer to perform the method according to any one of claims 1 to 42.

47. A computer program product, comprising computer program instructions, wherein the computer program instructions cause a computer to perform the method according to any one of claims 1 to 42.
